(19) Europäisches Patentamt
European Patent Office
Office européen des brevets

(11) EP 1 408 403 A1

(12) EUROPEAN PATENT APPLICATION
published in accordance with Art. 158(3) EPC

(43) Date of publication:
**14.04.2004 Bulletin 2004/16**

(21) Application number: **02746125.0**

(22) Date of filing: **19.07.2002**

(51) Int Cl.[7]: **G06F 7/00**, G06F 9/38

(86) International application number:
**PCT/JP2002/007366**

(87) International publication number:
**WO 2003/009125 (30.01.2003 Gazette 2003/05)**

(84) Designated Contracting States:
**AT BE BG CH CY CZ DE DK EE ES FI FR GB GR IE IT LI LU MC NL PT SE SK TR**

(30) Priority: **19.07.2001 JP 2001219127**

(71) Applicant: **Sony Corporation**
**Tokyo 141-0001 (JP)**

(72) Inventor: **IGARASHI, Masahiro**
**c/o SONY CORPORATION**
**Shinagawa-ku, Tokyo 141-0001 (JP)**

(74) Representative: **Horner, David Richard**
**D Young & Co,**
**21 New Fetter Lane**
**London EC4A 1DA (GB)**

# (54) CALCULATION APPARATUS AND IMAGE PROCESSING APPARATUS

(57) An arithmetical device, and an image processing apparatus, able to handle various types of operation, able to easily handle even methods of operation which had not been envisioned at the point of time of development, and having a sufficient drawing capability for drawing in real time in three-dimensional graphics by electrically changing connections among a plurality of operation circuits, that is, an arithmetical device 201 having register files (RF) 2011 and an operation unit pool 2012, wherein the operation unit pool 2012 has at least one operation unit portion 20121 to 20124 for transferring data with the register files 2011 by data buses BS, and each of the operation portions 20121 to 20124 includes a plurality of operation units (adders, multipliers, multipliers/adders, etc.) OP1 to OP8 and a connection circuit network CCN between the register files 2011 and the operation units OP and able to change electrical connection among the operation units OP1 to OP8.

FIG.2

GRAPHICS DATA
13
I/O INTERFACE CIRCUIT
11
MAIN PROCESSOR
10
15
147
148
MAIN MEMORY
12
S11
S148
SRAM
TEXTURE BUFFER
147a
141
142
143
S148
144
DISPLAY BUFFER
147b
DDA SET-UP CIRCUIT
TRIANGLE DDA CIRCUIT
TEXTURE ENGINE CIRCUIT
MEMORY I/F CIRCUIT
Z-BUFFER
147c
S141
S142
S143
CRT CONTROL CIRCUIT
145
TEXTURE CLUT BUFFER
147d
146
RAMDAC
VIDEO
14
RENDERING CIRCUIT



Printed by Jouve, 75001 PARIS (FR)

## Description

### TECHNICAL FIELD

The present invention relates to an arithmetical device applied to for example an image processing apparatus for graphic drawing and processing the values of pixels to be drawn and an image processing apparatus using the same.

### BACKGROUND ART

In a variety of CAD (computer aided design) systems, amusement apparatuses, etc., computer graphics are being frequently used. Especially, along with recent advances in image processing technology, systems using three-dimensional computer graphics are rapidly spreading.

In such three-dimensional computer graphics, when determining the color corresponding to each pixel, rendering for calculating the value of the color of each pixel and writing the calculated color value at an address of a display buffer (frame buffer) corresponding to that pixel is carried out.

One of techniques of rendering is polygon rendering. This technique expresses a three-dimensional model as a combination of triangular unit graphics (polygons) and draws a graphic using these polygons as units to thereby determine the color of the display screen.

In polygon rendering, processing is performed for inputting coordinates (x, y, z), color data (R, G, B), and values of homogeneous coordinates (s, t) and a homogeneous term q of texture data indicating an image pattern of adhesion for vertexes of a triangle in a physical coordinate system and interpolating these values inside the triangle.

Here, regarding the homogeneous term q, the coordinates in the UV coordinate system of an actual texture buffer, that is, the texture coordinate data (u, v), become the 's/q' and 't/q' obtained by dividing the homogeneous coordinates (s, t) by that homogeneous term q multiplied with the texture sizes USIZE and VSIZE, respectively.

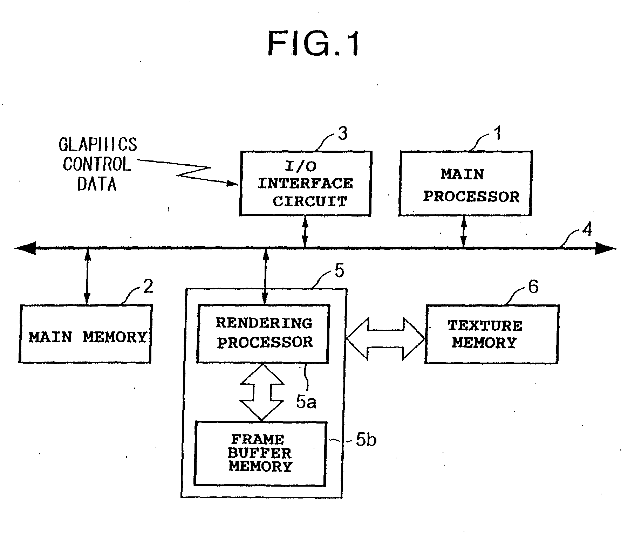

FIG. 1 is a view of the system configuration showing the basic concept of the three-dimensional computer graphics system.

In this three-dimensional computer graphics system, graphics drawing and other data is given from a main memory 2 of a main processor 1 or from an I/O interface circuit 3 for receiving the graphics data from the outside via a main bus 4 to a rendering circuit 5 having a rendering processor 5a and a frame buffer memory 5b.

The rendering processor 5a has connected to it the frame buffer memory 5b for the purpose of holding the data for display and the texture memory 6 holding the texture data to be applied to the surface of the graphic element (for example triangle) to be drawn.

Then, the rendering processor 5a performs the processing for drawing the graphic element applying texture to the surface for every graphic element in the frame buffer memory 5b.

The frame buffer memory 5b and the texture memory 6 are generally comprised of DRAMs.

In the system of FIG. 1, the frame buffer memory 5b and the texture memory 6 are configured as physically different memory systems.

In a three-dimensional graphics drawing image processing apparatus, however, the writing and reading of the image data to and from the memory, the reading of the same for the screen display, and other access to the memory are frequently carried out. Further, it becomes necessary to secure a wide bus width of the memory for bringing out the full graphics drawing performance.

For this reason, the graphics drawing image processing apparatus and the memory used to be separately arranged, but this has become physically impossible due to the increase in the number of interconnections. Therefore, the DRAMs and the logic circuits are now being provided on the same chip.

In a three-dimensional computer graphics drawing image processing apparatus as explained above, however, the values of the pixels to be drawn are calculated by performing various operation.

As the method of operation of the values of the pixels, a variety of methods are being used and proposed.

In a conventional three-dimensional computer graphics drawing image processing apparatus, however, the configuration of the circuit for executing the operation ends up being limited at the point of time of producing the LSI. Therefore, even if it is desired to apply a method of operation not envisioned at the point of time of development, it is very difficult or impossible to apply it.

On the other hand, it is possible to draw three-dimensional computer graphics by using an arithmetical device having a high general applicability like a microprocessor, but when considering HDTV etc. expected to spread in the future, the graphics drawing capability per unit time is not sufficient for drawing a desired image in real time and therefore drawing in real time is very difficult.

DISCLOSURE OF THE INVENTION

A first object of the present invention is to provide an arithmetical device able to handle various types of operation and able to easily handle methods of operation which had not been envisioned at the point of time of development by electrically changing the connections among a plurality of operation circuits.

Further, a second object of the present invention is to provide an image processing apparatus having a sufficient graphics drawing capability for drawing in real time in three-dimensional graphics.

To attain the above object, an arithmetical device according to a first aspect of the present invention is an arithmetical device having a plurality of operation units, having a connection circuit network having a plurality of data paths reconfigurable in accordance with a control signal and connecting the operation units by an electrical connection network to establish electrical connection among a plurality of operation units and configure an operation circuit formed by a plurality of operation units.

Further, an arithmetical device according to a second aspect of the present invention has register files and an operation unit pool, the operation unit pool having at least one operation portion for transferring data with a register file by a data bus, the operation portion including a plurality of operation units and a connection circuit network having a plurality of data paths reconfigurable in accordance with a control signal and connecting the operation units by an electrical connection network to establish electrical connection among a plurality of operation units and configure an operation circuit formed by a plurality of operation units.

An arithmetical device according to a third aspect of the present invention has a plurality of operation processing units and a cross bar circuit for connecting the plurality of operation processing units to each other in a desired format, wherein each of the plurality of operation processing units has at least an operation pipe for performing desired operation on the input data, a selector for selecting one of operation result data of an adjacent operation processing unit or data supplied from the outside and inputting the same to the operation pipe, and a stream register for inputting the data supplied through the cross bar circuit to the operation pipe and transferring the operation result of the operation pipe to the adjacent operation processing unit.

Further, an image processing apparatus according to a fourth aspect of the present invention has a storage circuit for storing at least image data and a logic circuit for performing predetermined processing on the image data based on the stored data of the storage circuit, wherein the logic circuit includes an arithmetical device having a plurality of operation units and having a connection circuit network having a plurality of data paths reconfigurable in accordance with a control signal and connecting the operation units by an electrical connection network to establish electrical connection among a plurality of operation unit and configure an arithmetical circuit formed by a plurality of operation units.

Further, an image processing apparatus according to a fifth aspect of the present invention has a storage circuit for storing at least image data and a logic circuit for performing predetermined processing on the image data based on the stored data of the storage circuit, wherein the logic circuit comprises an arithmetical device having register files and an operation unit pool, the operation unit pool having at least one operation portion for transferring data with a register file by a data bus, the operation portion including a plurality of operation units and a connection circuit network having a plurality of data paths reconfigurable in accordance with a control signal and connecting the operation units by an electrical connection network to establish electrical connection among a plurality of operation units and configure an operation circuit formed by a plurality of operation units.

Further, an image processing apparatus according to a sixth aspect of the present invention is an image processing apparatus having a graphics processing function and an image processing function, comprising a memory for storing data concerning an image, a processing unit for generating graphics pixel data including at least data concerning color at the time of graphics processing and generating a source address for reading at least the data stored in the memory at the time of image processing, and a core portion for performing predetermined graphics processing or image processing based on the data generated in the processing unit, wherein the core portion has a plurality of operation processing units and a cross bar circuit for connecting the plurality of operation processing units to each other and the memory and the operation processing units to each other in a desired format, each of the plurality of operation processing units has at least an operation pipe for performing desired operation on input data, a selector for selecting one of operation result data of an adjacent operation processing unit or data supplied from the outside and inputting the same to the operation pipe, and a stream register for inputting the data supplied through the cross bar circuit to the operation pipe and transferring the operation result of the operation pipe to the adjacent operation processing unit.

Preferably, the operation processing unit includes a second stream register for inputting the data supplied through the cross bar circuit to the operation pipe and transferring the operation result of the operation pipe to the cross bar circuit.

Further, in the sixth aspect, a plurality of operation processing blocks including the plurality of operation processing units are provided, and each of the plurality of operation processing blocks is assigned with and fixed to certain processing to take charge of.

In the present invention, the connection circuit network configures an operation circuit for continuously inputting data upon receipt of a control signal and able to execute operation expressed by a tree-like data flow graph.

Further, in the present invention, the connection circuit network configures an operation circuit so that, when having a selector at desired position on a data bus and there are 2n number of input data buses, n-2 number of operation unit select pairs of input data buses and outputs of the previous stage operation units by the selectors for input to an operation unit of their own stages.

Further, in the present invention, the connection circuit network configures an operation circuit so that at least one operation unit other than the n number of operation units selects all of the input data and the output of the former stage and inputs the same to an operation unit of its own stage.

Further, in the present invention, provision is made of a control circuit able to change the electrical connection among the operation units upon receipt of a control signal when performing pipeline processing using reconfigurable data buses.

Further, in the present invention, control circuits are provided corresponding to individual operation units and individual connection points of the connection network, each control circuit holding information concerning the operation to be performed next and automatically switching control to one directed to the next operation when detecting an end of one series of operation.

Preferably, control circuits are provided corresponding to individual connection points of the connection network, each control circuit holding information concerning the connection configuration to be taken next and automatically switching the control of the connection points when detecting the end of one series of data transfers.

Preferably, control circuits are provided corresponding to individual operation units and individual connection points of the connection network, the control circuits provided corresponding to the operation units holding the information concerning the operation to be performed next and automatically switching the control to one directed to the next operation when detecting the end of one series of operation and the control circuits provided corresponding to individual connection points of the connection network holding information concerning the connection configuration to be taken next and automatically switching the control of the connection points when detecting the end of one series of data transfers.

Further, in the present invention, the control circuit holds two types of information, that is, the control information at present (current control information) and the information concerning the control to be performed next (next control information), and the processing data is sent in synchronization with a control signal able to identify that the operation data is the final data used for the operation, and the control circuit rewrites the current control information by the next control information when the operation being executed at present is completed when it is identified that the operation data is the final data.

Further, in the present invention, the control circuit holds the control information at present (current control information), information for identifying the operation being executed at present (current identification information), information concerning the control to be performed next (next control information), and information for identifying the operation to be executed next (next identification information), the operation data is sent in synchronization with information able to identify that the operation data is the final data to be used for operation and a control signal indicating information able to identify whether that data is with respect to one operation processing or with respect to other operation processing, and the control circuit rewrites the current control information and the current identification information by the next control information and the next identification information when the operation being executed at present is completed when it is identified that the sent data is the final data and for the operation indicated by the current identification information.

Further, in the present invention, the data to be input is either of information concerning at least the surface of the object to be drawn, information concerning light hitting the surface, and the past operation result.

According to the present invention, operation units (adder, multiplier, multiplier/adder, etc.) are connected by the electrical connection network to configure an operation circuit comprised of a plurality of operation units.

It becomes possible to continuously input data and perform processing with respect to the operation circuit configured in this way.

Further, the operation circuit can be configured by using a connection network able to realize operation expressed by a tree-like data flow graph efficiently and with a small circuit scale.

Further, according to the present invention, when executing operation in the form of a pipeline by using the operation circuit, the electrical connection among the operation units is changed.

By dynamically changing the configuration among the operation units in this way, different operation can be carried out without delay.

Further, the control circuits added to the individual operation units hold information concerning the operation to be performed next and automatically switch the control to one directed to the next operation when detecting the end of one series of operation.

Further, the control circuits given with respect to the individual connection points of the connection network hold information concerning the connection configuration to be taken next, and the individual control circuits automatically switch the control of the connection points when detecting the end of one series of data transfers.

BRIEF DESCRIPTION OF THE DRAWINGS

FIG. 1 is a view of the system configuration showing the basic concept of a three-dimensional computer graphics system.
FIG. 2 is a block diagram of the configuration of a three-dimensional computer graphics system according to the present invention.
FIG. 3 is a block diagram of the basic configuration of a three-dimensional graphics drawing apparatus using an arithmetical device according to the present invention.
FIG. 4 is a block diagram of an example of the configuration of the arithmetical device according to the present invention.
FIG. 5 is a view of a first example of the configuration of a connection circuit network CCN according to the present invention.
FIG. 6 is a view of an example of the configuration of a selector according to the present invention.
FIG. 7 is a view of a second example of the configuration of the connection circuit network CCN according to the present invention.
FIG. 8 is a view of a third example of the configuration of the connection circuit network CCN according to the present invention.
FIG. 9 is a view of another example of the configuration of the selector according to the present invention.
FIG. 10 is a view of another example of the configuration of the selector according to the present invention.
FIG. 11 is a view of a fourth example of the configuration of the connection circuit network CCN according to the present invention.
FIG. 12 is a brief explanatory view of execution of operation by the arithmetical device according to the present invention and a view of a data flow graph of the operation.
FIG. 13 is a brief explanatory view of execution of the operation of the arithmetical device according to the present invention.
FIGS. 14A to 14H are explanatory views of pipeline processing of the arithmetical device according to the present invention.
FIG. 15 is a view for explaining a first method of realization of dynamic reconfiguration of the arithmetical device according to the present invention.
FIG. 16 is a view for explaining the first method of realization of dynamic reconfiguration of the arithmetical device according to the present invention.
FIG. 17 is a view for explaining a second method of realization of dynamic reconfiguration of the arithmetical device according to the present invention.
FIG. 18 is a view for explaining the second method of realization of dynamic reconfiguration of the arithmetical device according to the present invention.
FIG. 19 is a view for explaining the second method of realization of dynamic reconfiguration of the arithmetical device according to the present invention.
FIG. 20 is a view for explaining processing when forming a contribution component to the pixel color by diffusion in the arithmetical device according to the present invention.
FIG. 21 is a view for explaining processing when forming a contribution component to the pixel color by diffusion in the arithmetical device according to the present invention.
FIG. 22 is a view for explaining a first concrete example of dynamic reconfiguration of the arithmetical device taking the connection circuit network of FIG. 7 as an example.
FIG. 23 is a view for explaining a second concrete example of dynamic reconfiguration of the arithmetical device taking the connection circuit network of FIG. 7 as an example.
FIG. 24 is a view for explaining a data storage method according to the present invention.
FIG. 25 is a view for explaining a preferred configuration, arrangement, and interconnection method of logic circuits and DRAMs and secondary memories of the rendering circuit provided on the same semiconductor chip according to the present invention.
FIG. 26 is a view for explaining an example of the configuration of a DRAM module according to the present invention.
FIG. 27 is a view for explaining the function of a DDA set-up circuit according to the present invention.

FIG. 28 is a view for explaining the function of a triangle DDA circuit according to the present invention.

FIG. 29 is a view for explaining sorting of vertexes of the triangle DDA circuit according to the present invention.

FIG. 30 is a view for explaining inclination calculation of a horizontal direction of the triangle DDA circuit according to the present invention.

FIG. 31A and FIG. 31B are views for explaining an interpolation routine of the vertex data of the triangle DDA circuit according to the present invention.

FIG. 32 is a flowchart for explaining an interpolation routine of the vertex data of the triangle DDA circuit according to the present invention.

FIG. 33 is a block diagram of the configuration of a second embodiment of an image processing apparatus able to employ the arithmetical device according to the present invention.

FIG. 34 is a view for explaining a concrete example of the configuration of a core portion according to the present invention.

FIG. 35 is a circuit diagram of a concrete example of the configuration of operation units of an operation unit group according to a second embodiment.

FIG. 36 is a circuit diagram of a concrete example of the configuration of an operation pipe for performing various operation.

FIG. 37 is a view of a concrete example of the configuration of a stream register SR.

FIG. 38A and FIG. 38B are views for explaining the processing of the stream register.

FIG. 39 is a circuit diagram of an example of the configuration of a cross bar circuit.

FIG. 40 is a circuit diagram of an example of the configuration of a first data selection circuit.

FIG. 41 is a circuit diagram of an example of the configuration of a second data selection circuit.

FIG. 42 is a view of an example for controlling the cross bar circuit and propagating each input data to the input of a suitable operation unit.

FIG. 43 is a view for explaining the configuration and function of caches and a view of a read system.

FIG. 44 is a view for explaining the configuration and function of caches and a view of a write system.

FIG. 45A and FIG. 45B are views for explaining reconfigurable operation processing.

FIG. 46 is an explanatory view of convolution filtering.

FIG. 47 is an explanatory view of convolution filtering and a view for explaining a case where calculation at a position deviated by one pixel is carried out.

FIG. 48A and FIG. 48B are views for explaining an example of parallel operation corresponding to the convolution filtering.

FIG. 49 is a view for explaining a further concrete example of parallel operation corresponding to the convolution filtering.

FIG. 50 is a view of an example of the configuration of the core portion when fixing the operation objects which operation unit groups take charge of and performing graphics processing.

FIG. 51 is a view for explaining the operation processing of the operation processing block in charge of color calculation.

FIG. 52 is a view for explaining concrete operation processing of the operation processing block in charge of color calculation.

FIG. 53 is a view for explaining concrete operation processing of the operation processing block in charge of color calculation.

FIG. 54 is a view for explaining another example of concrete operation processing of the operation processing block in charge of color calculation.

FIG. 55 is a view for explaining the operation processing of the operation processing block in charge of filtering.

FIG. 56 is a view for explaining the concrete operation processing of the operation processing block in charge of filtering.

BEST MODE FOR WORKING THE INVENTION

Below, an explanation will be given of an image processing apparatus as a three-dimensional computer graphics system having a graphics processing function for displaying a desired three-dimensional image with respect to any three-dimensional object model on a s CRT (cathode ray tube) or other display at a high speed as applied for a personal computer etc. Thereafter, an explanation will be given of an image processing apparatus having a graphics processing function and image processing function in a similar system and performing parallel processing by sharing a plurality of processing data as a second embodiment.

First Embodiment

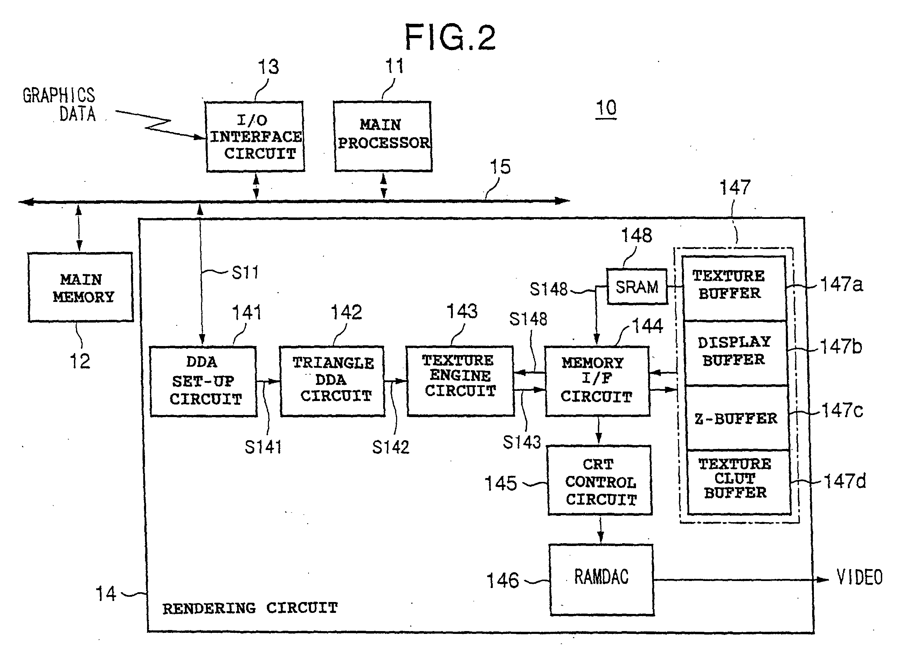

FIG. 2 is a view of the system configuration of a first embodiment of an image processing apparatus able to employ an arithmetical device according to the present invention. An image processing apparatus 10 according to the present first embodiment is configured as a three-dimensional computer graphics system having a graphics processing function.

A three-dimensional computer graphics system is a system for polygon rendering for expressing a three-dimensional model as a combination of triangles (polygons) as the unit graphics, determining the color of each pixel of the display screen by drawing the polygons, and displaying the same on the display.

Further, in a three-dimensional computer graphics system, a three-dimensional object is expressed by using (x, y) coordinates expressing the position on a plane and also a z-coordinate expressing the depth. Any point in a three-dimensional space is specified by these three coordinates (x, y, z).

As shown in FIG. 2, the image processing apparatus 10 serving the three-dimensional computer graphics system is comprised of a main processor 11, a main memory 12, an I/O interface circuit 13, and a rendering circuit 14 serving as the three-dimensional graphics drawing apparatus including the arithmetical device according to the present invention connected via a main bus 15.

Below, an explanation will be given of the functions of the components.

The main processor 11 reads the required graphics data from the main memory 12 in accordance with for example the state of progress of the application and performs clipping, lighting, and other geometry processings on this graphics data to produce the polygon rendering data. The main processor 11 outputs the polygon rendering data S11 via the main bus 15 to the rendering circuit 14.

The I/O interface circuit 13 receives as input control information concerned with motion, processing information concerned with color, or the polygon rendering data etc. from the outside according to need and outputs them via the main bus 15 to the rendering circuit 14.

The polygon rendering data input to the rendering circuit 14 includes the data of (x, y, z, R, G, B, $\alpha$, s, t, q, F) of three vertexes of each polygon.

Here, the (x, y, z) data indicates the three-dimensional coordinates of the vertexes of the polygon, while the (R, G, B) data indicates the luminance values of red, green and blue at the three-dimensional coordinates.

The $\alpha$ data indicates a blend coefficient of the R, G, B data of the pixels to be drawn from now on and the pixels which have been already stored in the display buffer of the rendering circuit 14.

Among the (s, t, q) data, (s, t) indicates the homogeneous coordinates of the corresponding texture, and q indicates the homogeneous term. Here, 's/q' and 't/q' are multiplied by the texture sizes USIZE and VSIZE to obtain the texture coordinate data (u, v). The texture data stored in the texture buffer is accessed by using the texture coordinate data (u, v).

The F data indicates the $\alpha$ value of the fog.

Namely, the polygon rendering data includes the physical coordinate values of vertexes of a triangle and colors and texture data of the vertexes.

Below, a detailed explanation will be given of the rendering circuit 14 including the arithmetical device according to the present invention.

As shown in FIG. 2, the rendering circuit 14 has a DDA (digital differential analyzer) set-up circuit 141, a triangle DDA circuit 142, a texture engine circuit 143, a memory interface (I/F) circuit 144, a CRT control circuit 145, a RAMDAC circuit 146, a DRAM 147, and a SRAM (static RAM) 148.

In the rendering circuit 14 in the present embodiment, the logic circuits and the DRAM 147 for storing at least the display data and texture data are provided on a single semiconductor chip.

In the present first embodiment, first, an explanation will be given of the basic configuration and functions of the three-dimensional graphics drawing apparatus (rendering circuit 14) using the arithmetical device according to the present invention.

Then, the functions of the DRAM 147, DDA set-up circuit 141, triangle DDA circuit 142, texture engine circuit 143, memory I/F circuit 144, CRT control circuit 145, and RAMDAC circuit 146 will be explained in order.

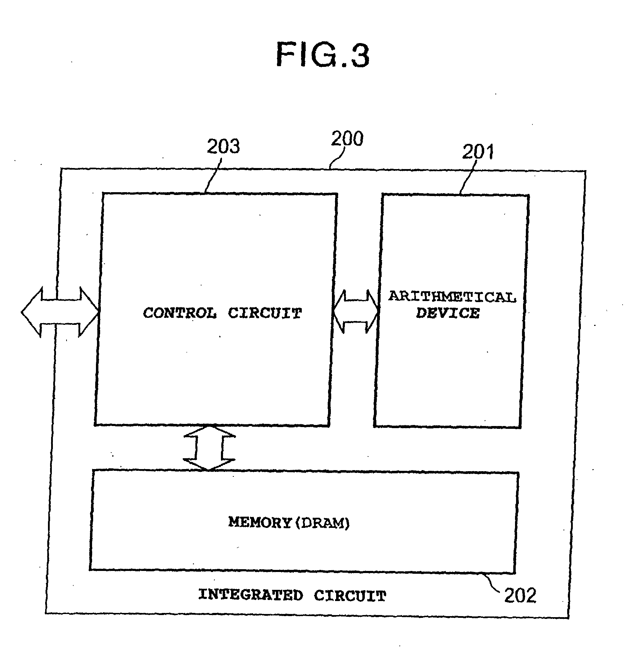

FIG. 3 is a block diagram of the basic configuration of a three-dimensional graphics drawing apparatus using the arithmetical device according to the present invention.

The present three-dimensional graphics drawing apparatus 200 has, as shown in FIG. 3, an arithmetical device 201, a large capacity memory (DRAM on LSI) 202, and a control circuit 203 for controlling an interface with an external apparatus and the reading and writing to and from the memory 202.

Showing the correspondence of these components with the components of the rendering circuit 14 of FIG. 2, the arithmetical device 201 of FIG. 3 is included in the texture engine circuit 143 of FIG. 2, the memory 202 corresponds to the DRAM 147, and the control circuit 203 includes the DDA set-up circuit 141, triangle DDA circuit 142, texture engine circuit 143, memory I/F circuit 144, CRT control circuit 145, and RAMDAC 146 circuit.

The control circuit 203 inputs the data input from the external I/O interface 13 or the data stored in the memory 202 to the arithmetical device 201 according to need and stores the data output from the arithmetical device 201 in the memory 202.
This data is mainly the intermediate data of operation and the values of the pixels to be drawn.
Further, the control circuit 203 outputs the content of for example the memory 202 through the external interface.
The data is output to a display device such as a TV or LCD display. Sometimes the circuit is connected to the present LSI and sometimes the data is displayed through a device connected to the outside.

Arithmetical Device 201

The arithmetical device 201 generally processes the data input from the control circuit 203, for example, information concerning the surface of the object to be drawn (direction of plane, color, refractive index, pattern (texture), etc.), information concerning the light hitting the surface (incident direction, intensity, etc.), and the operation result in the past (intermediate value of the operation).
The arithmetical device 201 is an arithmetical device having a plurality of operation units and is able to reconfigure the operation path by control from an external circuit, for example, the control circuit 203 or main processor 11, establishes an electrical connection among internal operation units so as to realize desired operation, performs the operation by inputting the data input from the control circuit 203 to the data path of one series of operation units formed by the operation units and the electrical connection network (inter-connect), and outputs the operation result.
Namely, the arithmetical device 201 has for example a plurality of reconfigurable data paths and connects operation units (adders, multipliers, multiplier/adders, etc.) by the electrical connection network to configure an operation circuit comprised of a plurality of operation units.
The arithmetical device 201 can continuously input data to the operation circuit reconfigured in this way to perform the operation and can configure the operation circuit by using a connection network able to realize operation expressed by the data flow graph in for example a 2-input 1-output reverse two-divided tree efficiently and with a small circuit scale.

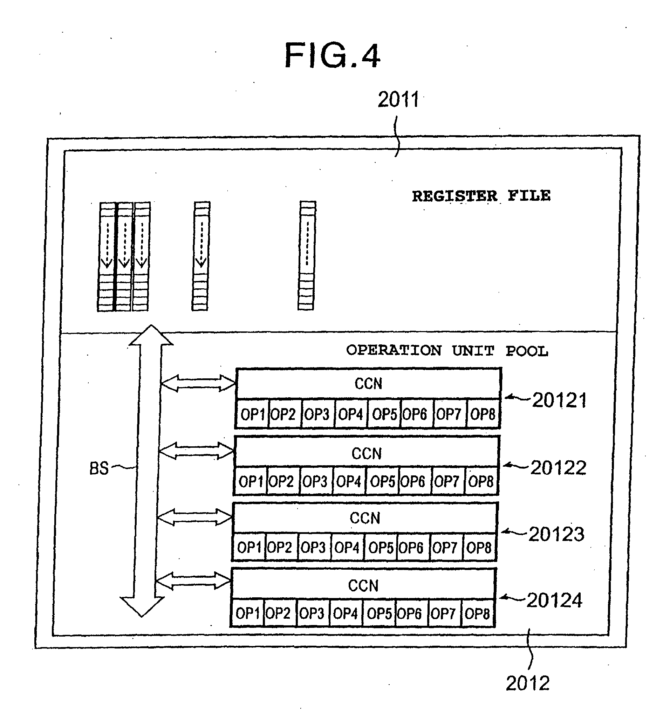

FIG. 4 is a block diagram of an example of the configuration of the arithmetical device 201.
The present arithmetical device 201 has, as shown in FIG. 4, register files (RF) 2011 having a FIFO (first-in first-out) structure and an operation unit pool 2012.
The operation unit pool 2012 has at least one (four in the example of FIG. 4) operation portions 20121 to 20124 for transferring data with the register files 2011 by the data bus BS.
Each of the operation portions 20121 to 20124 includes a plurality of (eight in the example of FIG. 4) operation units (adders, multipliers, multipliers/adders, etc.) OP1 to OP8 and a connection circuit network CCN able to change the electrical connection among the operation units OP1 to OP8.
Namely, the basic configuration of the arithmetical device 201 resides in that there is a connection circuit network CCN between the register files 2011 and the operation units OP.
Further, there may be provided a circuit for converting the value between the register files 2011 and the connection circuit network CNN.
In this way, by independently providing the register files, the circuit size can be reduced.
Further, for example one register file is provided for each group.
In the example of FIG. 4, the operation portions 20121 to 20124 are configured to individually transfer data with the register files 2011 via the data bus BS. Note, a mode such as a configuration wherein the operation portions 20121 to 20124 are connected by for example other signal lines and the operation is carried out by the other operation portions using the result of one operation portion is also possible.

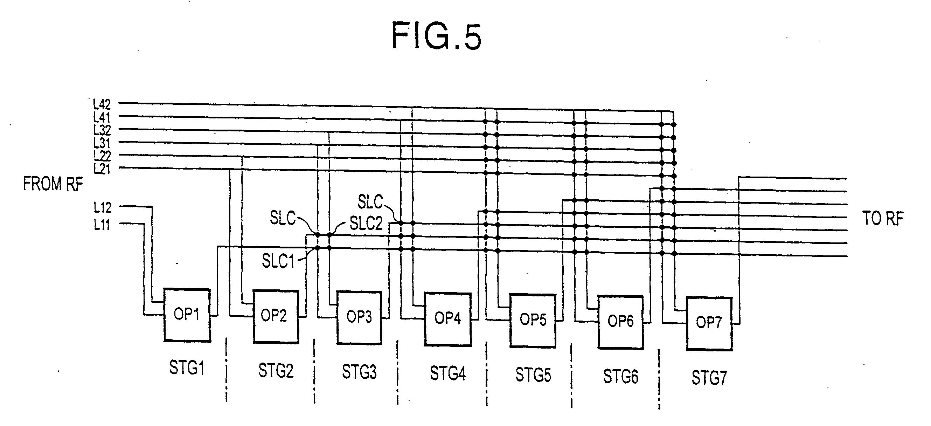

FIG. 5 is a view of a first example of the configuration of the connection circuit network CCN according to the present invention.
The characteristic feature of the configuration of the connection circuit network CCN resides in that, when there are for example 2n number of input buses, a pair of files from the register files 2011 is input to two operation units, and a pair of inputs from the register files 2011 and the output of the operation unit of the former stage (left side) are selected by the selector and input to an operation unit of the same stage for the n-2 number of operation units. Then, for the remaining operation units, all of the inputs except the input buses L11 and L12 from the register files 2011 and the output of the former stage (left side) are selected and input to the operation units.
The connection circuit network CCN of FIG. 5 is an example of a configuration having four pairs of, i.e., eight, input buses L11, L12; L21, L22; L31, L32; and L41, L42.

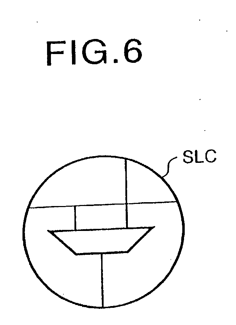

In FIG. 5, black circles shown at predetermined intersecting points of the input buses represent the selectors. An example of the configuration of a selector is shown in FIG. 6.
Note that the lines in the figure show bundled lines (groups of two or more signal lines).

Further, FIG. 5 shows an example of a configuration having seven operation units OP1 to OP7. It is configured as follows by defining the inputs to outputs of the operation units arranged in parallel as stages STG1 to STG7 (the output of the operation unit OP7 of the last stage 7 is sent as data to the register files).

Namely, at the first stage STG1, a pair of input buses L11 and L12 are connected to the input of the operation unit OP1, and the output of the operation unit OP1 is connected to the next and following stages (the input side of the third stage STG3 in the example of FIG. 5).

At the second stage STG2, a pair of input buses L21 and L22 are connected to the input of the operation unit OP2, and the output of the operation unit OP2 is connected to the input side of the third stage STG3.

At the third stage STG3, a pair of input buses L31 and L32 are connected to the input of the operation unit OP3, and the output of the operation unit OP3 is connected to the input side of the fourth stage STG4. The output line of the operation unit OP1 of the first stage STG1 and the output line of the operation unit OP2 of the second stage STG2 intersect with the input buses L31 and L32, and selectors SLC shown in FIG. 6 are arranged at these four intersecting points.

At the fourth stage STG4, a pair of input buses L41 and L42 are connected to the input of the operation unit OP4, and the output of the operation unit OP4 is connected to the input side of the fifth stage STG5. The output line of the operation unit OP1 of the first stage STG1, the output line of the operation unit OP2 of the second stage STG2, the output line of the operation unit OP3 of the third stage STG3 intersects with the input buses L41 and L42, and selectors SLC shown in FIG. 6 are arranged at these six intersecting points.

At the fifth stage STG5, the selectors SLC shown in FIG. 6 are arranged at 10 intersecting points between the input bus L42 and the input buses L21, L22, L31, L32, and L41 and at eight intersecting points where the output line of the operation unit OP1 of the first stage STG1, the output line of the operation unit OP2 of the second stage STG2, the output line of the operation unit OP3 of the third stage STG3, and the output line of the operation unit OP4 of the fourth stage STG4 intersect so that a plurality of inputs via input buses L21 to L42 from the register files 2011 and the outputs of the first to fourth stages STG1 to STG4 are selected and input to the operation unit OP5.

At the sixth stage STG6, the selectors SLC shown in FIG. 6 are arranged at 10 intersecting points between the input bus L42 and the input buses L21, L22, L31, L32, and L41 and at 10 intersecting points where the output line of the operation unit OP1 of the first stage STG1, the output line of the operation unit OP2 of the second stage STG2, the output line of the operation unit OP3 of the third stage STG3, the output line of the operation unit OP4 of the fourth stage STG4, and the output line of the operation unit OP5 of the fifth stage STG5 intersect so that a plurality of inputs via input buses L21 to L42 from the register files 2011 and the outputs of the first to fifth stages STG1 to STG5 are selected and input to the operation unit OP6.

At the seventh stage STG7, the selectors SLC shown in FIG. 6 are arranged at 10 intersecting points between the input bus L42 and the input buses L21, L22, L31, L32, and L41 and at 12 intersecting points where the output line of the operation unit OP1 of the first stage STG1, the output line of the operation unit OP2 of the second stage STG2, the output line of the operation unit OP3 of the third stage STG3, the output line of the operation unit OP4 of the fourth stage STG4, the output line of the operation unit OP5 of the fifth stage STG5, and the output line of the operation unit OP6 of the sixth stage STG6 intersect so that a plurality of inputs via input buses L21 to L42 from the register files 2011 and the outputs of the first to sixth stages STG1 to STG6 are selected and input to the operation unit OP7.

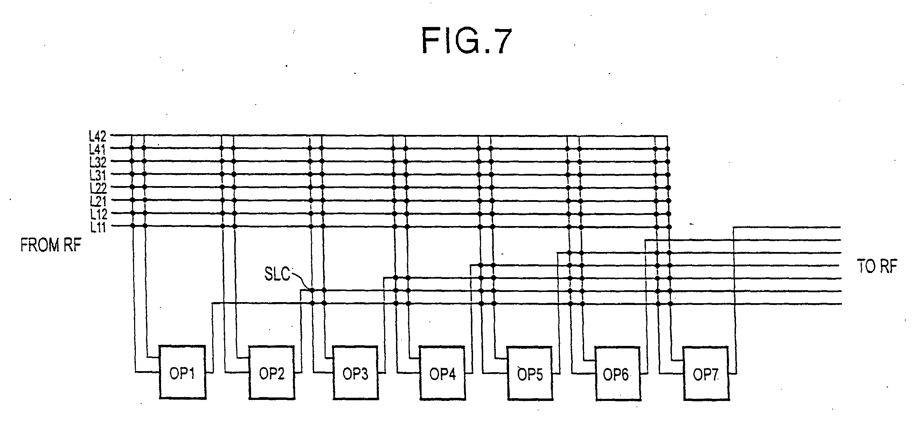

FIG. 7 is a view of a second example of the configuration of the connection circuit network CCN according to the present invention.

The difference of this second example of the configuration from the first example of the configuration of FIG. 5 resides in it being made the so-called complete cross bar type.

As seen from FIG. 5 and FIG. 7, the first example of the configuration can reduce the circuit size (can decrease the selectors) while holding the degree of freedom of the construction of the data flow graph.

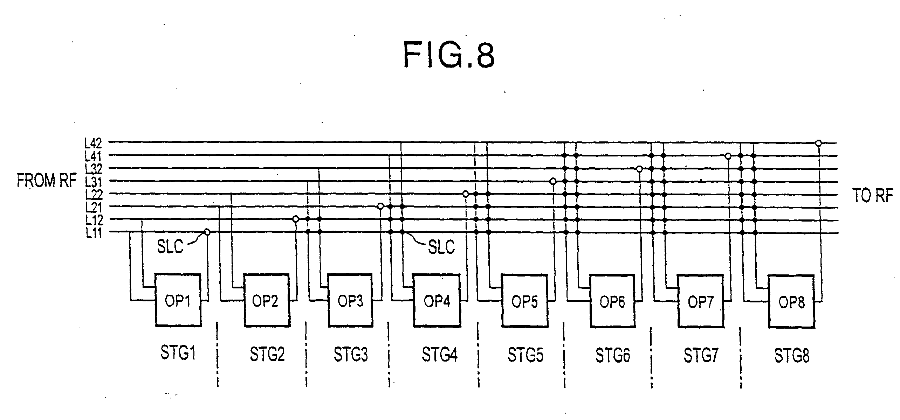

FIG. 8 is a view of a third example of the configuration of the connection circuit network CCN according to the present invention.

The connection circuit network CCN of FIG. 8 shows an example of the configuration having four pairs of, i. e., eight, input buses L11, L12; L21, L22; L31, L32; and L41, L42 and having eight operation units OP1 to OP8. It is configured as follows by defining the input to output of the operation units arranged in parallel as stages STG1 to STG8 (the output of the operation unit OP8 of the last stage 8 is sent as the data to the register files).

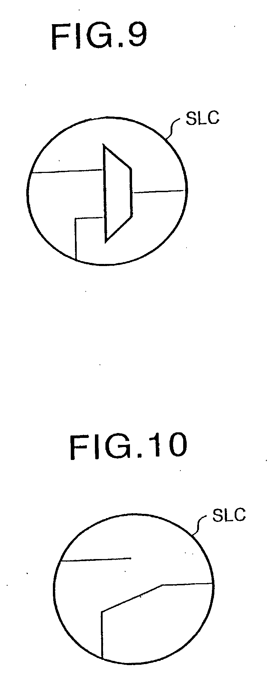

In FIG. 8, the black circles and white circles shown at the predetermined intersecting points of the input buses represent selectors. Examples of the configuration of the selectors are shown in FIG. 9 and FIG. 10.

Note that, the lines in the figure indicate bundled lines (groups of two or more signal lines).

Namely, at the first stage STG1, a pair of input buses L11 and L12 are connected to the input of the operation unit OP1, and the output of the operation unit OP1 is connected to the selector of the white circle provided at the input bus L11.

At the second stage STG2, a pair of input buses L21 and L22 are connected to the input of the operation unit OP2, and the output of the operation unit OP2 is connected to the selector of the white circle provided at the input bus L12.

At the third stage STG3, a pair of input buses L31 and L32 are connected to the input of the operation unit OP3, and the output of the operation unit OP3 is connected to the selector of the white circle provided at the input bus L21. The selectors SLC shown in FIG. 6 are arranged at four intersecting points between the input buses L31 and L32 and the input buses L11 and L12.

At the fourth stage STG4, a pair of input buses L41 and L42 are connected to the input of the operation unit OP4, and the output of the operation unit OP4 is connected to the selector of the white circle provided at the input bus L22. The selectors SLC shown in FIG. 6 are arranged at six intersecting points between the input buses L41 and L42 and the input buses L11, L12, and L21.

At the fifth stage STG5, two-branched input buses L42 are connected to the input of the operation unit OP5, and the output of the operation unit OP5 is connected to the selector of the white circle provided at the input bus L31. The selectors SLC shown in FIG. 6 are arranged at eight intersecting points between the two input buses L42 and the input buses L11, L12, L21, and L22.

At the sixth stage STG6, two-branched input buses L42 are connected to the input of the operation unit OP6, and the output of the operation unit OP6 is connected to the selector of the white circle provided at the input bus L32. The selectors SLC shown in FIG. 6 are arranged at 14 intersecting points between the two input buses L42 and the input buses L11, L12, L21, L22, L31, L32, and L41.

At the seventh stage STG7, the two-branched input buses L42 are connected to the input of the operation unit OP7, and the output of the operation unit OP7 is connected to the selector of the white circle provided at the input bus L41. The selectors SLC shown in FIG. 6 are arranged at 14 intersecting points between two input buses L42 and input buses L11, L12, L21 L22, L31, L32 and L41.

At the eighth stage STG8, the two-branched input buses L42 are connected to the input of the operation unit OP8, and the output of the operation unit OP8 is connected to the selector of the white circle provided at the input bus L42. The selectors SLC shown in FIG. 6 are arranged at 14 intersecting points between two input buses L42 and input buses L11, L12, L21, L22, L31, L32 and L41.

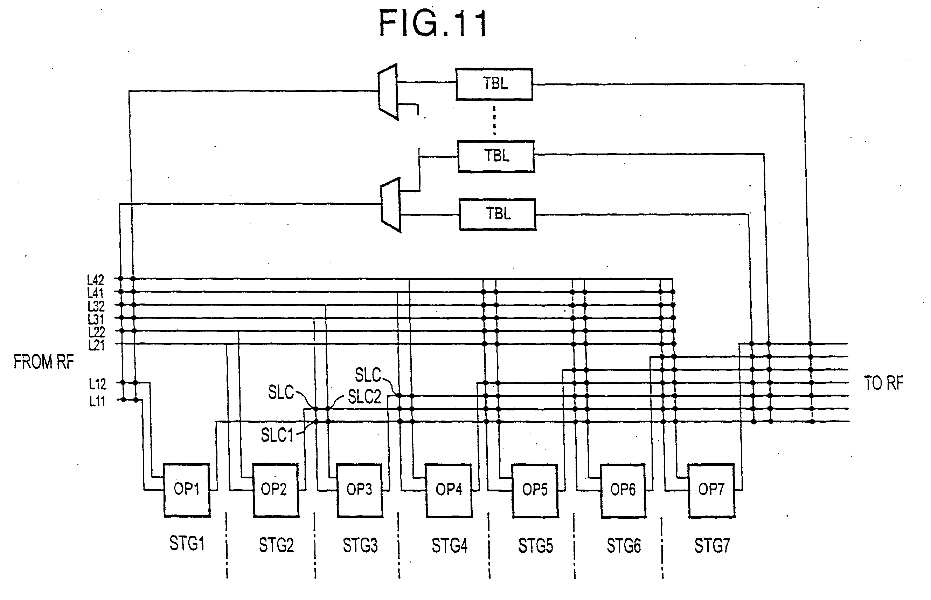

FIG. 11 is a view of a fourth example of the configuration of the connection circuit network CCN according to the present invention.

The difference of the present fourth example of the configuration from the first example of the configuration of FIG. 5 resides in that the selectors are provided at the outputs of the operation units OP1 to OP7, the data is input to at least one table reference portion TBL selectively set in advance, and the output of the table reference portion TBL is selected by the selector and fed back to the input lines L11 to L42.

By employing such a configuration, the operation of logarithms and indexes becomes possible.

Summary of Execution of Operation

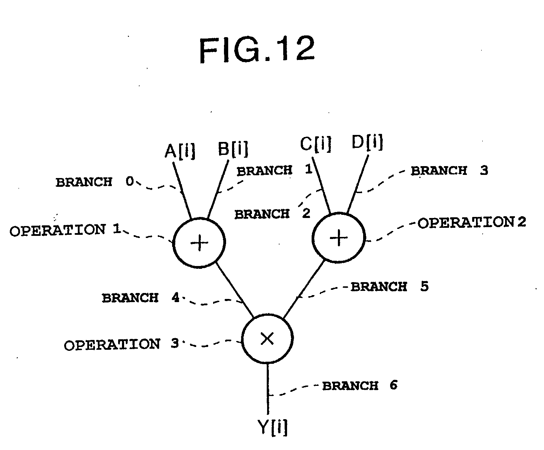

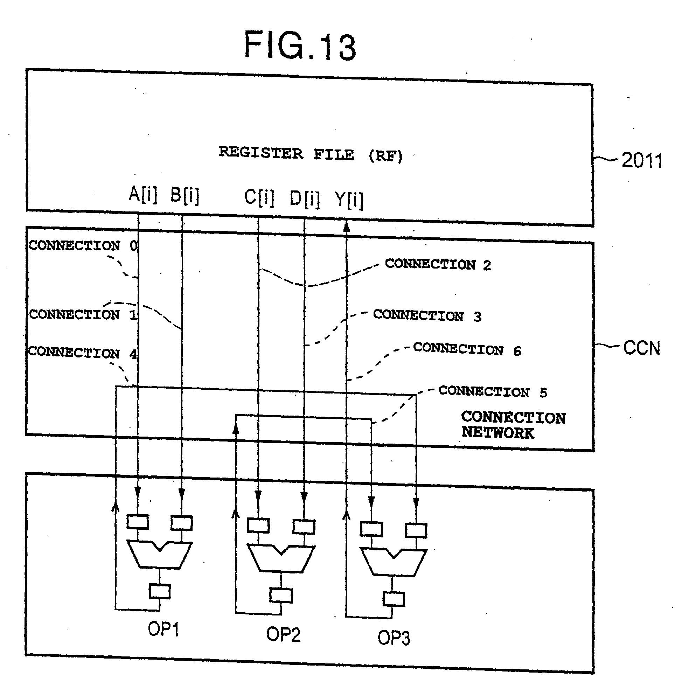

Here, a brief explanation will be given of the execution of the processing of the arithmetical device 201 according to the present invention with reference to FIG. 12 and FIG. 13.

For example, operation for reading the data A, B, C. and D from the register files 2011 and writing the value corresponding to Y of the next equation into the register files 2011 is carried out a plurality of times.

$$Y[i] = (A[i]+B[i]) \times (C[i]+D[i]) \qquad (1)$$

FIG. 12 shows a data flow graph of the operation shown in Equation (1).

Execution of Operation

The operation unit OP1 having the function of executing the operation 1 and the output of the register files 2011 from which the value corresponding to the data A is output are connected by a connection 0 as the electrical connection path corresponding to the branch 0.

Similarly, by connections 1 to 3 corresponding to the branches 1 to 3, the output corresponding to the data B of the register files 2011 is connected to the operation unit OP1, and the outputs corresponding to the data C and D are connected to the operation unit OP2.

The output of the operation unit OP1 is connected to the input of the operation unit OP3 having the function of executing the operation 3 by a connection 4 corresponding to the branch 4, and the output of the operation unit OP2 is connected to the input of the operation unit OP3 by a connection 5 corresponding to the branch 5.

The output of the operation unit OP3 is input to the register files 2011 via a connection 6 corresponding to the branch 6, and a path for writing the value corresponding to Y is established.

In this way, the electrical connection of the register files and the operation units is realized, the data corresponding to A[i], B[i], C[i], and D[i] is sequentially read out from the register files, and the operation is executed, whereby operation with respect to a plurality of data A to D is efficiently realized.

In the arithmetical device 201 realized in this way, by changing the electrical connection among the operation units, different operation can be easily handled.

In the case of the configuration of FIG. 5, the operation units OP1 to OP3 are used, the connection 0 and the connection 1 correspond to the input buses L11 and L12, and the connection 2 and the connection 3 correspond to the input buses L21 and L22.

The connection 4 for inputting the operation result of the operation unit OP1 to the operation unit OP3 is formed by the selector SLC1 shown in FIG. 5, while the connection 5 for inputting the operation result of the operation unit OP2 to the operation unit OP3 is formed by the selector SLC2.

Then, a connection 6 for outputting the operation result of the operation unit OP3 to the register files 2011 as it is formed.

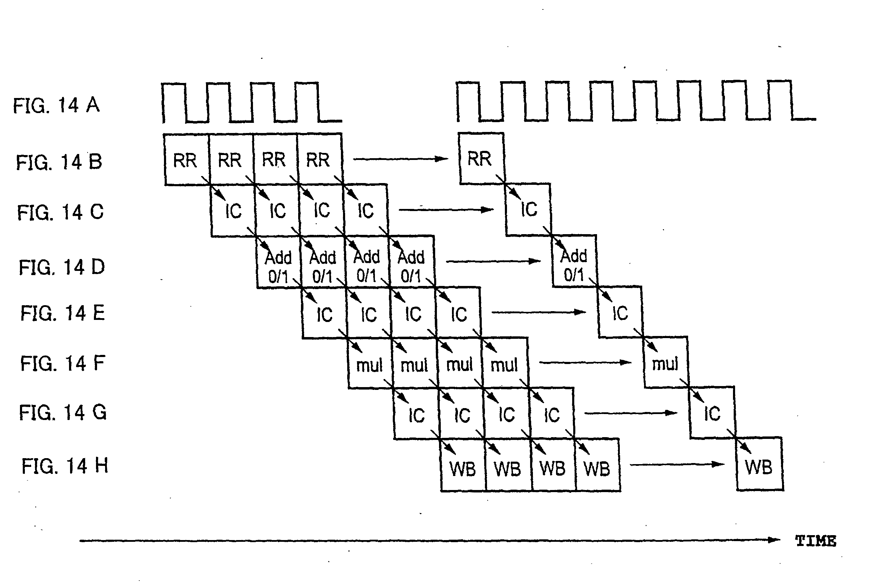

The above operation is executed by the pipeline processing as shown in FIGS. 14A to 14H.

Note that, FIG. 14A shows a clock; RR of FIG. 14B shows a read operation of the data A to D from the register files 2011; IC of FIGS. 14C, 14E, and 14G show the data transfer through the connection network CCN; Add1/0 of FIG. 14D shows the operation by the operation units OP1 and OP2; mul of FIG. 14F shows the processing by the operation processor OP3; and WB of FIG. 14H shows the write operation of the processing result to the register files 2011.

The arithmetical device 201 according to the present invention can dynamically reconfigure the data path as explained above.

Due to this, the arithmetical device 201 can change the electrical connection among the operation units when executing operation in a pipeline state by using the operation circuit.

Further, by dynamically changing the configuration among the operation units as described above, different operation can be carried out without delay.

Further, in the arithmetical device 201, the control circuits added to the individual operation units have the function of holding the information concerning the operation to be performed next and automatically switching the control to one directed to the next operation when detecting the end of one series of operation.

Further, in the arithmetical device 201, the control circuits given to the individual connection points of the connection network CCN have the function of holding the information concerning the connection configuration to be taken next and automatically switching the control of the connection points when detecting the end of one series of data transfers.

Next, an explanation will be given of the method of realization of the dynamic reconfiguration.

Method of Realization 1 of Dynamic Reconfiguration

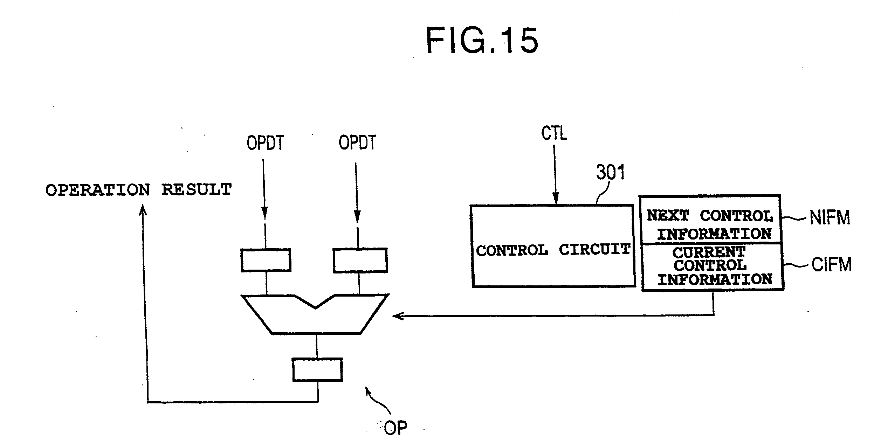

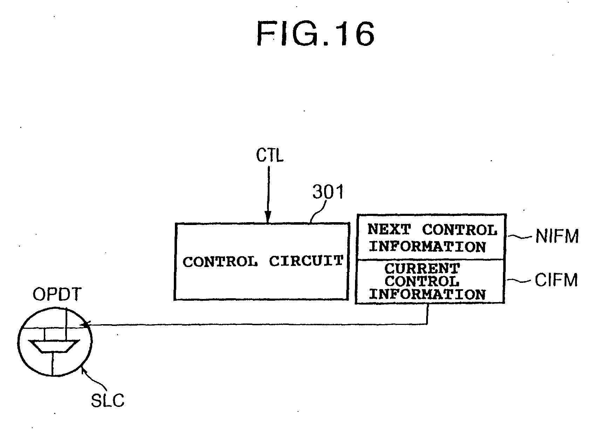

First, an explanation will be given of a first method of realization of the dynamic reconfiguration with reference to FIG. 15 and FIG. 16.

In this case, as shown in FIG. 15, a control circuit 301 for each operation unit OP holds two types of information, that is, the control information at present (current control information) CIFM and the information concerning the control to be performed next (next control information) NIFM.

Further, the operation data OPDT is sent in synchronization with the control signal CTL able to identify that the information is the final data used for the operation.

The control circuit 301 rewrites the current control information CIFM by the next control information NIFM simultaneously with completion of the operation being executed at present when it is identified that the information is the final data.

Due to this, it is possible to change the control of the operation circuit, and it becomes possible to execute different operation.

The same applies to the connection circuit network CCN. As shown in FIG. 15, when it is identified that the information is the final data by the control signal CTL, the control circuit 301 rewrites the current control information CIFM by the next control information NIFM simultaneously with the completion of the data transfer being executed at present.

Due to this, it is possible to change the control of the connection circuit network, and it becomes possible to realize different electrical connections.

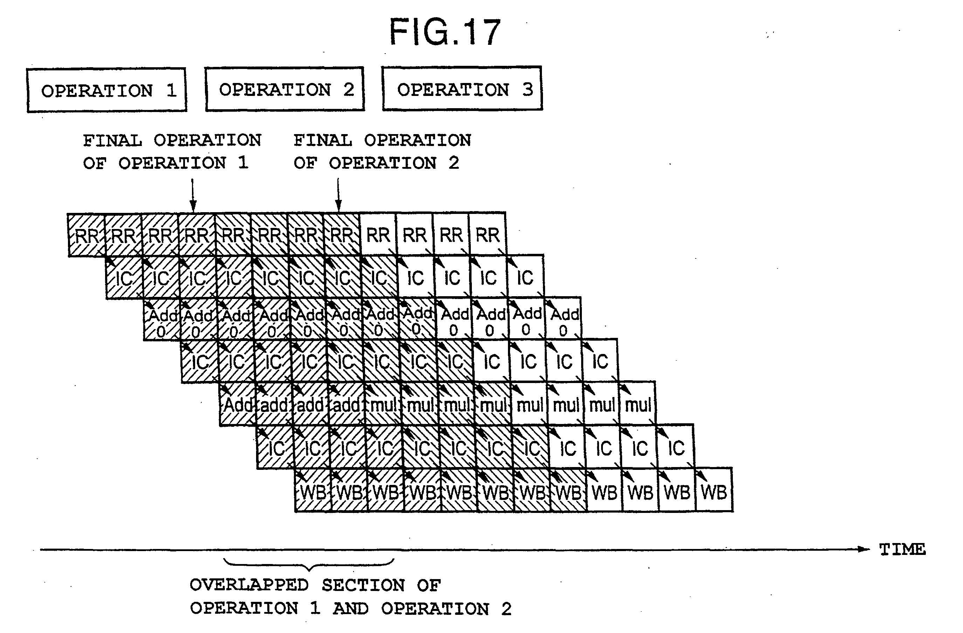

Next, an explanation will be given of a second method of realization of dynamic reconfiguration with reference to FIG. 17 to FIG. 19.

Method of Realization 2 of Dynamic Reconfiguration

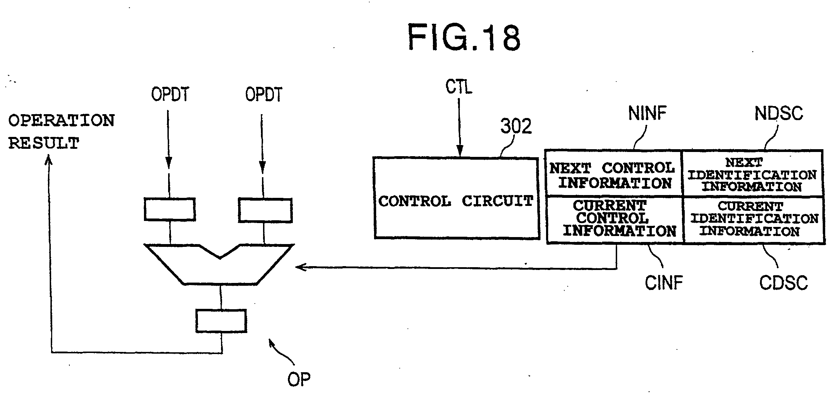

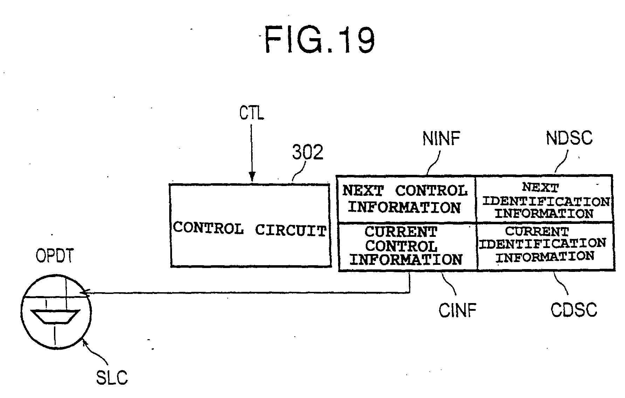

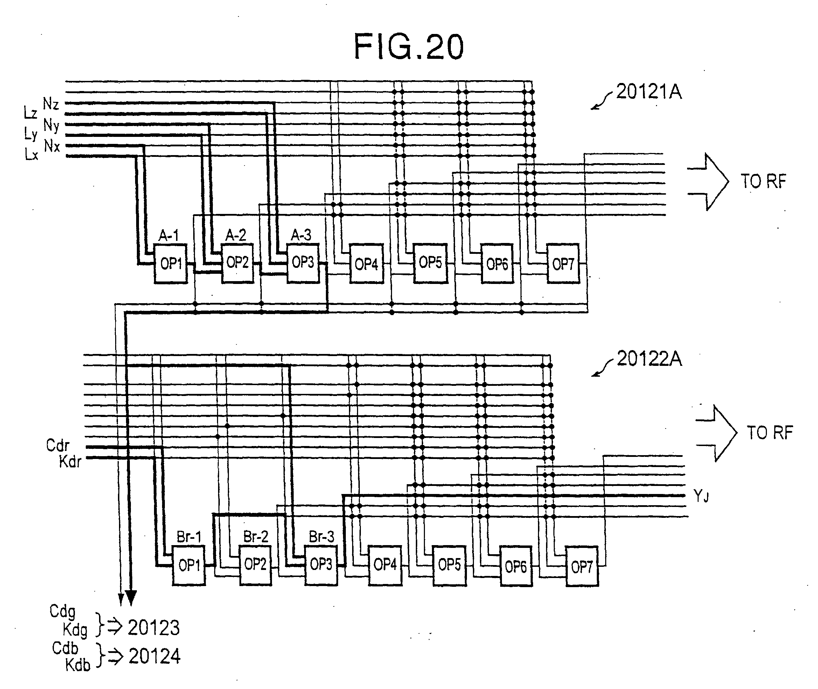

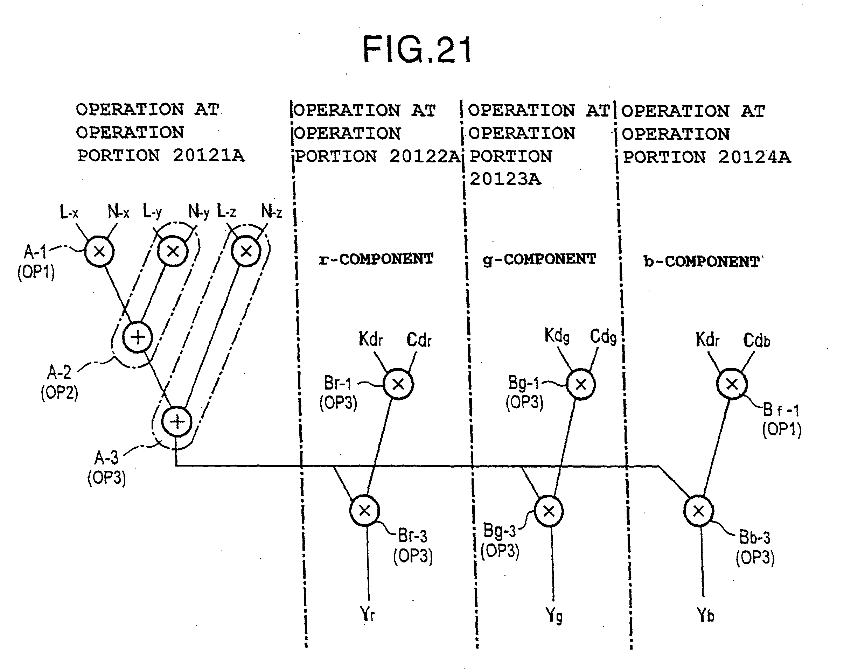

When different operation is continuously executed by using the arithmetical device comprised of the operation units (operation circuits) and the connection circuit network as explained above, as shown in FIG. 17, a section where the operation 1 and the operation 2 overlap in terms of time (overlapped section of operation 1 and operation 2) occurs.
During this time, data for different operation simultaneously exist on the operation circuit and the connection circuit network.
In this section, the final data of the operation 1 exists on the operation circuit, while control corresponding to the operation 2 is carried out in one part of the circuit.
For this reason, when the final data of the operation 1 reaches the operation unit which is now performing the operation 2 or the connection network control circuit which is now performing control corresponding to the operation 2, there is a possibility that it will be identified as the end of the operation, and the control with respect to the operation 2 will be switched to control with respect to the operation 3, that is, the operation with respect to the following remaining operation 2 will not be normally carried but.
An example of realization of the dynamic reconfiguration handling this will be explained later.
In this case, as shown in FIG. 18, the control circuit 302 for each operation unit OP holds the control information at present (current control information) CIFM, the information for identifying the operation being executed at present (current identification information) CDSC, the information concerning the control to be performed next (next control information) NIFM, and the information for identifying the operation to be executed next (next identification information) NDSC.
The operation data OPDT is sent in synchronization with the control signal CTL indicating information able to identify that the operation data is the final data used for the operation and information able to identify whether the operation data is with respect to the operation 1 or with respect to the operation 2.
When it is identified that the sent data is the final data and for the operation indicated by the current identification information CDSC, the control circuit 302 rewrites the current control information CIFM and the current identification information CDSC by the next control information NIFM and the next identification information NDSC simultaneously with the completion of the operation being executed at present.
By this, it becomes possible to switch to the different operation at a suitable timing for data being continuously input.
The same applies concerning the connection circuit network CCN. As shown in FIG. 19, simultaneously with the completion of the data transfer being executed at present, the current control information CIFM and the current identification information CDSC are rewritten by the next control information NIFM and the next identification information NDSC.
By this, it becomes possible to switch to a different electrical connection at a suitable timing for data being continuously input.
Next, an explanation will be given of the case where the contribution component to the pixel color by diffusion is actually formed in the arithmetical device 201 according to the present invention with reference to FIG. 20 and FIG. 21.
FIG. 20 is a view of a mapping of the operation unit pool 2012 configured connecting three operation portions 20122 to 20124 in parallel by signal lines different from the data buses BS to the operation portion 20121 in the arithmetical device 201.
The difference of the operation portions 20121A and 20122A from FIG. 5 resides in that the output of the operation unit of the former stage is directly input to the input of the operation unit of the next stage. In this example, the operation units OP2 to OP7 of the operation processing portions 20121A and 20122B have 3-input, 1-output configurations.
Note that, in FIG. 20, for simplification of the figure, the operation portions 20123 and 20124 are omitted.
FIG. 21 is a view of the data flow for calculation of the diffused light component.
Here, the following calculation is carried out:

$$Y| = (|L \cdot N|) \times |Kd \times |Cd \qquad (2)$$

Here, |Cd represents a vector value representing the color of the diffused light; |Kd represents a vector value representing the refractive index; |L represents a vector indicating the incident direction of the diffused light; and N| represents a normal vector of the pixel to be drawn.

<1> Example of Scalar Value x Vector Value

In the above Equation (2), (|L·N|) is the inner product of vectors |L and N|, that is, a scalar value found by the

following equation:

$$(|L\cdot N|) = |Lx \times N|x + |Ly \times N|y + |Lz \times N|z \quad (3)$$

This value is found by multiplication with each of the products for every color component of |Kd, |Cd.

When setting (|L·N|) as D, the diffused color component is calculated by the operation portions 20122 to 20124 for the three primary colors RGB (rgb) of the color.

$$Y|r = D \times (|Kdr \times |Cdr)$$

$$Y|g = D \times (|Kdg \times |Cdg)$$

$$Y|b = D \times (|Kdb \times |Cdb)$$

In the above example, the operation is carried out by using three operation units OP1 to OP3 of the first to third stages of the operation portions 20121A to 20124A. In FIG. 20, the lines indicated by the bold lines are the input/output paths of the data.

Specifically, in the operation portion 20121A, x-components Lx and Nx of L and N are input to the operation unit OP1 and multiplied, and the multiplication result Lx·Nx is input to the operation unit OP2. The operation unit OP2 receives as input the y-components Ly, Ny of L and N, multiplies them, adds the multiplication result Lx·Nx of the operation unit OP1 to this multiplication result Ly·Ny, and inputs the addition result (Lx·Nx+Ly·Ny) to the operation unit OP3. The operation unit OP3 receives the z-components Lz, Nz of L and N, multiplies them, adds the operation result (Lx· Nx+Ly·Ny) of the operation unit OP2 to the multiplication result Lz·Nz, outputs this addition result (Lx·Nx+Ly·Ny+Lz·Nz) to the other operation portions 20122A, 20123A, and 20124A, and inputs it to the operation unit OP3 of the operation portions 20122A, 20123A, and 20124A.

In the operation portion 20122A, the r-component Cdr of the color of the diffused light and the r-component Kdr of the refractive index are input to the operation unit OP1 and multiplied, and this multiplication result Cdr·Kdr is input to the operation unit OP3. The operation unit OP3 receives as input the output (Lx· Nx+Ly·Ny+Lz·Nz) of the operation unit OP3 of the operation portion 20121A, multiplies it with the output Cdr ·Kdr of the operation unit OP1 to produce the r-component Yr of the luminance Y, and outputs this to the register files 2011.

In the operation portion 20123A, the g-component Cdg of the color of the diffused light and the g-component Kdg of the refractive index are input to the operation unit OP1 and multiplied, and this multiplication result Cdg·Kdg is input to the operation unit OP3. The operation unit OP3 receives as input the output (Lx· Nx+Ly·Ny+Lz·Nz) of the operation unit OP3 of the operation processing portion 20121A, multiplies it with the output Cdg·Kdg of the operation unit OP1 to produce the g-component Yg of the luminance Y, and outputs this to the register files 2011.

In the operation portion 20124A, the b-component Cdb of the color of the diffused light and the b-component Kdb of the refractive index are input to the operation unit OP1 and multiplied, and this multiplication result Cdr·Kdr is input to the operation unit OP3. The operation unit OP3 receives as input the output (Lx· Nx+Ly·Ny+Lz·Nz) of the operation unit OP3 of the operation portion 20121A, multiplies it with the output Cdb·Kdb of the operation unit OP1 to produce the b-component Yb of the luminance Y, and outputs the result to the register files 2011.

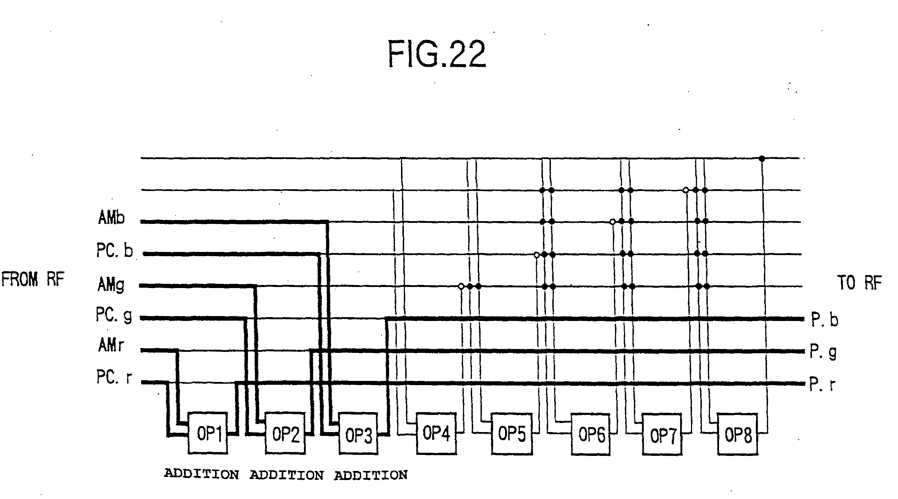

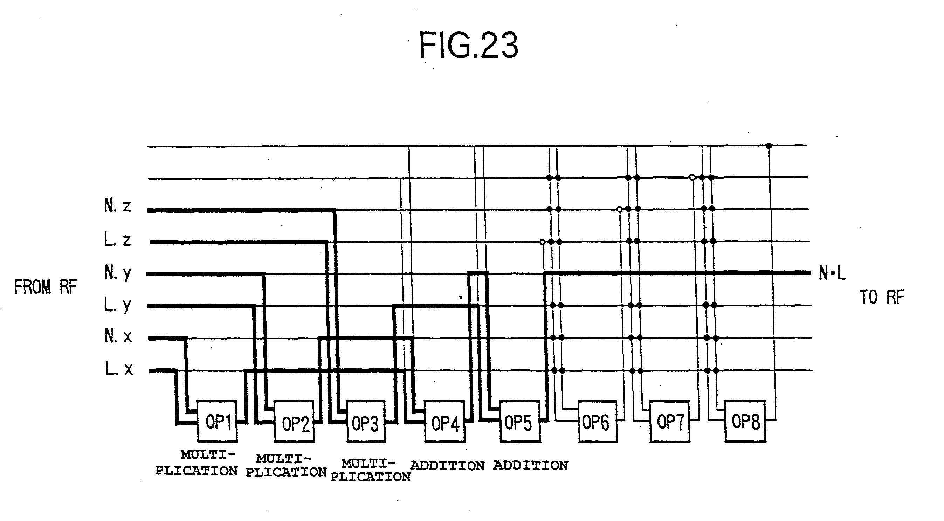

Next, an explanation will be given of the dynamic reconfiguration of the operation circuit in one connection circuit network with reference to FIG. 22 and FIG. 23.

Note that, here, an explanation will be given by taking the connection circuit network CCN of FIG. 8 as an example.

First, when producing the r-, g-, b-components Pr, Pg, Pb of primary colors, the selectors are controlled so that, from the register files 2011, the r-component PCr of the primary color and the r-component AMr of the ambient are input to the operation unit OP1, the g-component PCg of the primary color and the g-component AMg of the ambient are input to the operation unit OP2, the b-component PCb of the primary color and the b-component AMb of the ambient are input to the operation unit OP3, and the operation results of the operation units OP1, OP2, and OP3 are transferred to the register files 2011. Further, in the operation units OP1, OP2, and OP3, control is performed so that the two data are added.

Then, the operation unit OP1 adds the r-component PCr of the primary color and the r-component AMr of the ambient and transfers this addition result PCr+AMr as Pr to the register files 2011. Similarly, the operation unit OP2 adds the g-component PCg of the primary color and the g-component AMg of the ambient and transfers this addition result PCg+AMg as Pg to the register files 2011. The operation unit OP3 adds the b-component PCb of the primary color and the b-component AMb of the ambient and transfers this addition result PCb+AMb as Pb to the register files 2011.

Next, when finding the inner product of the vector L indicating the incident direction of the diffused light and the normal vector N of the pixel to be drawn, the selectors are controlled so that the x-components Lx and Nx of L and N are input to the operation unit OP1, the output of the operation unit OP1 is input to the operation unit OP4, the y-components Ly and Ny of L and N are input to the operation unit OP2, the output of the operation unit OP2 is input to the operation unit OP4, the z-components Lz and Nz of L and N are input to the operation unit OP3, the output of the operation unit OP3 is input to the operation unit OP5, the output of the operation unit OP4 is input to the operation unit OP5, and the output of the operation unit OP5 is transferred to the register files 2011. Further, in the operation units OP1, OP2, and OP3, control is performed so that the two input data are multiplied, while in the operation units OP4 and OP5, control is performed so that the two input data are added.

Then, the operation unit OP1 multiplies the x-components Lx and Nx of L and N and inputs the multiplication result Lx·Nx to the operation unit OP4. The operation unit OP2 multiplies the y-components Ly and Ny of L and N and inputs this multiplication result Ly· Ny to the operation unit OP4. The operation unit OP3 multiplies the z-components Lz and Nz of L and N and inputs this multiplication result Lz·Nz to the operation unit OP5. The operation unit OP4 adds the output Lx·Nx of the operation unit OP1 and the output Ly·Ny of the operation unit OP2 and inputs this operation result (Lx· Nx+Ly·Ny) to the operation unit OP5. The operation unit OP5 adds the output (Lx ·Nx+Ly·Ny) of the operation unit OP4 and the output Lx·Nz of the operation unit OP3 and transfers this addition result (Lx ·Nx+Ly·Ny+Lz·Nz) that is, the desired operation result N·L, to the register files 2011.

This concludes the explanation of the configuration and functions of the arithmetical device 201 according to the present invention.

Below, an explanation will be given of the functions of the DRAM 147, DDA set-up circuit 141, triangle DDA circuit 142, texture engine circuit 143, memory I/F circuit 144, CRT control circuit 145, and RAMDAC circuit 146 in order.

DRAM 147

The DRAM 147 acts as the texture buffer 147a, display buffer 147b, z-buffer 147c, and texture CLUT (color look up table) buffer 147d.

Further, the DRAM 147 is divided into a plurality of (four, eight, etc.) modules having the same functions.

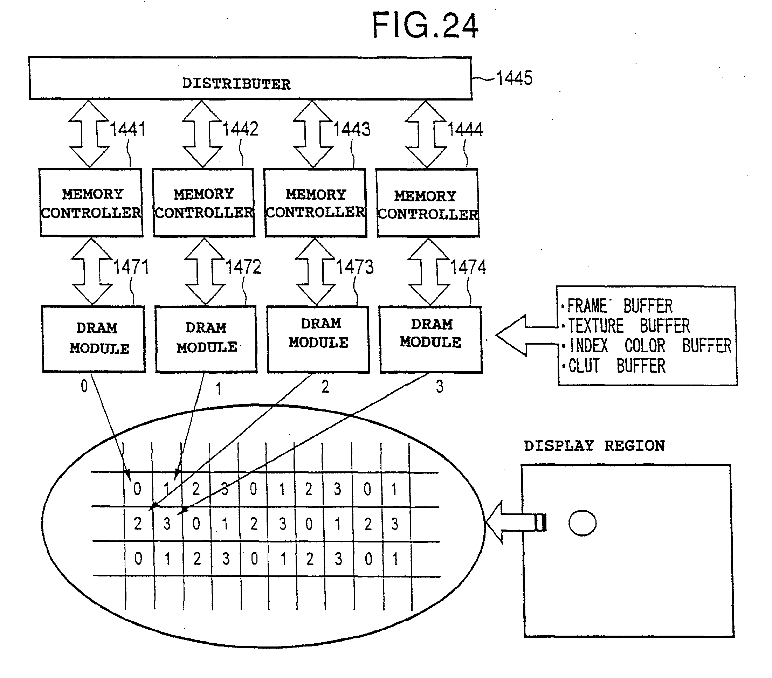

In the present embodiment, the DRAM 147 is divided into, for example, as shown in FIG. 24, four DRAM modules 1471 to 1474. Each of the DRAM modules 1471 to 1474 has for example 512 page addresses (row addresses).

The memory I/F circuit 144 is provided with memory controllers 1441 to 1444 corresponding to the DRAM modules 1471 to 1474 and a distributor 1445 for distributing the data to these memory controllers 1441 to 1444.

The memory I/F circuit 144 arranges the pixel data in the DRAM modules 1471 to 1474 so that the adjacent part in the display region is in a different DRAM module as shown in FIG. 24.

By this, it becomes possible to simultaneously process the data on a plane when drawing a plane like a triangle, so the probability of operation of each DRAM module becomes very high.

Further, the DRAM 147 stores indexes at the index colors and color look up table values for this in the texture CLUT buffer 147d in order to store more texture data.

The indexes and the color look up table values are used for the texture processing. Namely, usually, a texture element is usually expressed by 24 bits in total of R, G, B each consisting of 8 bits, but the amount of data swells due to this. Therefore, one color is selected from among for example 256 colors selected in advance, and the data thereof is used for the texture processing. Due to this, if there are 256 colors, each texture element can be expressed by 8 bits. A conversion table from the indexes to the actual colors becomes necessary, but the higher the resolution of the texture, the more compact the texture data can be made.

By this, compression of the texture data becomes possible, and efficient utilization of the built-in memory becomes possible.

Further, the DRAM 147 stores the depth information of the object to be drawn in order to perform the hidden plane processing simultaneously and parallel to the graphics drawing.

Note that, as the method of storage of the display data and depth data and texture data, the display data is continuously stored from the header of the memory block, next the depth data is stored, and then the texture data is stored in the remaining empty region in a continuous address space for every type of the texture. By this, the texture data can be efficiently stored.

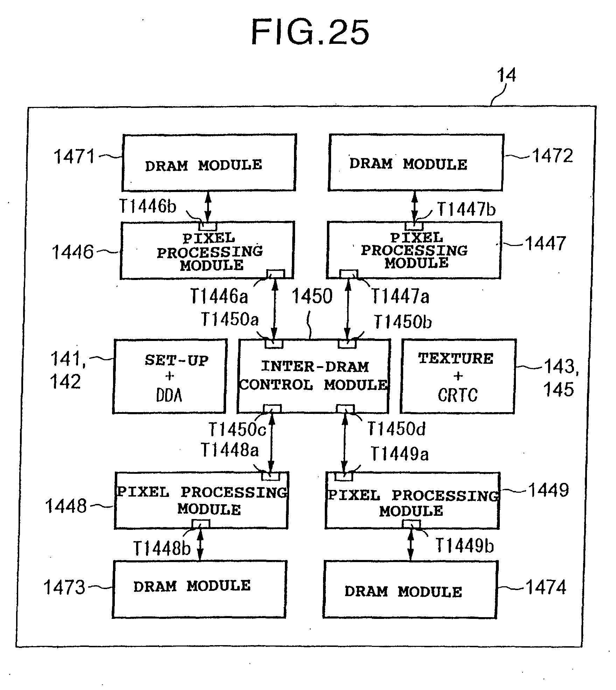

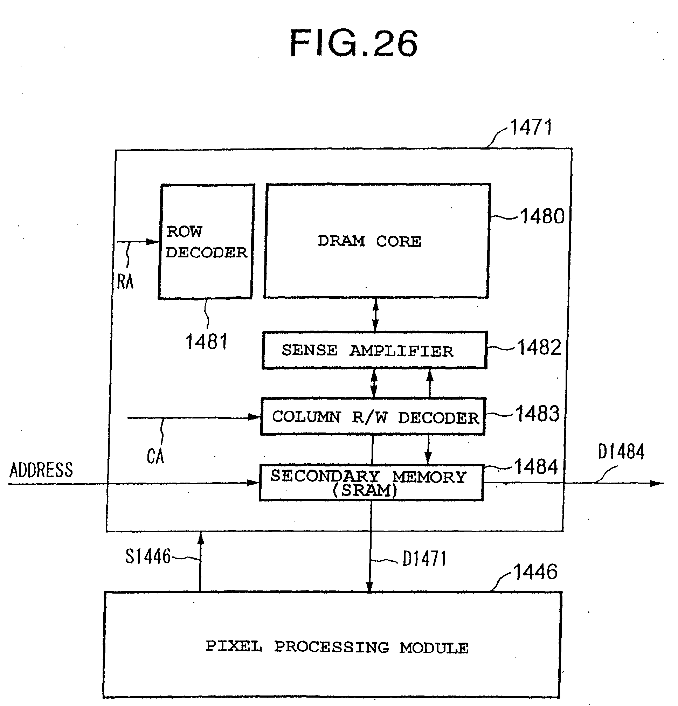

Below, an explanation will be given of the preferred configuration, arrangement, and interconnection method of the logic circuits of the rendering circuit 14 with the secondary memories comprised of the DRAM 147, SRAM 148, etc. provided on the same semiconductor chip according to the present embodiment with reference to FIG. 25 and FIG. 26.

As will be explained later, in the graphics drawing processing, everything finally boils down to access of individual pixels. Accordingly, ideally, individual processings of pixels are performed simultaneously in parallel to enable the graphics drawing performance to be increased by the number of the parallel processings.

For this purpose, the memory I/F circuit 144 configuring the memory system in the present three-dimensional computer graphics system is also configured to be able to perform simultaneous parallel processing.

In the graphics drawing processing, the operation circuit for performing the processing for writing the pixels etc. must frequently transfer data with a DRAM.

For this reason, in the present embodiment, as shown in FIG. 25, the pixel processing modules 1446, 1447, 1448, and 1449 of the functional blocks for controlling the pixel processing are physically separated from the memory controller. These pixel processing modules 1446, 1447, 1448, and 1449 are arranged near (arranged in proximity to) the corresponding DRAM modules 1471, 1472, 1473, and 1474.

The pixel processing modules 1446, 1447, 1448, and 1449 perform all of the read/modify/write processings of the (R, G, B) colors and the processing concerning the work of comparing the depth data previously drawn for the hidden plane processing with the depth of the data to be drawn from now on and rewriting the data according to the result thereof.

By performing all of these works by the pixel processing modules 1446, 1447, 1448, and 1449, transfer with the DRAM can be completed inside a module having a short interconnection length with the DRAM modules 1471, 1472, 1473, and 1474.

For this reason, even if the number of interconnections with the DRAM, that is, the number of bits of transfer, is large, the ratio of area occupied by the interconnections can be kept small, so improvement of the processing speed and a reduction of the interconnection area become possible.

Concerning the inter-DRAM control module 1450 including the distributor etc., in comparison with the DDA set-up operation of the DDA set-up circuit 141, triangle DDA operation of the triangle DDA circuit 142, texture application of the texture engine circuit 143, display processing by the CRT control circuit 145, etc. of the graphics drawing processing, it is strongly linked with the other DRAM modules (DRAM+pixel processing) and the number of the signal lines with the DRAM modules 1471, 1472, 1473, and 1474 becomes the largest.

For this reason, the inter-DRAM control module 1450 is arranged near the center of the DRAM modules 1471, 1472, 1473, and 1474 and consideration given so that the longest interconnection length becomes as short as possible.

Further, for the signal input/output terminals for the connection between the pixel processing modules 1446, 1447, 1448, and 1449 and the inter-DRAM control module 1450, as shown in FIG. 3, the input/output terminals in the pixel processing modules 1446, 1447, 1448, and 1449 are not made the same. The positions of the input/output terminals of the signals in the pixel processing modules are adjusted so that the individual pixel processing modules and the inter-DRAM control module 1450 are connected optimally (the shortest).

Specifically, the pixel processing module 1446 is formed with an input/output terminal T1446a at the right end side of a lower edge of the module in FIG. 25. Further, this input/output terminal T1446a is arranged so as to face an input/output terminal T1450a formed at a left end side of an upper edge of the inter-DRAM control module 1450, and the two terminals T1446a and T1450a are connected with the shortest distance.

Further, the pixel processing module 1446 is formed with an input/output terminal T1446b for connection with the DRAM module 1471 at the center of the upper edge in FIG. 25.

The pixel processing module 1447 is formed with an input/output terminal T1447a at the left end side of the lower edge of the module in FIG. 25. Further, this input/output terminal T1447a is arranged so as to face an input/output terminal T1450b formed on the right end side of the upper edge of the inter-DRAM control module 1450, and the two terminals T1447a and T1450b are connected with the shortest distance.

Further, in the pixel processing module 1447 is formed with an input/output terminal T1447b for connection with the DRAM module 1472 at the center of the upper edge in FIG. 25.

The pixel processing module 1448 is formed with an input/output terminal T1448a at the right end side of the upper edge of the module in FIG. 25. Then, this input/output terminal T1448a is arranged so as to face an input/output terminal T1450c formed at the left end side of the lower edge of the inter-DRAM control module 1450, and the two terminals T1448a and T1450c are connected with the shortest distance.

Then, the pixel processing module 1448 is formed with an input/output terminal T1448b for connection with the DRAM module 1473 at the center of the lower edge in FIG. 25.

The pixel processing module 1449 is formed with an input/output terminal T1449a at the left end side of the upper edge of the module in FIG. 25. Further, this input/output terminal T1449a is arranged so as to face an input/output terminal T1450d formed at the right end side of the lower edge of the inter-DRAM control module 1450, and the two terminals T1449a and T1450d are connected with the shortest distance.

Further, the pixel processing module 1449 is formed with an input/output terminal T1449b for connection with the DRAM module 1474 at the center of the lower edge in FIG. 25.

Note that, for processing for which the requested processing speed cannot be satisfied even if the path from the DRAM modules 1471, 1472, 1473, and 1474 to the inter-DRAM control module 1450 is made the optimum length as described above, the pixel processing modules 1446, 1447, 1448, and 1449 are configured so as to be able to handle at least one stage of pipeline processing divided by for example registers and thereby able to achieve the desired processing speed.

Further, the DRAM modules 1471 to 1474 according to the present embodiment are configured as shown in for example FIG. 26. Note that, here, an explanation will be given by taking the DRAM module 1471 as an example, but the other DRAM modules 1472 to 1474 have similar configurations, so explanations thereof will be omitted.

The DRAM module 1471, as shown in FIG. 26, has a DRAM core 1480 comprised of memory cells arranged in a matrix and accessed through not illustrated word lines and bit lines selected based on a row address RA and a column address CA, a row decoder 1481, a sense amplifier 1482, a column R/W decoder 1483, and a secondary memory 1484 having a similar function to that of a so-called cache memory comprised of a SRAM or the like.

As in the present embodiment, for every DRAM module, pixel processing modules 1446 to 1449 serving as the functional blocks for controlling the pixel processing in the graphics drawing and a secondary memory 1484 of the DRAM module are arranged close to the DRAM module.

Further, in this case, they are arranged so that the so-called long side direction of the DRAM becomes the column direction of the DRAM core 1480.

When looking at the random read operation in the configuration of FIG. 26, a control signal and a required address signal S1446 are supplied from the pixel processing module 1446 to the DRAM module 1471 from the address control path, the row address RA and the column address CA are generated based on this, and the data of the DRAM corresponding to the desired row is read through the sense amplifier 1482.

The data passing through the sense amplifier 1482 is condensed to the necessary column by the column decoder according to the desired column address CA, then the data D1471 of the DRAM corresponding to the desired row/column is transferred from the random access port to the pixel processing module 1446 via the path.

When writing data into the secondary memory, the control signal and the required address signal S1446 are supplied from the pixel processing module 1446 to the DRAM module 1471 from the address control path, only the row address is generated based on this, and one row's worth of data is written all together from the DRAM to the secondary memory 1484 comprised of the SRAM 148 etc.

In this case, since the DRAM is arranged so that its so-called long side direction becomes the column direction of the DRAM core 1480, in comparison with a case where it is arranged in the row direction, by just designating the row address, the number of bits which can be loaded when loading one row's worth of data corresponding to that row address into the secondary memory 1484 at one time greatly increases.

Further, when reading the data D1484 from the secondary memory (SRAM) 1484 into the texture engine circuit 143 serving as the texture processing module, the control signal and the required address signal are supplied from the texture engine circuit 143 to the DRAM from the address control path, and the data D1484 corresponding to that is transferred via the data path to the texture engine circuit 143.

Further, in the present embodiment, as shown in FIG. 26, the pixel processing module and the secondary memory of the DRAM module are arranged on the same side of the long side of the DRAM module close to each other.

By this, the data of the pixel processing module and the DRAM module to the secondary memory can be routed using the same sense amplifier, so it becomes possible to keep the increase in area of the DRAM core 1480 to the lowest limit and just provide two ports.

Memory I/F Circuit 144

The memory I/F circuit 144 compares the z-data corresponding to the pixel data S143 input from the texture engine circuit 143 with the z-data stored in the z-buffer 147c, judges whether or not the image drawn by the input pixel data S143 is positioned closer (to the viewing point) than the image written in the display buffer 147b the previous time, and, when judging that it is positioned closer, updates the z-data stored in the z-buffer 147c by the z-data corresponding to the image data S143.

Further, the memory I/F circuit 144 writes (enters) the (R, G, B) data to the display buffer 147b.

Note that, the memory I/F circuit 144 accesses the DRAM 147 for 16 pixels simultaneously.

DDA Set-up Circuit 141

Before the later stage triangle DDA circuit 142 linearly interpolates the values of the vertexes of a triangle in the physical coordinate system to obtain information of the color and depth of pixels inside the triangle, the DDA set-up circuit 141 performs set-up operation for obtaining the difference with a side of the triangle in the horizontal direction etc. for the data (z, R, G, B, s, t, q, $\alpha$, F) indicated by the polygon rendering data S11.

Specifically, this set-up operation uses values of a start point and an end point and the distance between the start point and end point to calculate the change of values being sought in the case of movement by a unit length.

The DDA set-up circuit 141 outputs the calculated change data S141 to the triangle DDA circuit 142.

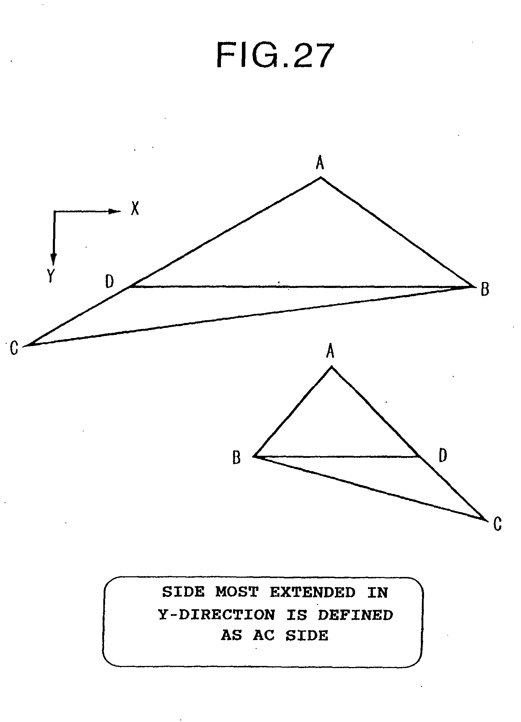

The functions of the DDA set-up circuit 141 will be further explained with reference to FIG. 27. As explained above, the main processing of the DDA set-up circuit 141 is to find the change inside a triangle comprised of three given vertexes for various information (color and texture coordinates) at the vertexes after the prior stage geometry processing and settling down to physical coordinates and to calculate the basic data of the later stage linear interpolation.

Note that the vertex data of a triangle is, for example, comprised of x, y coordinates of 16 bits, a z-coordinate of 24 bits, RGB color values of 12 bits (= 8+4), and s, t, q texture coordinates of 32-bit floating decimal values (IEEE format).

A triangle is drawn by drawing horizontal lines, but it is necessary to find the first values at the start point of the drawing of the horizontal lines for this purpose.

In drawing a horizontal line, the drawing direction is made constant in one triangle. For example, when drawing from left to right, X and the above various changes are calculated with respect to the Y-directional displacement at the left side and these used to find the x-coordinate of the leftmost point when moving from a vertex to the next horizontal line and the values of the above various information (the point on the side changes in both of the Y- and X-directions, so the calculation cannot be carried out by only the inclination of the Y-direction).

For the right side, it is sufficient to know the position of the end point, so it is sufficient to investigate only the change of x with respect to the Y-directional displacement.

When drawing a horizontal line, the inclination of the horizontal direction is uniform inside the same triangle, so the inclinations of the above various information are calculated.

The given triangle is sorted in the Y-direction and the uppermost point is defined as A. Next, the positions in the X-direction of the remaining two vertexes are compared and the point on the right side is defined as B. By doing this, the branching of the processing can be kept to just two ways.

Triangle DDA Circuit 142

The triangle DDA circuit 142 uses the change data S141 input from the DDA set-up circuit 141 to calculate the linearly interpolated (z, R, G, B, s, t, q, $\alpha$, F) data for each pixel inside the triangle.

The triangle DDA circuit 11 outputs the data (x, y) for each pixel and the (z, R, G, B, s, t, q, $\alpha$, F) data at the (x, y) coordinates to the texture engine circuit 143 as the DDA data (interpolated data) S142.

For example, the triangle DDA circuit 142 outputs the DDA data S142 of the 8 (= 2 x 4) pixels positioned inside a block being processed in parallel to the texture engine circuit 143.

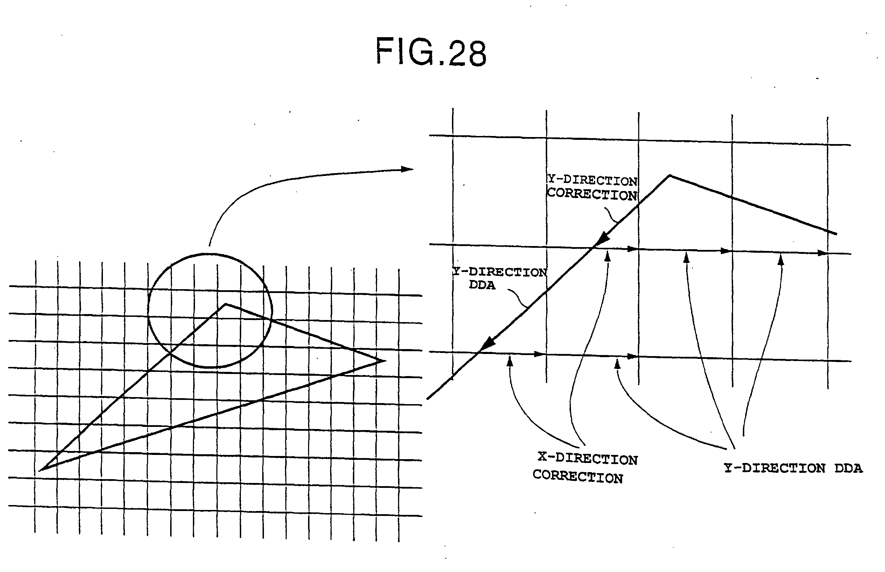

The functions of the triangle DDA circuit 142 will be further explained with reference to FIG. 28.

As explained above, the DDA set-up circuit 141 prepares the above inclination information of various information at the sides of the triangle and the horizontal direction. The basic processing of the triangle DDA circuit 142 receiving this information consists of the calculation of the initial value of a horizontal line by interpolation of various information on the sides of the triangle and interpolation of various information on the horizontal line.

What should noted most here is that calculation of the interpolation result requires calculation of the values at the center of a pixel.

The reason for this is that if the values to be calculated are found for a position away from the center of a pixel, while not that noticeable in the case of a still image, in the case of a moving picture, flickering of the image becomes noticeable.

Various information on the leftmost side of a first horizontal line (line naturally connecting the pixel centers) can be found by multiplying the inclinations on the sides by distances up to the first horizontal line.

The various information at the start position on the next line can be calculated by adding the inclinations on the sides.

The values of the first pixel in the horizontal line can be calculated by adding the values obtained by multiplying the distance up to the first pixel and the inclination in the horizontal direction to the values at the start position of the line. The values at the next pixel in the horizontal line can be calculated by adding the inclinations in the horizontal direction one after another with respect to the values of the first pixel.

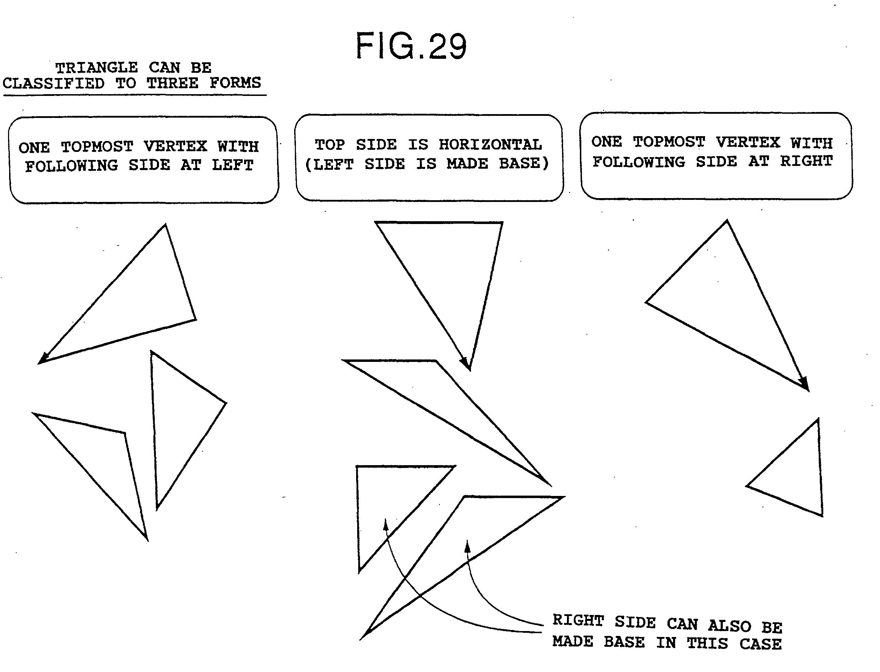

Next, an explanation will be given of the sorting of the vertexes with reference to FIG. 29.

By sorting the vertexes in advance, the branching of the following processing can be reduced to the minimum and in interpolation as well, contradictions can be prevented from occurring as much as possible inside one triangle.

As the method of sorting, first, all of the given vertexes are sorted in the Y-direction, then the topmost point and the bottommost point are determined and defined as the A point and the C point. The remaining point is defined as the B points.

By doing this, the side extending longest in the Y-direction becomes a side AC. First, the side AC and side AB are used for interpolation of the region sandwiched between these two sides, then, leaving the side AC as it is and replacing the side AB, interpolation of the region sandwiched between the side BC and the side AC is performed. Further, it will be understood that correction in the Y-direction on the pixel coordinate lattice may be carried out for the side AC and the side BC.

By doing this, branching becomes unnecessary for the processing after sorting, so processing simply passing the data becomes possible, bugs become hard to occur, and also structure becomes simple.

Further, since the direction of interpolation can be made constant in one triangle by using a point on the side BC as the start point, the direction of interpolation (span) in the horizontal direction becomes constant. Even if there is processing error, the error is accumulated from the side BC toward the other side. Since the direction of the accumulation becomes constant, the error between adjacent sides becomes unnoticeable.

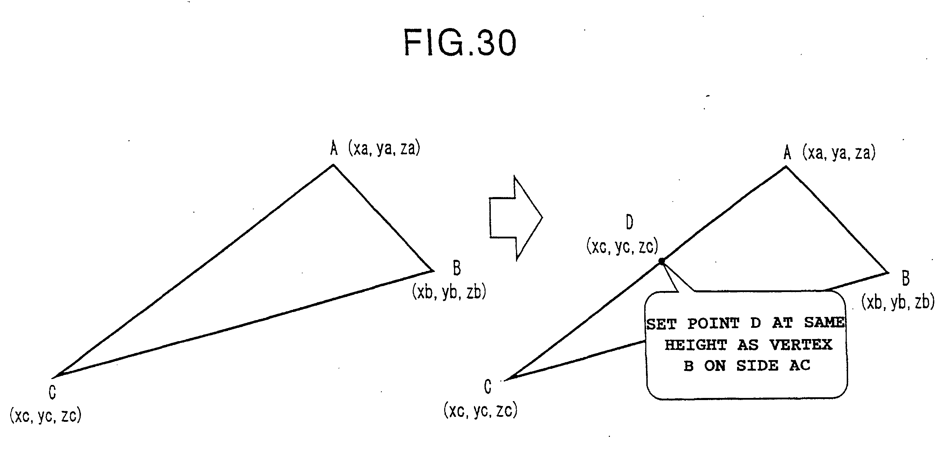

Next, an explanation will be given of the calculation of inclination of the horizontal direction with reference to FIG. 30.

The inclinations (changes) of various changes (x, z, R, G, B, s, t, q) with respect to (x, y) inside a triangle become constant because of the linear interpolation.

Accordingly, the inclination in the horizontal direction, that is, the inclination on each horizontal line (span) becomes constant in any span, therefore the inclination is found preceding the processing of each span.

As a result of sorting the given vertexes of a triangle in the Y-direction, the side AC is defined as the side extending longest, therefore there is always an intersecting point of the line obtained by extending the vertex B in the horizontal direction with the side AC. That point is defined as D.

If next simply finding the change between the point B and the point D, the inclination in the horizontal direction, that is, the x-direction, can be found.

Specifically, the x- and z-coordinates at the D point become as in the following equations:

$$X_d = \{ (y_d - y_a) / (y_c - y_a) \} \cdot (x_c - x_a)$$

$$Z_d = \{ (y_d - y_a) / (y_c - y_a) \} \cdot (z_c - z_a)$$

If finding the inclination of the variable z in the x-direction based on this, the following is obtained:

$$\begin{aligned}
\Delta z/\Delta x &= (z_d - z_b) / (x_d - x_b) \\
&= [\{ (y_d - y_a) / (y_c - y_a) \} \cdot (z_c - z_a) - z_b] \\
&\quad / [\{ (y_d - y_a) / (y_c - y_a) \} \cdot (x_c - x_a) - x_b] \\
&= \{ z_b (y_c - y_a) - (z_c - z_a) (y_c - y_a) \} \\
&\quad / \{ x_b (y_c - y_a) - (z_c - z_a) (y_c - y_a) \}
\end{aligned}$$

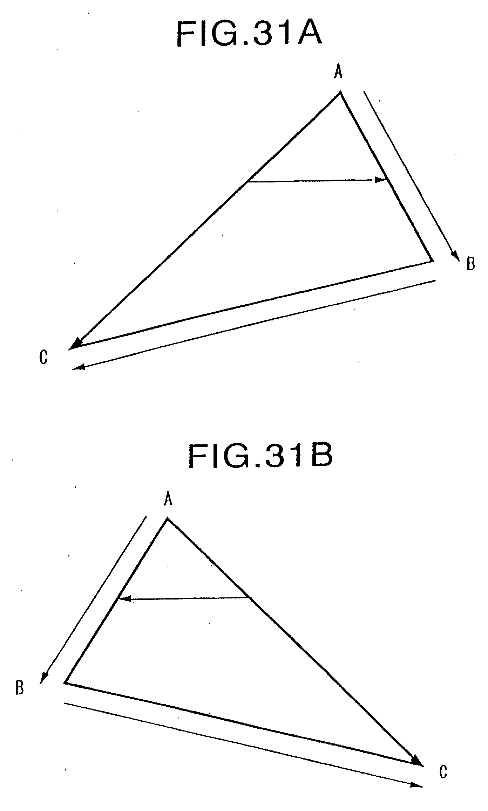

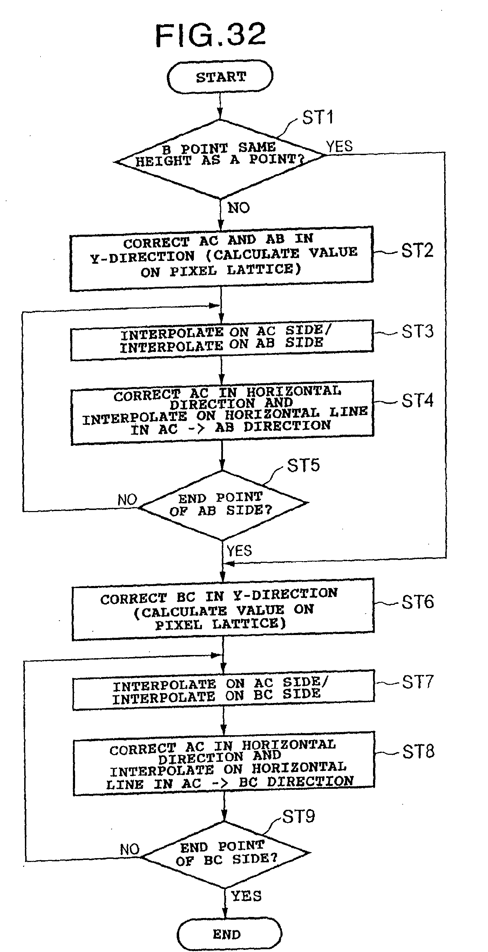

Next, an explanation will be given of an example of the interpolation routine for vertex data with reference to FIGS. 31A and 31B and FIG. 32B.

After the sorting of vertexes, calculation of inclination in the horizontal direction, and calculation of the inclinations on the sides, the results are used for interpolation.

According to the position of the B point, the direction of the processing in a span is divided into two. This is because to make the direction of accumulation of error between spans in interpolation inside one triangle is constant so as to prevent problems from occurring as much as possible, the processing is carried out using the side extending longest in the Y-direction as the start point.

When the B point is located at the same height as the A point, the first half of the processing is skipped. Accordingly, rather than branching, by just providing a mechanism enabling skipping, the processing can be streamlined.

Where it is desired to raise the processing capability by simultaneously processing a plurality of spans, it becomes desirable to find the inclination in the Y-direction, but this requires redoing the processing from the sorting of vertexes. However, only preprocessing of the interpolation is sufficient, so the processing system as a whole can be simplified.

Specifically, when the B point is not at the same height as the A point, the Y-directional correction of AC and AB (calculation of values on the pixel lattice) is carried out (ST1, ST2), and then the interpolation on the AC side and interpolation on the AB side are performed (ST3).

Then, the correction of the AC horizontal direction and the interpolation on the horizontal line (span) from the AC side to the AB side direction are carried out (ST4).

The processings of the above steps ST3 and ST4 are carried out up to the end point of the AB side (ST5).

When the processings of steps ST2 to ST4 end at the end point of the AB side or when it is judged at step ST1 that the B point is at the same height as the A point, the Y-directional correction of BC (calculation of values on the pixel lattice) is carried out (ST6) and the interpolation on the AC side and the interpolation on the BC side are carried out (ST7).

Then, the correction in the AC horizontal direction and the interpolation on the horizontal line (span) from the AC side to the BC side direction are performed (ST8).

The processings of the above steps ST7 and ST8 are carried out up to the end point of the BC side (ST9).

Texture Engine Circuit 143

The texture engine circuit 143 calculates the 's/q' and 't/q', calculates the texture coordinate data (u, v), and reads the (R, G, B) data from the texture buffer 147a in a pipeline format.

Note that the texture engine circuit 143 for example performs processing on eight pixels positioned inside a predetermined block simultaneously in parallel.

The texture engine circuit 143 performs the operation for dividing the data s by the data q and the operation for dividing the data t by the data q on the (s, t, q) data indicated by the DDA data S142.

The texture engine circuit 143 is provided with, for example, eight division circuits, not illustrated, and performs the division 's/q' and 't/q' simultaneously on the eight pixels.

Further, the texture engine circuit 143 multiplies the texture sizes USIZE and VSIZE with the division results 's/q' and 't/q' to generate the texture coordinate data (u, v).

Further, the texture engine circuit 143 outputs a read request including the generated texture coordinate data (u, v) to the SRAM 148 or DRAM 147 via the memory I/F circuit 144. The texture engine circuit 143 obtains the (R, G, B) data S148 stored at the texture address corresponding to the (s, t) data by reading the texture data stored in the SRAM 148 or in the texture buffer 147a via the memory I/F circuit 144.

Here, the texture data stored in the texture buffer 147a is stored in the SRAM 148 as explained above.

The texture engine circuit 143 generates pixel data S143 by combining etc. the (R, G, B) data in the read (R, G, B) data S148 and the (R, G, B) data included in the DDA data S142 from the former triangle DDA circuit 142.

The texture engine circuit 143 outputs this pixel data S143 to the memory I/F circuit 144.

Note that the texture buffer 147a stores MIPMAP (texture for a plurality of resolutions) and other texture data corresponding to a plurality of reducing rates. Here, which reducing rate texture data to use is determined in the above triangular units using a predetermined algorithm.

In the case of a full color mode, the texture engine circuit 143 directly uses the (R, G, B) data read from the texture buffer 147a.

On the other hand, in the case of an index color mode, the texture engine circuit 143 reads a color look-up table (CLUT), prepared in advance, from the texture CLUT buffer 147d, transfers and stores the same in the built-in SRAM, and uses the color look-up table to obtain the (R, G, B) data corresponding to the color index read from the texture buffer 147a.

CRT Control Circuit 145

The CRT control circuit 145 generates an address for display on a not shown CRT in synchronization with given horizontal and vertical synchronization signals and outputs a request for reading the display data from the display buffer 147b to the memory I/F circuit 144. In response to this request, the memory I/F circuit 144 reads a certain amount of the display data from the display buffer 147b. The CRT controller circuit 145 has a built-in FIFO (first-in first-out) circuit for storing the display data read from the display buffer 147b and outputs the index value of RGB to the RAMDAC circuit 146 at certain time intervals.

RAMDAC Circuit 146

The RAMDAC circuit 146 stores the R, G, B data corresponding to the index values. It transfers R, G, B data of a digital format corresponding to the index values of RGB input from the CRT controller circuit 145 to a not illustrated D/A converter (digital/analog converter) and produces the R, G, B data of analog format. The RAMDAC circuit 146 outputs these produced R, G, B data to the not illustrated CRT.

Next, an explanation will be given of the processing of the overall three-dimensional computer graphics system of FIG. 2.

In the three-dimensional computer graphics system 10, graphics drawing and other data is given from the main memory 12 of the main processor 11 or the I/O interface circuit 13 for receiving the graphics data from the outside via the main bus 15 to the rendering circuit 14.

Note that, the graphics drawing and other data is, in accordance with need, subjected to coordinate conversion, clipping, lighting, and other geometric processing in the main processor 11 etc.

The graphics data after the geometric processing becomes polygon rendering data S11 composed of the coordinates x, y, z of the three vertexes of a triangle, the luminance values R, G, B, and the texture coordinates s, t, q corresponding to the pixel to be drawn.

The polygon rendering data S11 is input to the DDA set-up circuit 141 of the rendering circuit 14.

In the DDA set-up circuit 141, change data S141 indicating the difference from a side of the triangle from a horizontal direction etc. is generated based on the polygon rendering data S11. Specifically, the change, that is, the amount of change of the values to be obtained in the case of movement by a unit length, is calculated by using the value of the start point, the value of the end point, and the distance between the two and output to the triangle DDA circuit 142 as change data S141.

In the triangle DDA circuit 142, the change data S141 is used for calculation of the linearly interpolated data (z, R, G, B, s, t, q, $\alpha$, F) of each of the pixels inside the triangle.

Then, the calculated (z, R, G, B, s, t, q, $\alpha$, F) data and the (x, y) data of each of the vertexes of the triangle are output from the triangle DDA circuit 142 to the texture engine circuit 143 as DDA data S142.

In the texture engine circuit 143, the operation for dividing the data s by the data q and the operation for dividing the data t by data q are performed for the (s, t, q) data indicated by the DDA data S142. Then, the texture sizes USIZE and VSIZE are multiplied with the division results 's/q' and 't/q' to generate the texture coordinate data (u, v).

Next, a read request including the generated texture coordinate data (u, v) is output from the texture engine circuit 143 to the SRAM 148 via the memory I/O circuit 144, and the (R, G, B) data S148 stored in the SRAM 148 is read via the memory I/F circuit 144.

Next, in the texture engine circuit 143, the (R, G, B) data in the read (R, G, B) data S148 and the (R, G, B) data included in the DDA data S142 from the triangle DDA circuit 142 in the former stage are combined to generate the pixel data S143.

This pixel data S143 is output from the texture engine circuit 143 to the memory I/F circuit 144.

In the case of a full color mode, the (R, G, B) data read from the texture buffer 147a can be directly used, while in the case of an index color mode, data in the color look-up table (GLUT), prepared in advance, is transferred from the texture GLUT buffer 147d to a buffer for temporary storage, which is configured by an SRAM etc. By using the GLUT of the temporary storage buffer, the actual R, G, B colors can be obtained from the color index.

Note that where the CLUT is configured by an SRAM, when a color index is input to an address of the SRAM, the actual R, G, B colors are output.

Then, in the memory I/F circuit 144, the z-data corresponding to the pixel data S143 input from the texture engine circuit 143 and the z-data stored in the z-buffer 147c are compared for judging whether or not the image drawn by the input pixel data S143 is positioned closer (to the viewing point) than the image written in the display buffer 147b the previous time.

When it is judged that the image is positioned closer, the z-data stored in the z-buffer 147c is replaced by the z-data corresponding to the image data S143.

Next, in the memory I/F circuit 144, the (R, G, B) data is written in the display buffer 147b.

In the memory I/F circuit 144, the memory block storing the texture corresponding to the texture address of the pixel to be drawn is calculated from the texture address, a read request is made only to the memory block, and the texture data is read.

In this case, since there is no access for reading texture in memory blocks which do not store the corresponding texture data, it is possible to provide more time for access for drawing.

In the same way for drawing, a memory block storing pixel data corresponding to a pixel address to be generated is accessed to read the pixel data from the corresponding address for modify writing, the data is modified, then is written back to the same address.

When performing hidden plane processing, again in the same way, a memory block storing depth data corresponding to a pixel address to be generated is accessed to read the depth data from the corresponding address for modify writing, the data is modified if necessary, then is written back to the same address.

In such transfer of data with the DRAM 147 based on the memory I/F circuit 144, the plurality of processings up to there are performed in parallel. Due to this, the drawing performance can be improved.

Especially, a plurality of pixels can be simultaneously calculated by the means of partially increasing the operating frequency by providing the triangle DDA circuit 142 and the texture engine 143 portions in the same circuit in a parallel execution mode (spatial parallel) or by inserting a lot of pipelines (time parallel).

Further, the pixel data is arranged so that the adjacent portions in the display region are in different modules under the control of the memory I/F circuit 144.

Due to this, the processing is simultaneously carried out on a plane when generating a plane such as a triangle. Therefore, the probability of operation of the DRAM modules is quite high.

Then, when displaying an image on a not illustrated CRT, the CRT control circuit 145 generates the display address in synchronization with the given horizontal and vertical frequencies and sends a request for transferring the display data to the memory I/F circuit 144.

The memory I/F circuit 144, in accordance with the request, transfers a certain amount of the display data to the CRT control circuit 145.

The CRT control circuit 145 stores the display data in a not illustrated display use FIFO (first-in first-out) etc. and transfers index values of RGB to the RAMDAC circuit 146 at certain intervals.

The RAMDAC circuit 146 stores the RGB values with respect to RGB indexes inside the RAM and transfers the RGB values with respect to the index values to the not illustrated D/A converter.

Then, the RGB signals converted to the analog signals at the D/A converter are transferred to the CRT.

As explained above, according to the present first embodiment, provision is made of an arithmetical device 201 having the register files (RF) 2011 and the operation unit pool 2012, wherein the operation unit pool 2012 has at least one operation portion 20121 to 20124 for transferring data with the register files 2011 by data buses BS, and each of the operation portions 20121 to 20124 includes a plurality of operation units (adders, multipliers, multipliers/adders, etc.) OP1 to OP8 and a connection circuit network CCN between the register files 2011 and the operation units OP able to change the electrical connection among the operation units OP1 to OP8, therefore various operation can be handled, operation methods which were not envisioned at the point of time of development can be easily handled, and then, in the three-dimensional graphics, and a sufficient drawing capability can be exhibited for real time drawing.

Further, the plurality of divided DRAM modules 1471 to 1474 are arranged at the periphery of the logic circuit portion for the graphics drawing processing etc., therefore, in comparison with the case where they must be simultaneously accessed, the ratio of valid data occupying a bit line by one access increases, the distance from the DRAM modules 1471 to 1474 to the logic circuit portion becomes uniform, and the length of the longest path interconnection can be shortened in comparison with the case where they are all arranged in one direction. For this reason, there is the advantage that the processing speed as a whole can be improved.

Further, the pixel processing modules 1446 to 1449 serving as the functional blocks for controlling the pixel processing in the graphics drawing are closely arranged at the DRAM modules 1471 to 1474, so the read/modify/write processing which is frequently carried out in the graphics drawing becomes possible in a very short interconnection region. For this reason, the processing speed can be rapidly improved.

Further, the pixel processing modules and the secondary memories of the DRAM modules are arranged on the same side on the long side of the DRAM modules close to each other, therefore even if data is transferred from the pixel processing modules to the secondary memories over a path having a very wide width, there is little influence of so-called cross talk. Since the interconnection length is naturally short, the processing speed is improved. Also, the area occupied by the interconnections becomes small.

Further, the same sense amplifiers can be used for data to the pixel processing modules and to the secondary memories. For this reason, it becomes possible to form ports while keeping the increase of area of the DRAM core to a minimum.

Further, the pixel processing modules 1446 to 1449 perform at least one stage of pipeline control internally, so even if the distance up to the block arranged at the center for performing other graphics drawing processing becomes long in average, this can be prevented from influencing the through-put for processing the data, so the processing speed is improved.

Further, since the display data and the texture data required by at least one graphic element are stored in the DRAM 147 built-in the semiconductor chip, the texture data can be stored in a portion other than the display region, effective utilization of the built-in DRAM becomes possible, and it becomes possible to realize an image processing apparatus achieving both high speed processing and a reduction of the power consumption.

Further, a single memory system can be realized, and processing can be carried out with everything built-in. As a result, there is a large paradigm shift in the architecture as well.

Further, by making effective use of the memory, processing by only the DRAM provided inside becomes possible, so it becomes possible to sufficiently make most of the large band width between the memory and the graphics drawing system due to the built-in configuration. Further, it becomes possible to install special processing in the DRAM.

Further, display elements at adjacent addresses in the display address space are arranged to be in different DRAM blocks, so effective utilization of the bit lines becomes possible. When frequently accessing relatively fixed display regions like the graphics drawing, the probability of the modules simultaneously performing processing increases and the improvement of the drawing performances becomes possible.

Further, in order to store more texture data, indexes at the index colors and color look-up table values for this purpose are stored inside the built-in DRAM 147, so compression of the texture data becomes possible and efficient utilization of the built-in DRAM becomes possible.

Further, the depth information of the object to be drawn is stored in the built-in DRAM, so it becomes possible to perform hidden plane processing simultaneously and parallel to the drawing.

A graphic is drawn and usually then displayed, but as a unified memory, the DRAM can keep both the texture data and the display data in the same memory system, therefore it also becomes possible to use the drawing data as texture data without directly using the same for the display.

This becomes effective when preparing the required texture data by graphics drawing at the required time. This also becomes an effective function for preventing swelling of the texture data.

Further, by building the DRAM into the chip, a high speed interface portion is completed inside the chip, therefore an I/O buffer of a large additional capacity and driving the inter-chip interconnection capacity become unnecessary, so the consumed power becomes small in comparison with the case where the DRAM is not built-in.

Accordingly, frameworks using various technologies to enable everything to be performed in a single chip are becoming indispensable technical elements for popular digital apparatuses such as future portable data terminals.

Note that, the present invention is not limited to the above embodiment.

Further, in the image processing apparatus 10 serving as the three-dimensional computer graphics system shown in FIG. 2 explained above, a configuration using an SRAM 148 was exemplified, but a configuration not providing with a SRAM 148 can also be employed.

Further, in the image processing apparatus 10 serving as the three-dimensional computer graphics system shown in FIG. 2, the case where geometry processing for producing the polygon rendering data was carried out by the main processor 11 was exemplified, but a configuration performing the same by the rendering circuit 14 can also be employed.

<u>Second Embodiment</u>

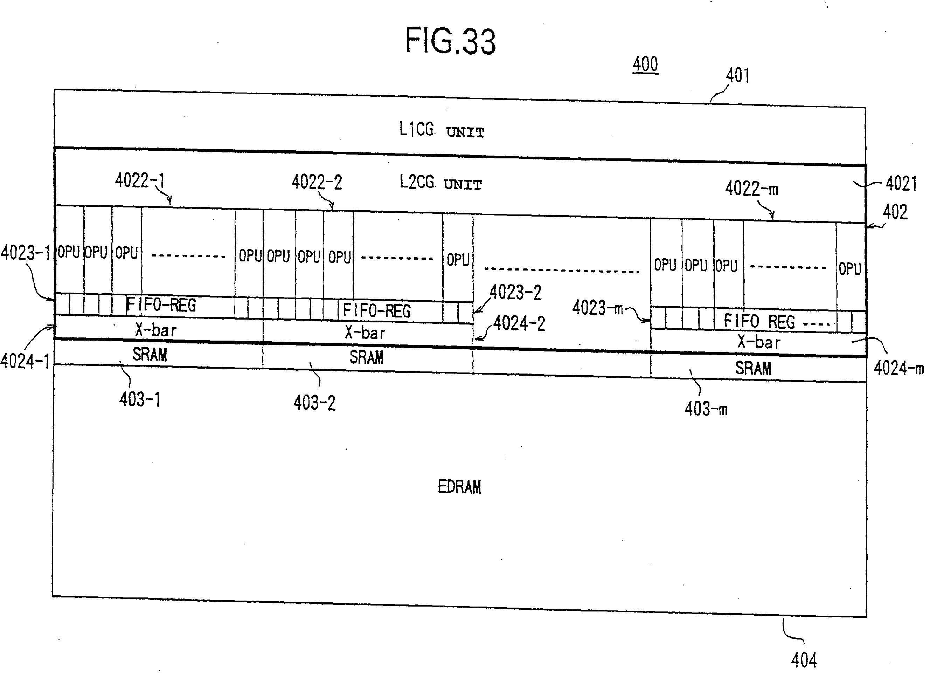

FIG. 33 is a block diagram of the configuration of a second embodiment of an image processing apparatus able to employ an arithmetical device according to the present invention. An image processing apparatus 400 according to the present second embodiment has a graphics processing function and image processing function and is configured as an image processing apparatus for parallel processing by sharing a plurality of processing data.

This image processing apparatus 400 corresponds to the portion of the rendering circuit 14 when compared with the graphics system of FIG. 2.

The present image processing apparatus 400 has, as shown in FIG. 33, a first graphics unit (L1CG) 401 serving as a processing unit, a core portion 402, caches (for example SRAMs) 403-1 to 403-m, and an EDRAM 404.

The first graphics unit 401 performs a rasterization based on the vertex data of a triangle in the case of the graphics processing and supplies the generated pixel data to the core portion 402.

The pixel data generated in the first graphics unit 401 includes various types of data such as the primary color (PC), secondary color (SC), ambient, diffuse coefficient, specular coefficient, shiny coefficient, texture coordinate, light vector, and half vector.

In the case of image processing, the first graphics unit 401 receives as input the commands and data required for generating the source address for reading the image data from the EDRAM 404 and generating the destination address for writing the image processing result supplied from a not illustrated host controller, for example, the main processor 11 of FIG. 2, via for example the main bus 15 of FIG. 2, for example, the width of the searched rectangular region, height data, and block size data, generates the source address and, at the same time, generates the destination address (Xd, Yd) based on the input data, and supplies the same to the core portion 402.

The first graphics unit 401 has functions of the DDA set-up circuit 141 and the triangle DDA circuit 142 of the rendering circuit 14 of FIG. 2 together.

Namely, the first graphics unit 401 has the functions of calculating the DDA parameters such as inclinations of various types of data required for so-called rasterization (z, texture coordinate, color, etc.).

Specifically, before the linear interpolation of the values of the vertexes of a triangle on the physical coordinate system and finding the color and depth information of the pixels inside the triangle, set-up operation for finding the difference from the sides of the triangle in the horizontal direction of the (z, R, G, B, s, t, q, $\alpha$, F) data indicated by the polygon rendering data S11 etc. is carried out. Then, by using the calculated change data, the linearly interpolated (z, R, G, B, s, t, q, $\alpha$, F) data at pixels inside the triangle are calculated.

The first graphics unit 401 calculates (x, y) data and the (z, R, G, B, s, t, q, $\alpha$, F) data at the (x, y) coordinates of each pixel.

The core portion 402 is the operation processing portion using the arithmetical device according to the present invention. Various types of data are supplied to the core 402 by the first graphics unit 401.

The core portion 402 has the following functional units for performing the operation with respect to the stream data.

Namely, the core portion 402 has a second graphics unit (L2CG) 4021 and a plurality of (for example m number of) operation processing unit groups 4022-1 to 4022-m each comprising a plurality of (k, where k is for example 4 or 8) operation processing units (OPU) arranged in parallel.

The core portion 402 handles a variety of algorithms by switching the connection among these functional units in accordance with for example a data flow graph (DFG).

Further, the core portion 402 has a stream register SR having 2k number of FIFO registers (FIFO REG) structures, two of which being provided with respect to one operation processing unit OPU, and has m number of stream register groups 4023-1 to 4023-m arranged corresponding to the operation processing unit groups 4022-1 to 4022-m and cross bar circuits (X-bar) 4024-1 to 4024-m arranged corresponding to the stream register groups 4023-1 to 4023-m.

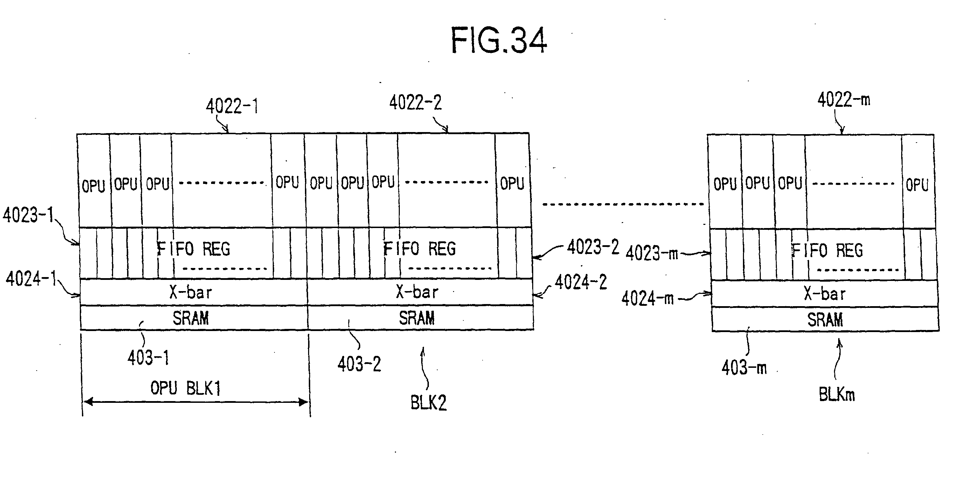

Further, in the core portion 402, as shown in FIG. 34, an OPU block BLK1 is configured including the operation processing unit group 4022-1, stream register group 4023-1, cross bar circuit 4024-1, and a SRAM cache 403-1. Similarly, an OPU block BLK2 is configured including the operation processing unit group 4022-2, stream register group 4023-2, cross bar circuit 4024-2, and a SRAM cache 403-2. Further, an OPU block BLKm is configured including the operation processing unit group 4022-m, stream register group 4023-m, cross bar circuit 4024-m, and a SRAM cache 403-m.

In this way, in the core portion 402, m number of OPU blocks BLK1 to BLKm are arranged in parallel with respect to one second graphics unit 4021.

The second graphics unit 4021 also has the functions of the texture engine circuit 143 of the rendering circuit 14 of FIG. 2.

Namely, the second graphics unit 4021 sequentially calculates the 's/q' and 't/q', calculates the texture coordinate data (u, v), reads the (R, G, B) data from the texture buffer 147a, etc. by the pipeline method.

Specifically, the second graphics unit 4021 performs the operation for dividing the s data by the q data and the operation for dividing the t data by the q data for the (s, t, q) data.

The second graphics unit 4021 multiplies the 's/q' and 't/q' of the division results by the texture sizes USIZE and VSIZE to generate the texture coordinate data (u, v).

Further, the second graphics unit 4021 outputs a read request including the generated texture coordinate data (u, v) to the SRAM caches 403-1 to 403-m or EDRAM 404 via the memory I/F circuit (included in for example the EDRAM 404) and reads the texture data stored in the texture buffer 147a from the SRAM caches 403-1 to 403-m or EDRAM 404 via the memory I/F circuit to obtain the (R, G, B) data stored at the texture address corresponding to the (s, t) data.

The second graphics unit 4021 has functions such as perspective correction, MIPMAP level calculation, etc. in connection with the graphics processing.

The second graphics unit 4021 performs the perspective correction, calculation of the MIPMAP level by LOD (level of detail) calculation, plane selection of the cube map, and calculation of the texture coordinate data (u, v) based on the normalized texel coordinates (s, t, q) supplied from the first graphics unit 401 and/or the normalized texel coordinates (s, t) supplied from the operation processing unit OPU in the operation processing unit groups 4022-1 to 4022-m and outputs the graphics data including for example the texture coordinate data (u, v) and LOD data (lod) to the memory I/F circuit.

The operation processing units OPU configuring the operation processing unit groups 4022-1 to 4022-m are the functional units for performing the stream data processing. Each has a plurality of operation units and selectors inside.

For the operation pipes in the operation processing units OPU configuring the operation processing unit groups 4022-1 to 4022-m, the information concerning the drawn object and the operation results in the operation processing unit groups or in an adjacent operation processing unit OPU are set in the desired stream register SR by for example the cross bar circuits 4024-1 to 4024-m and directly supplied not via the cross bar circuits 4024-1 to 4024-m, but via the stream register groups 4023-1 to 4023-m.

As the data input to the operation processing unit groups 4022-1 to 4022-m, generally, there are for example the information concerning the surface of the object to be drawn (direction of plane, color, refractive index, pattern (texture), etc.), information concerning the light hitting the surface (incident direction, intensity, etc.), and the past operation result (intermediate value of operation).

Each operation processing unit OPU is an operation processing unit having a plurality of operation units and able to reconfigure the operation path by for example control from the outside, establishes electrical connection among the internal operation units so as to realize the desired operation, performs the operation by inputting the input data to the operation units and the data paths of one series of the operation units formed by the electrical connection network (inter-connect), and outputs the operation result.

Namely, each operation processing unit OPU has for example a plurality of reconfigurable data paths and connects the operation units (adders, multipliers, multipliers/adders, etc.) by the electrical connection network to configure an operation circuit comprised of a plurality of operation units.

Further, each operation processing unit OPU can perform operation by continuously inputting data to the operation circuit reconfigured in this way. It is possible to configure an operation circuit by using a connection network able to realize operation expressed by for example a tree-like DFG (data flow graph) efficiently and with a small circuit scale.

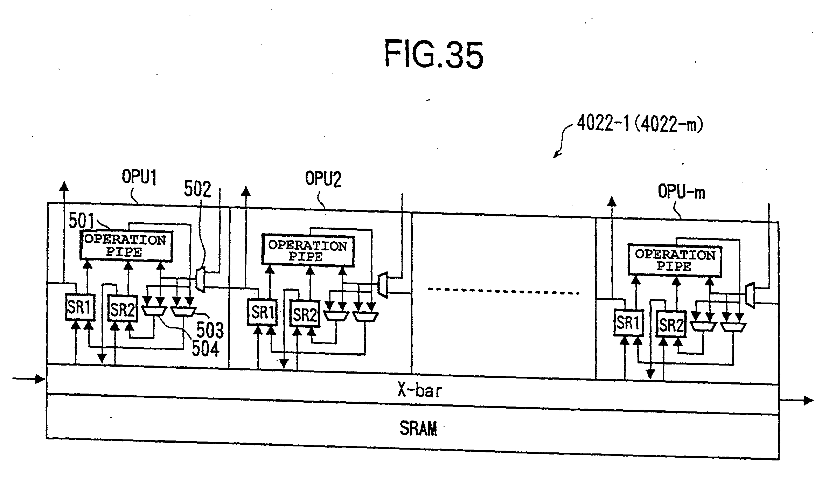

FIG. 35 is a circuit diagram of a concrete example of the configuration of operation processing units OPU of an operation processing unit group 4021-1 (to 4022-m).

Note that, in the example of FIG. 35, two stream registers SR1 and SR2 provided corresponding to the operation processing units OPU are built-in the operation processing unit OPU, and integrally configured.

Each operation processing unit OPU has, as shown in FIG. 35, an operation pipe 501, three 2-input selectors 502 to 504, and stream registers SR1 and SR2.

The 2-input selectors 502 to 504 in the operation processing unit OPU are controlled by the data set in a not illustrated control register in the OPU or in the OPU block. As the value of the control register, a value for realizing a data propagation path that executes the desired operation is set.

The operation pipe 501 has for example a plurality of reconfigurable data paths and connects the operation units (adders, multipliers, multipliers/adders, etc.) by the electrical connection network to configure an operation circuit comprised of a plurality of operation units.

The output of the operation pipe 501 is supplied to first inputs of the selectors 503 and 504. One input of the selector 502 is supplied with the data by the first graphics unit 401 or the second graphics unit 402, while the other input is supplied with the output of the stream register SR1 of the adjacent (in the example of FIG. 35, right neighboring) operation processing unit OPU. The output of the selector 502 is supplied to the other input of the selector 503 and the other input of the selector 504. The output of the selector 503 is supplied to one input port of the stream register SR1, while the output of the selector 504 is supplied to one input port of the stream register SR2.

The data via the cross bar circuits 4024-1 (4024-2 to 4024-m) is supplied to the other input port of the stream register SR1, the held data is supplied from one output port to the operation pipe 501, and the held data is supplied from the other output port to the second graphics unit 4021 and the selector 502 of the adjacent (in the example of FIG. 35, left neighboring) operation processing unit OPU.

The data via the cross bar circuits 4024-1 (4024-2 to 4024-m) is supplied to the other input port of the stream register SR2, the held data is supplied from one output port to the operation pipe 501, and the held data is supplied from the other output port to the cross bar circuits 4024-1 (4024-2 to 4024-m).

The operation processing unit 501 performs for example the following various operation by combining the processing such as subtraction, multiplication, addition, and accumulation (Acc) as fundamental processing.

- $(A\pm B) \times C\pm B$
- $(A\pm B) \times C\pm Acc$
- $(A\pm B)^2 \pm Acc$
- $A\pm B\pm C$
- $A\pm B\pm A_{cc}$
- $A\times B$
- Logic operation (for example AND, OR, NOT)
- Setting constant to the source operand (1 to 2)
- Clamp/saturation
- 1-, 2-bit left shift of source data
- Arithmetic 1-, 2-, 8-bit right shift of operation result

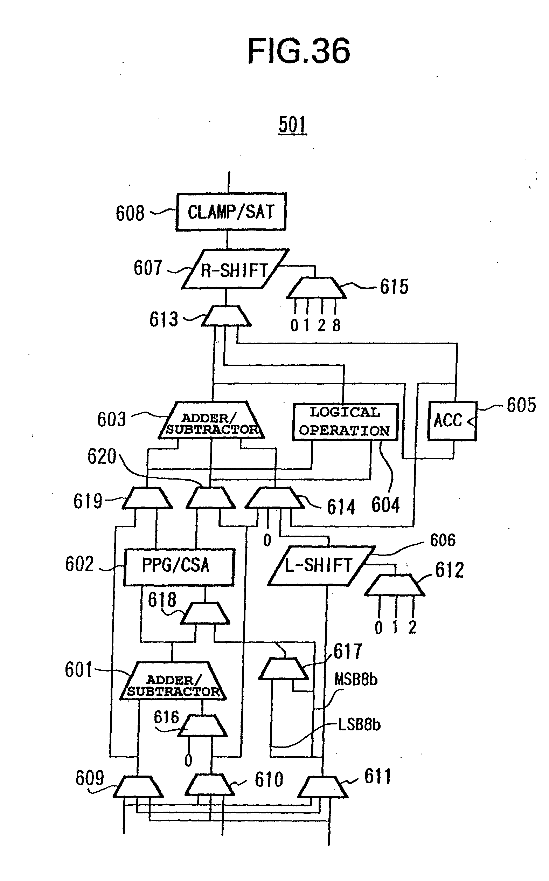

FIG. 36 is a circuit diagram of a concrete example of the configuration of an operation pipe for performing the above various operation processing.

The operation pipe 501 has, as shown in FIG. 36, an adder/subtractor 601, a PPG (partial product generator) /CSA (carry save adder) 602, an adder/subtractor 603, a logic operation unit 604, an accumulator 605, a left shifter (L-shift) 606, a right shifter (R-shift) 607, a clamp/saturation (sat) circuit 608, 3-input selectors 609 to 613, 4-input selectors 614 and 615, and 2-input selectors 616 to 620.

The 3-input selectors 609 to 613, 4-input selectors 614 and 615, and 2-input selectors 616 to 620 inside the operation pipe 501 are controlled by the set data of the not illustrated control register in the operation processing unit OPU or the OPU block.

In this operation pipe 501, the 3-input selectors 609 to 611 are supplied with the output of the selector 502, one output of the stream register SR1, and the output of the stream register SR2, while the output of the clamp/saturation (sat) circuit 608 of the operation result of the operation pipe 501 is supplied to the selectors 503 and 504.

The left shifter (L-shift) 606 performs $2^n$ operation in accordance with the parameters 0, 1, and 2 selected by the selector 612. Further, the right shifter (R-shift) 607 performs $1/2^n$ operation in accordance with the parameters 0, 1, 2, and 8 selected by the selector 615.

The output of the 3-input selector 609 is supplied to the adder/subtractor 601 and one input of the 2-input selector 619. The output of the 3-input selector 610 is supplied to the first inputs of the 2-input selectors 616 and 620 and of the 4-input selector 614. The output of the 3-input selector 611 is supplied to the left shifter (L-shift) 606. Further, 8 bits of the MSB of the selected data are input to one input of the 2-input selector 617, and 8 bits of LSB are input to the other input. The values of the 8 bits output from the selector 617 are input to the 8 bits of the MSB of one input of the selector 618, and the 8 bits of the LSB of the output of the selector 611 are input to the 8 bits of LSB of 'the same input.

The parameter 0 is supplied to the other input of the 2-input selector 616, and the output thereof is supplied to the other input of the adder/subtractor 601. The output of the adder/subtractor 601 is supplied to the other input of the 2-input selector 618 and one input of the PPG/CSA 602, and the output of the selector 618 is supplied to the other input of the PPG/CSA 602. The PPG generates the partial product for the multiplication. By adding this partial product by a CSA configured in a tree form known by Wallace etc., the carry output is output to one output, and a sum output is output to the other output. The multiplication result is obtained by adding these two outputs at the adder/subtractor 603.

One output (carry output) of the PPG/CSA 602 is supplied to the other input of the 2-input selector 619, while the other output is supplied to the other input (sum output) of the 2-input selector 620.

The parameter 0 is supplied to the second input of the 4-input selector 614, the output of the left shifter (L-shift) 606 is supplied to the third input, and the output of the accumulator 605 is supplied to the fourth input.

The output of the 2-input selector 619 is supplied to the first input of the adder/subtractor 603 and one input of the logic operation unit 604, the output of the 2-input selector 620 is supplied to the second input of the adder/subtractor 603 and the other input of the logic operation unit 604, and the output of the 4-input selector 614 is supplied to the third input of the adder/subtractor 603.

The output of the adder/subtractor 603 is supplied to the accumulator 605 and the first input of the 3-input selector 613, the output of the logic operation unit 604 is supplied to the second input of the 3-input selector 613, and the output of the accumulator 605 is supplied to the third input of the selector 613.

Then, the output of the selector 613 is supplied to the right shifter (R-shift) 607, and the output of the right Shifter (R-shift) 607 is supplied to the clamp/saturation (sat) circuit 608.

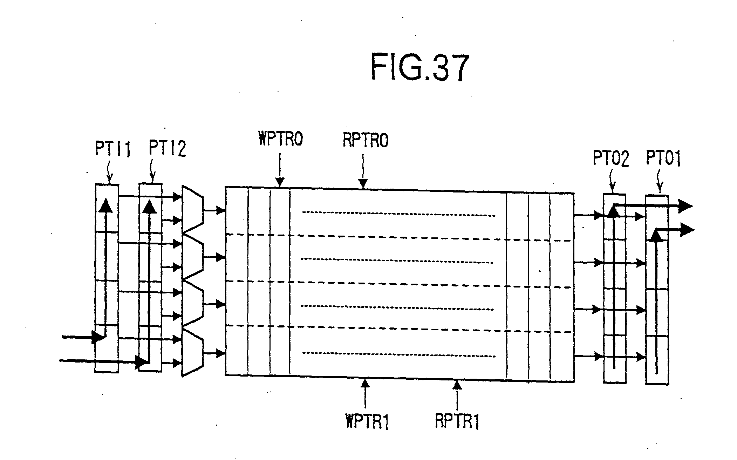

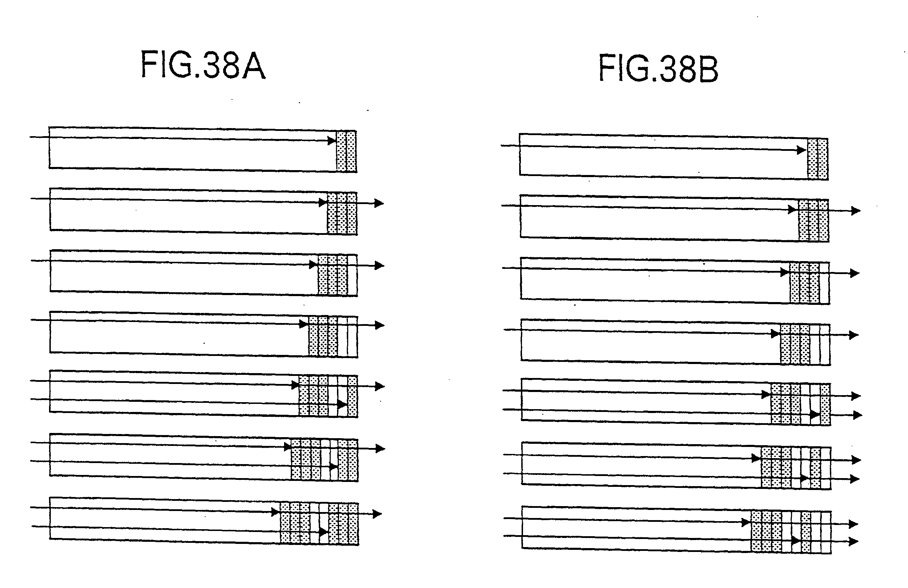

FIG. 37 is a view of a concrete example of the configuration of a stream register SR, while FIGS. 38A and FIG. 38B are views for explaining the processing of the stream register. Note that, FIG. 38A is an example of the case where the operation result is not output, and FIG. 38B is an example of the case where the operation result is output.

The stream register SR is used for both storing the source data and the operation result. By this, effective utilization of the FIFO entry is achieved.

The stream register SR has, as shown in FIG. 37, a first input port PT11 and a second input port PT12 as two input (write) ports on the input side (write side). Similarly, the stream register SR has a first output port PTO1 and a second output port PTO2 as two output (read) ports on the output side (read side).

The first input port PTI1 writes the operation result of the operation pipe 501 via the selectors 503 and 504 or the direct forwarding from the adjacent operation processing unit OPU. The second input port PTI2 writes the data from the cross bar circuit 4024-1 (to 4024-m).

Further, the first output port PTO1 reads the source data to the operation pipe 501 side. The second output port PTO2 reads the operation result (result forwarding) of the processing of the pointer and reads the source data (source forwarding).

As the operation of the memory region proper of the stream register SR, as shown in FIG. 38A and FIG. 38B, it writes the operation result into the empty region from which the source data was read. Further, it acts as the output FIFO doubling as the input FIFO.

In FIG. 38A and FIG. 38B, among the arrows directed at predetermined regions in the FIFO from the left, the arrows drawn at the top sides in the figures indicate the write processing from the first input port PTI1, and the arrows drawn at the bottom sides indicate the write processing from the second input port PTI2.

Further, among the arrows drawn as if being output from predetermined regions in the FIFO to the right side in the figure, the arrows drawn at the top sides indicate the read processing to the first output port PTO1, and the arrows drawn at the bottom sides indicate the read processing from the second output port PTO2.

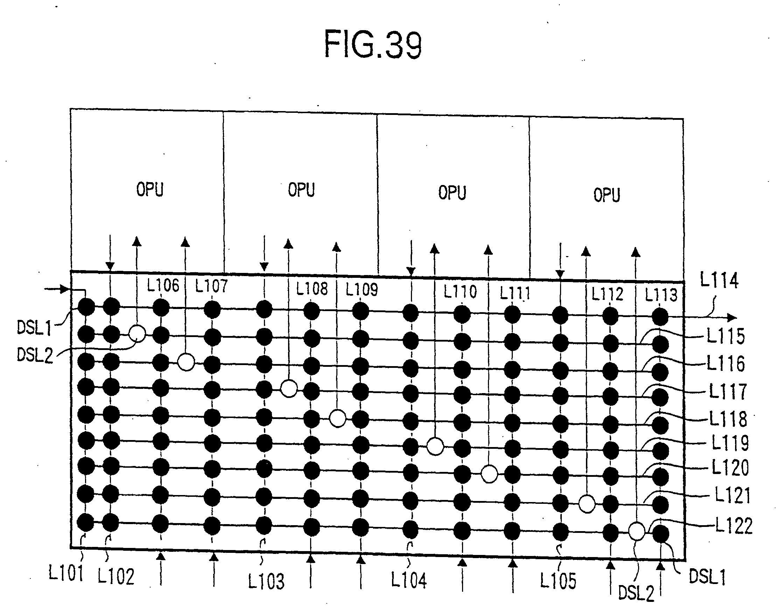

FIG. 39 is a circuit diagram of an example of the configuration of a cross bar circuit.

This example shows a case where four operation processing units OPU are arranged in one OPU block. In FIG. 39 as well, the stream register SR is built in an operation processing unit OPU.

The cross bar circuit realizes this switching of connections so that the core portion 401 can handle a variety of algorithms by changing the connections among the functional units in accordance with the DFG.

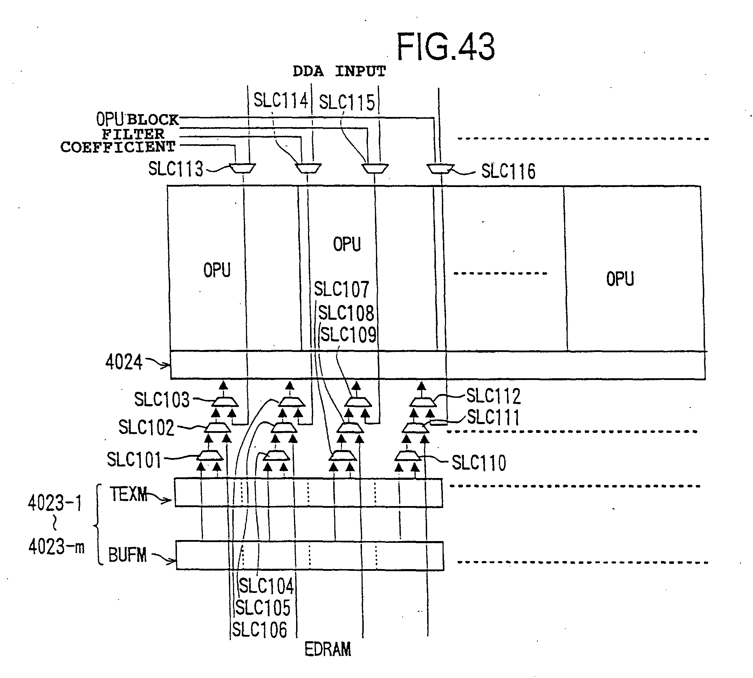

In this cross bar circuit 4024, an input line L101 of the data from the cross bar circuit of the adjacent OPU block, supply lines L102 to L105 of the output data from the OPUs, data supply lines L106 to L113 from the beneath to the cross bar circuit shown in FIG. 43, the data transfer line L114 with the cross bar circuit of the adjacent OPU block, and output lines L115 to L122 with respect to the OPUs are laid. In the figure, the first data selection circuits (indicated by the black circles) DSL1 are arranged at all intersecting points between the lines L101 to L113 arranged in the vertical direction and the lines L114 to L122 laid in the lateral direction.

Further, at the lines L115 to L122, the second data selection circuits (indicated by the white circles) DSL2 for inputting the propagation data to the corresponding operation processing unit OPU are arranged.

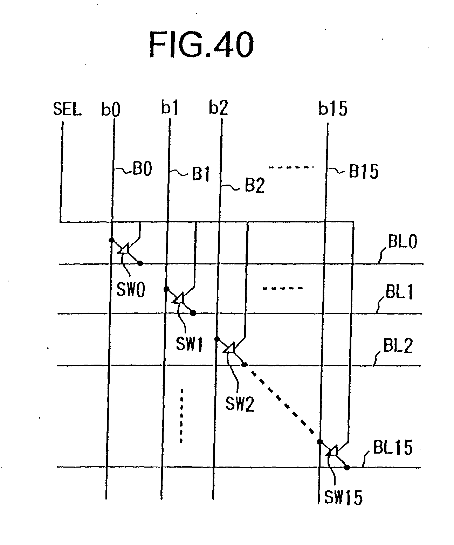

FIG. 40 is a circuit diagram of an example of the configuration of the first data selection circuit DSL1.

In FIG. 40, b0 to b15 indicate the bits of the bundled line inputs. The bit lines B0 to B15 laid in the vertical direction and the lines BL0 to BL15 laid in the lateral direction are connected by switches SW0 to SW15 controlled in conduction in accordance with the selection signal SEL.

In this first data selection circuit DSL1, when the selection signal SEL is active, all switches SW0 to SW15 become conductive in state, and the bit data b0 to b15 are propagated and transferred from the lines B0 to B15 to the lines BL0 to BL15.

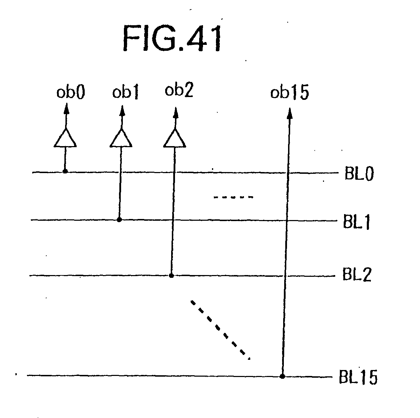

Further, FIG. 41 is a circuit diagram of an example of the configuration of the second data selection circuit DSL2.

The second data selection circuit DSL2 unconditionally inputs the bundled line inputs propagated through the lines BL0 to BL15 as the bit data ob0 to ob15 to the corresponding operation processing unit OPU as shown in FIG. 41.

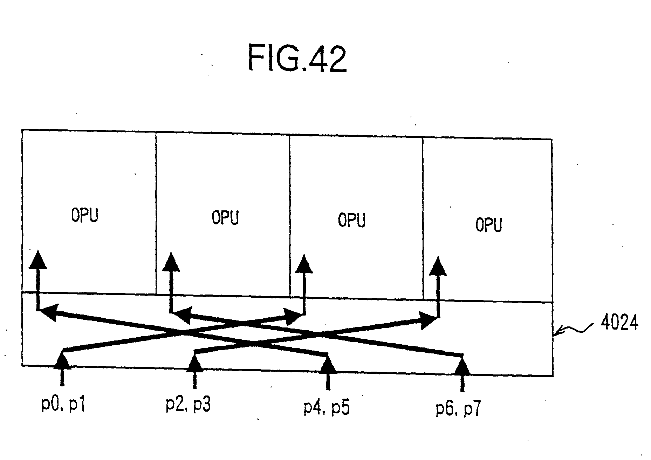

For example, the texture data etc. are not always used for the operation in the sequence of the output from the memory, therefore, as shown in FIG. 42, the cross bar circuits 2024-1 to 2024-m having the above configuration are controlled to propagate the input data p0 to p7 to the input of the suitable operation processing unit OPU.

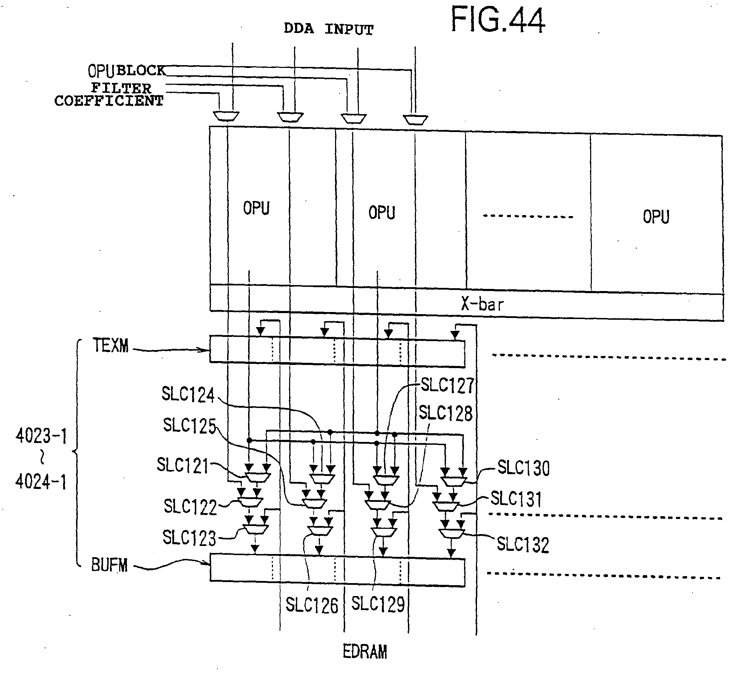

FIG. 43 and FIG. 44 are views for explaining the configuration and functions of caches, wherein FIG. 43 shows a read system, and FIG. 44 shows a write system.

As shown in FIG. 43 and FIG. 44, the caches 4023-1 to 4023-m are formed from a texture memory TEXM corresponding to the SRAM 148 of FIG. 2 and a buffer memory BUFM present in the memory I/F circuit 144 (or control system of the EDRAM) of FIG. 2.

FIG. 43 shows a path through which the color values and the vector values of the DDA input from the cache of the frame buffer of the EDRAM 404 or the first graphics unit 401 stored in the caches 4023-1 to 4023-m, the texture values after bi-linea filtering by another OPU block, etc. are read and input to the cross bar circuit 4024.

The three connected selectors SLC101 to SLC103, SLC104 to SLC106, SLC107 to SLC109, and SLC110 to SLC112 in the figure are provided as part of the memory I/F circuit 144 in FIG. 2 and controlled so as to select the data by the set data of a not illustrated control register present in the same circuit, specifically, select the data of the texture memory TEXM, the data of the buffer memory BUFM, the read data from the EDRAM 404 or the DDA data.

The selected data is supplied to the cross bar circuit 4024.

Further, selectors SLC113 to SLC116 are provided for selecting the data from another OPU block or the filter coefficient and DDA input. Further, the selectors SLC113 to SLC116 are controlled by the set data of the not illustrated control register.

Further, in the write system shown in FIG. 44, the read data from the EDRAM 404 is written into the texture memory TEXM in the case of a texture read operation.

In the case of the frame buffer FB or z-buffer, it is written into the buffer memory BUFM.

Further, when used as a data buffer, it stores the color values and vector values of the DDA inputs from the first graphics unit 401, the texture value after the four-neighbor filtering by the other OPU blocks, etc. in accordance with the role which each OPU block is in charge of.

The three connected selectors SLC121 to SLC123, SLC124 to SLC126, SLC127 to SLC129, and SLC130 to SLC132 in the figure are provided as part of the memory I/F circuit 144 in FIG. 2 and controlled by the set data of the not illustrated control register present in the same circuit, and the selected data is supplied to the buffer memory BUFM.

At the time of for example graphics processing, the core portion 402 having the above configuration performs operation like for example a pixel shader to find color data (FR1, FG1, FB1) and a blended value (FA1) based on the operation result data in the operation processing unit OPU which was set in the desired stream register SR via the cross bar circuit 4024 and directly input from the stream register SR and the primary color (PC), secondary color (SC), and Fog coefficient (F) set in the desired stream register SR by the first graphics unit 401 and directly input from the stream register SR.

The data (FR1, FG1, FB1, FA1) is transferred to for example write units WU separately provided in the second graphics unit 4021.

Further, at the time of graphics processing, the core portion 402 performs for example the following processing.

For example, it calculates the (u, v) address for the texture access based on the values of (st1, t1, lod1) and (s2, t2, lod2) directly supplied from the second graphics unit 4021, calculates the (u, v) coordinates of the four neighbor pixels for four-neighbor filtering based on the address data (ui, vi, lodi), that is, (u0, v0), (u1, v1), (u2, v2), and (u3, v3), and reads the desired texel data through for example the caches.

Further, the core portion 402 calculates the texture filter coefficient K based on the data (uf, vf, lodf) for generating the coefficient.

Then, each operation processing unit OPU finds the color data (TR, TG, TB) and blended value (TA).

On the other hand, the core portion 402 performs for example the following processing at the time of image processing.

For example, it reads the image data stored in the EDRAM 404 based on the source address generated at the first graphics unit 401 via for example the cache TEXM and/or read/write cache BUFM, performs predetermined operation processing in the operation processing units OPU on the read data, and transfers the operation result to for example the write units WU.

In the case of graphics processing, the write units WU perform the operation required for writing pixels in the graphics processing such as $\alpha$ blending, various tests, and logical operation based on the source data, specifically the color data (RGB), blended value data (A), and the depth data (Z) and the destination color data (RGB), blended value data (A), and depth data (Z) from the caches, and writes back the operation result to the caches.

Further, the write units WU store the data of the operation result from the operation processing units OPU into the EDRAM 404 via the caches at for example the directly input destination address in the case of image processing.

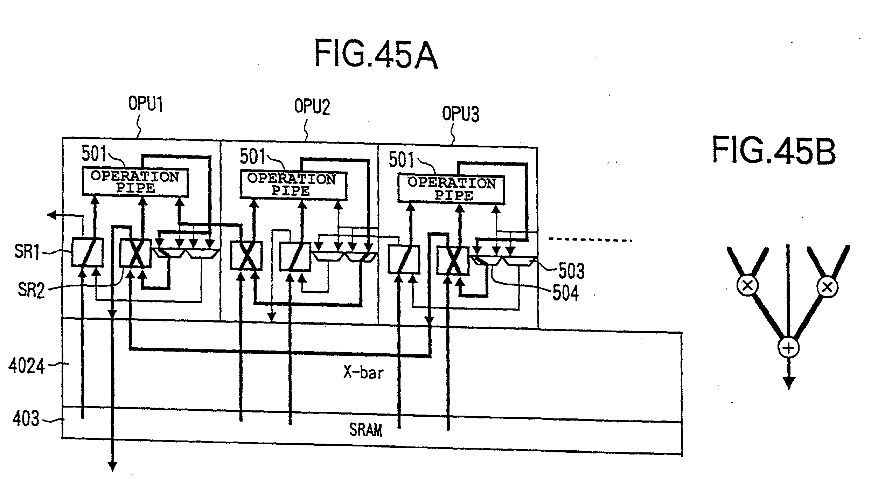

Below, an explanation will be given of the dynamically reconfigurable processing, filtering, parallel operation processing, etc. in an OPU block in the core portion 401 serving as the operation processing portion characterizing the second embodiment with reference to FIG. 45A and FIG. 45B to FIG. 56.

First, an explanation will be given of the reconfigurable processing with reference to FIG. 45A and FIG. 45B.

In this example, the operation processing units OPU2 and OPU3 of FIG. 45A perform operation corresponding to the top two operations (here, multiplication) of the tree of FIG. 45B.

In this example, the switches in the cross bar circuit 4024 and the selectors in the operation processing units OPU are switched to establish the data transfer paths as shown in FIG. 45A.

In this case, two sets of data corresponding to the input from the SRAM cache 403 to the tree are read and supplied via the cross bar circuit 4024 and further through the stream registers SR1 and SR2 of the operation processing units OPU2 and OPU3 to the operation pipes 501. The operation pipes 501 of the operation processing units OPU2 and OPU3 multiply the data.

The operation result of the operation processing unit OPU2 is input via the selector 503 and via the stream register SR1 to the operation processing unit OPU1. The operation processing unit OPU1 selects this input data at the selector 502 and supplies it to the operation pipe 501.

The operation result of the operation processing unit OPU3 is input to the operation processing unit OPU1 via the selector 504, via the stream register SR2, and further via the cross bar circuit 4024. The operation processing unit OPU1 supplies this input data via the stream register SR2 to the operation pipe 501.

The operation processing unit OPU1 receives as input the data read from the SRAM 403 via the cross bar circuit 4024 and supplies it via the stream register SR1 to the operation pipe 501. Then, the operation pipe 501 of the operation processing unit OPU1 performs operation corresponding to the operation of the lower stage of the tree (here, addition). Namely, it adds the multiplication results of the operation processing units OPU2 and OPU3 and the data read from the EDRAM 404 and stores the result in the EDRAM 404 via the selector 504 and further the stream register SR2 without going through the cross bar circuit 4024.

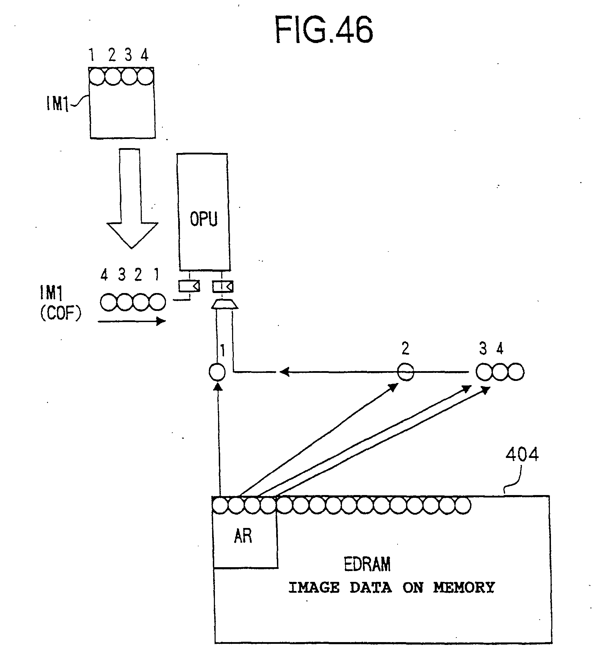

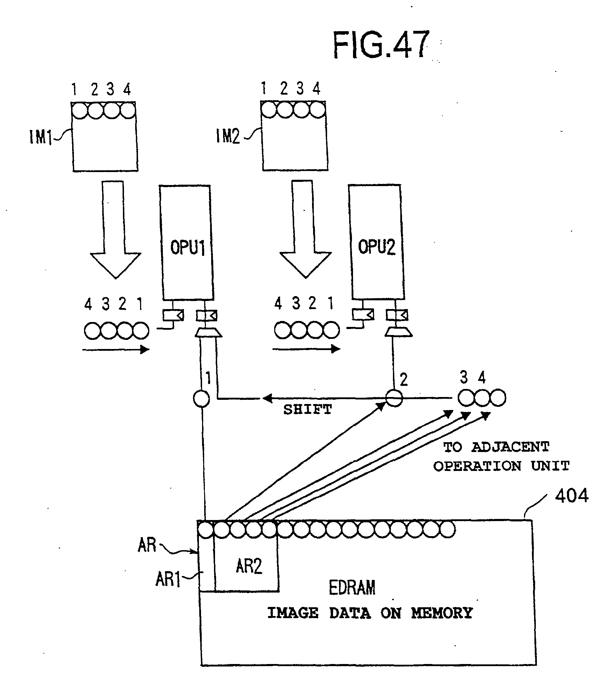

Further, FIG. 46 and FIG. 47 are explanatory views of the convolution filtering.

The convolution filtering basically supplies the filter coefficients COF of elements of the filter coefficient matrix IM1 to an operation processing unit as shown in FIG. 46.

Further, it reads the pixel value (indicated by 1 in the figure) from the image region AR (immediately below memory) to be performed operation of the EDRAM 404. It then reads the subsequent pixel values indicated by 2 to 4, shifts them in, and supplies them to the operation processing unit OPU. In this case, when one kernel size of data is shifted in, one line's worth of calculation is completed.

FIG. 47 is an example of using two operation processing units OPU1 and OPU2. While basically similar to the case of FIG. 46, the operation processing unit OPU2 performs the calculation at a position shifted by one pixel.

When there are three or more operation processing units OPU, the operation is executed at the positions each shifted by one pixel.

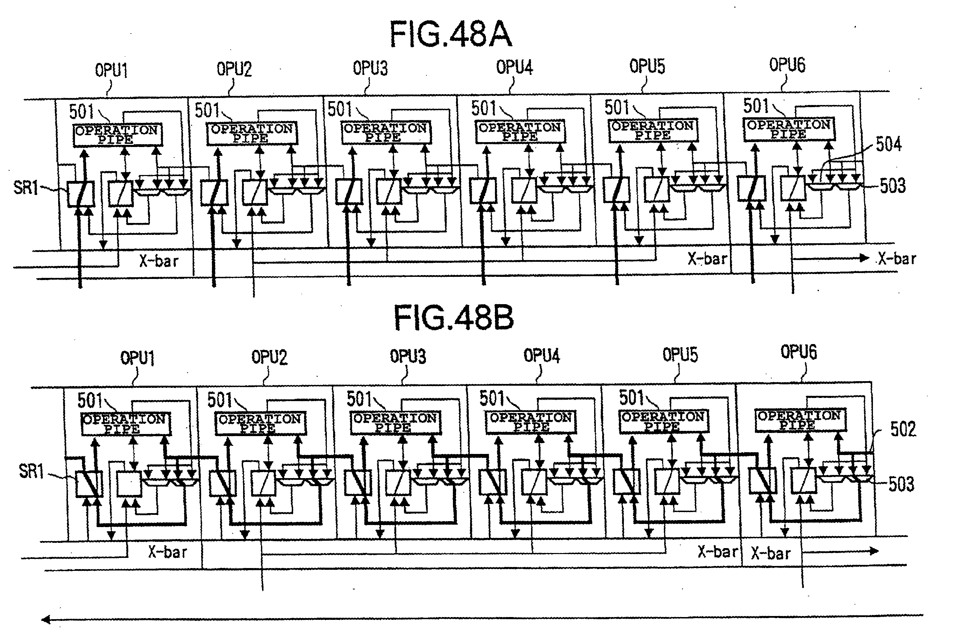

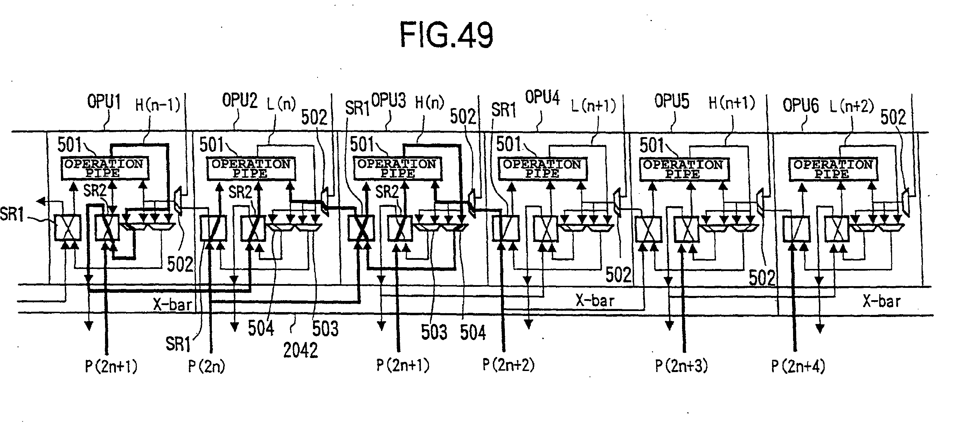

Next, an explanation will be given of an example of the parallel operation corresponding to the convolution filtering with reference to FIG. 48A, FIG. 48B, and FIG. 49. In this example, six operation processing units OPU1 to OPU6 are shown as an example.

In this example as well, the switches in the cross bar circuit 4024 and the selectors in the operation processing units OPU are switched to establish the data transfer paths as shown in FIG. 48A, FIG. 48B, and FIG. 49.

In the case of parallel operation, as shown in FIG. 48A, sets of image data on the memory at positions of the EDRAM 404 (or SRAM caches) directly below the operation processing units OPU1 to OPU6 are read at the same time via the cross bar circuit 4024 (bold arrows in the figure). The operation processing units OPU1 to OPU6 supply the read data to the operation pipes 501 via the stream registers SR1.

Further, the filter coefficient data is read out from the memory and supplied via the cross bar circuit 4024 to the desired operation processing units OPU1 to OPU6. The operation processing units OPU1 to OPU6 supply the coefficient data via the stream registers SR2 to the operation pipes 501.

After the desired operation, as shown in FIG. 48B, the operation processing units OPU1 to OPU6 sequentially carry out source forwarding from the operation processing unit OPU6 side toward OPU1 via the selectors 503, stream registers SR1, and the selectors 502 of the adjacent units and shift the image data in the entire OPU block.

The following image data and filter coefficients are read from the memory and supplied via the cross bar circuit 4024 to the desired operation processing units OPU1 to OPU6. The operation processing units OPU1 to OPU6 supply the coefficients and other data via the stream registers SR2 to the operation pipe 501.

FIG. 49 shows parallel operation processing when performing the following operation:

$$H(n) = (2\times P(2n+1)-(P(2n)+P(2n+2)))/2$$

$$L(n) = (4\times P(2n)+H(n-1)+(H(n)))/4$$

In this case, as shown in FIG. 49, for example the sets of image data P(2n-1), P(2n), P(2n+1), P(2n+2), P (2n+3), P(2n+4) of the EDRAM 404 (or SRAM cache) are read via the cross bar circuit 4024 to the operation processing units OPU1 to OPU6 (bold arrows in the figure). Note, the data P(2n) is supplied to the operation processing units OPU2 and OPU3.

The data P(2n+2) input to the operation processing unit OPU4 is supplied via the stream register SR1 to the adjacent operation processing unit OPU3 and supplied through the selector 502 to the operation pipe 501. Further, the data P(2n) input to the operation processing unit OPU3 is supplied via the stream register SR1 to the operation pie 501, while the data P(2n+1) is supplied via the stream register SR2 to the operation pipe 501.

The operation pipe 501 of the operation processing unit OPU3 performs first operation for doubling the data P(2n+1) and second operation for adding the data P(2n) and P(2n+2) and performs third operation for subtracting the second operation result P(2n)+P(2n+2) from the first operation result 2 x P(2n+1). Then, as the fourth operation, it shifts the data by one bit by the right shifter and halves the third operation result to find H(n).

The operation result of the operation processing unit OPU3 is input via the selector 503 and via the stream register SR1 to the operation processing unit OPU2. The operation processing unit OPU2 selects this input data at the selector 502 and supplies it to the operation pipe 501. Also, the data P(2n) input to the operation processing unit OPU2 is supplied via the stream register SR1 to the operation pipe 501. Further, H(n-1) of the operation result of the operation processing unit OPU1 is input via the cross bar circuit 2042 to the operation processing unit OPU2 and supplied via the stream register SR2 to the operation pipe 501.

The operation pipe 501 of the operation processing unit OPU2 performs first operation for multiplying the data P(2n) by 4 and second operation for adding the data H(n-1) and H(n) and performs third operation for adding the first operation result 4 x P(2n) and the second operation result (H(n-1)+H(n)). Then, as the fourth operation, it shifts the data by 2 bits at the right shifter and divides the third operation result by 4 to find L(n).

Next, an explanation will be given of an example of the case of graphics processing by fixing the operation objects which the operation processing unit groups take charge of.

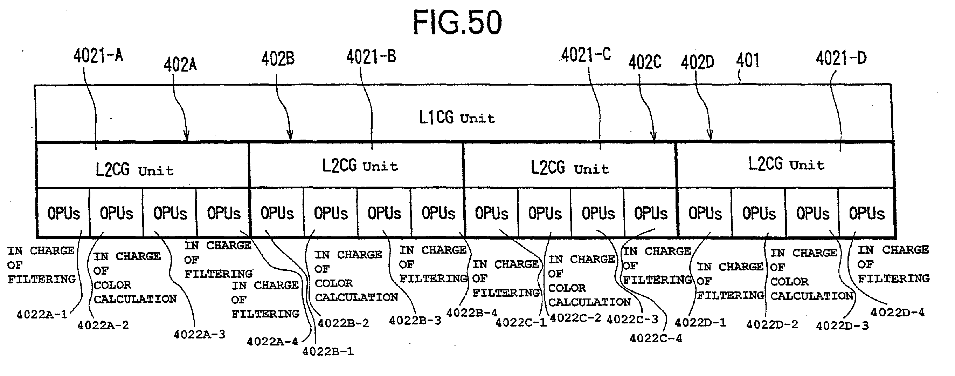

FIG. 50 is a view of an example of the configuration of a core portion when performing graphics processing by fixing the processing objects which the operation processing unit groups take charge of.

In this example, four core portions 402A to 402D are arranged in parallel with respect to one first graphics unit 401. Each of the core portions 402A to 402D constitutes one pixel pipe.

The core portions 402A to 402D are respectively comprised of the operation processing blocks (OPUs) 4022A-1 to 4022A-4, 4022B-1 to 4022B-4, 4022C-1 to 4022C-4, and 4022D-1 to 4022D-4 including pluralities of OPU blocks and fixed in which operation they take charge of arranged in parallel with respect to the second graphics units 4021-A to 4021-D.

Note that, below, an explanation will be given by taking the core portion 402A as an example.

In the example of FIG. 50, among the four operation processing blocks 4022A-1 to 4022A-4 arranged in the core portion 402A, the two operation processing blocks 4022A-2 and 4022A-3 are fixed to take charge of the color calculation, and the two operation processing blocks 4022A-1 and 4022A-4 are fixed to take charge of the filtering.

By fixing the charge in this way, the data transfer path in the second graphics unit 4021 can be fixed, and the circuit size can be kept to the minimum. Namely, by fixing the charge, it is not necessary to distribute various types of graphics data to the OPU blocks at specific times, so the circuit can be simplified.

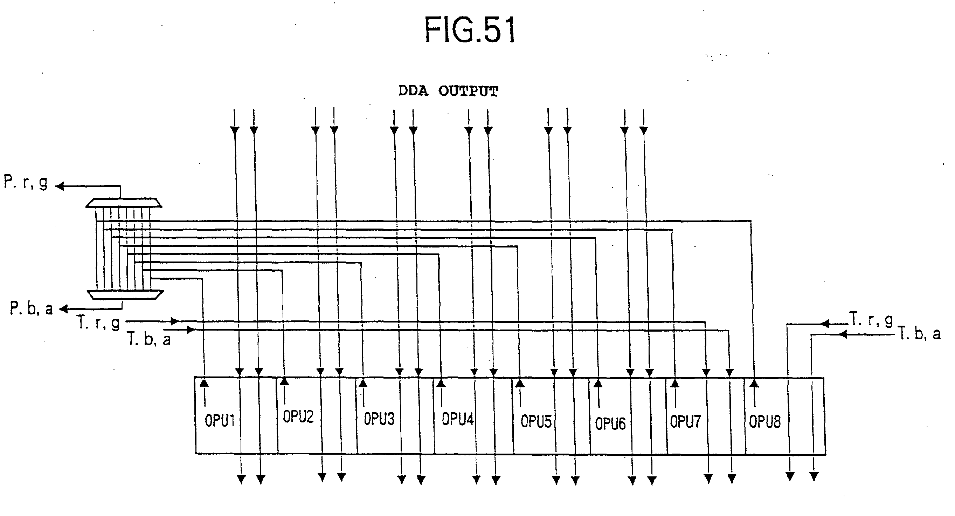

Below, an explanation will be given of an example of the processing of the operation processing blocks 4022A-2 and 4022A-3 in charge of the color calculation and the operation processing blocks 4022A-1 and 4022A-4 in charge of the filtering with reference to FIG. 51 to FIG. 56. Note that, in the following explanation, it is assumed that each operation processing block is comprised of eight operation processing units OPU1 to OPU8.

First, an explanation will be given of the operation processing block 4022A-2 (4022A-3) in charge of the color calculation with reference to FIG. 51 to FIG. 54.

The operation processing block 4022A-2 (4022A-3) in charge of the color calculation, conceptually, as shown in FIG. 51, supplies the texture data T, r, g, T, b, a to the predetermined operation processing units, for example OPU7 and OPU8, and supplies as the DDA input various types of data such as the primary color (PC), secondary color (SC), ambient, diffuse coefficient, specular coefficient, shiny coefficient, texture coordinate, write vector, and half vector to the desired operation processing units OPU1 to OPU6. Further, it transfers the color calculation results P.r,g and P.b, a to the write units WU.

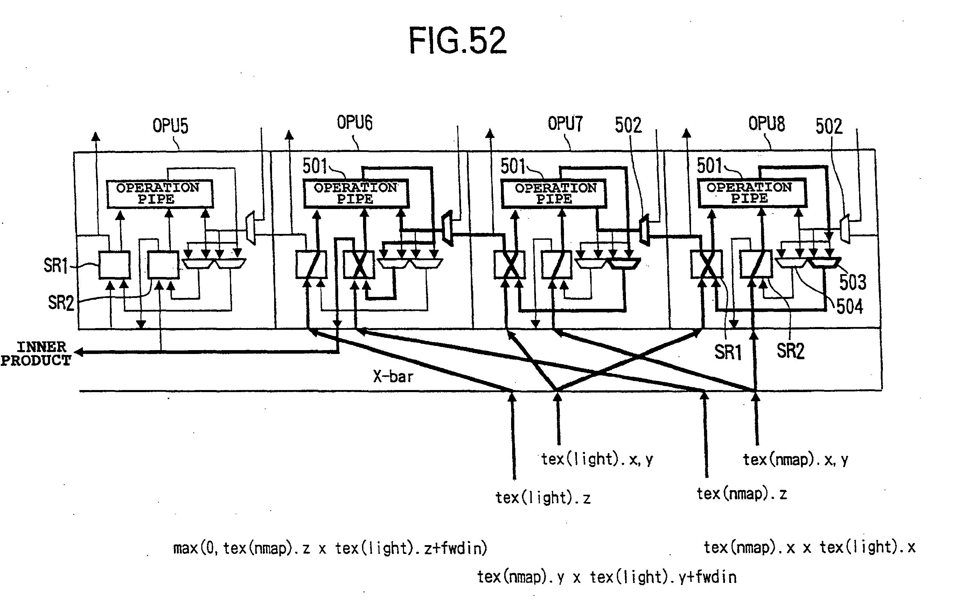

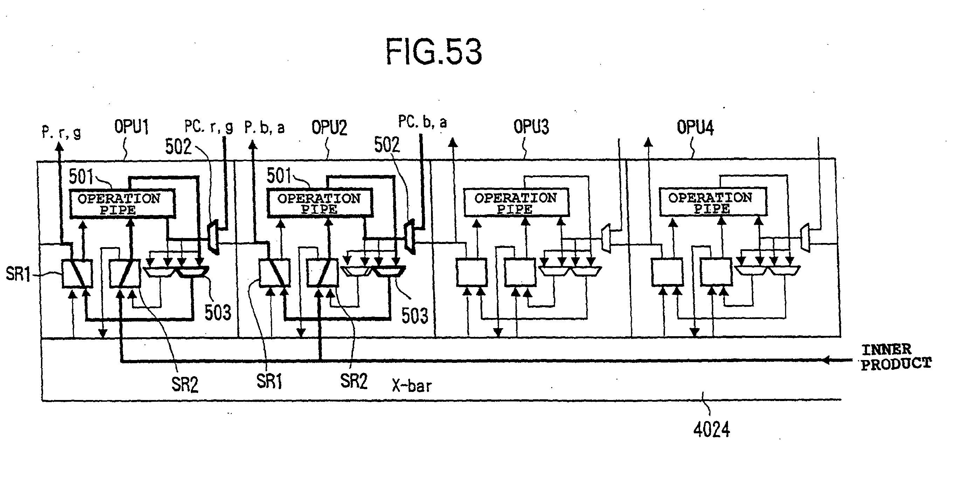

FIG. 52 and FIG. 53 are views for explaining a concrete example of the processing in a color calculation operation processing block.

A color calculation operation processing block finds the inner product of the write vector obtained from the light map and the normal vector obtained from the normal map (FIG. 52), multiplies the found inner product by the primary color, and thereby finds the colors P.r,g and P.b,a of the pixels (FIG. 53).

In this example as well, the switches in the cross bar circuit 4024 and the selectors in the operation processing units OPU are switched to establish the data transfer paths as shown in FIG. 52 and FIG. 53.

Specifically, as shown in FIG. 52, the normal map data tex(nmap).x is input via the cross bar circuit 2024 to the operation processing unit OPU8, the normal map data tex(nmap).y is input via the cross bar circuit 2024 to the operation processing unit OPU7, and the normal map data tex(nmap).z is input via the cross bar circuit 2024 to the operation processing unit OPU6.

Further, the light data tex(light).x is input via the cross bar circuit 2024 to the operation processing unit OPUS, the light data tex(light).y is input via the cross bar circuit 2024 to the operation processing unit OPU7, and the light data tex(light).z is input via the cross bar circuit 2024 to the operation processing unit OPU6.

The normal map data tex(nmap).x input to the operation processing unit OPU8 is supplied via the stream register SR2 to the operation pipe 501, and the light data tex(light).x is supplied via the stream register SR1 to the operation pipe 501.

The operation pipe 501 of the operation processing unit OPU8 multiplies the normal map data tex(nmap).x and the light data tex(light).x. The operation result [tex(nmap.x × tex(light).x) of the operation processing unit OPU8 is input via the selector 503 and via the stream register SR1 to the operation processing unit OPU7. The operation processing unit OPU7 selects this input data at the selector 502 and supplies it to the operation pipe 501. Further, the normal map data tex(nmap).y input to the operation processing unit OPU7 is supplied via the stream register SR2 to the operation pipe 501, and the light data tex(light).y is supplied via the stream register SR1 to the operation pipe 501.

The operation pipe 501 of the operation processing unit OPU7 performs first operation for multiplying the normal map data tex(nmap).y and the light data tex (light).y and second operation for adding the first operation result [tex(nmap).y × tex(light).y] and the forwarding data [tex(nmap).x × tex(light).x]. The operation result [tex(nmap).x × tex(light).x+tex(nmap).y × tex(light).y] of the operation processing unit OPU7 is input via the selector 503 and via the stream register SR1 to the operation processing unit OPU6. The operation processing unit OPU6 selects this input data at the selector 502 and supplies it to the operation pipe 501. Further, the normal map data tex(nmap).z input to the operation processing unit OPU6 is supplied via the stream register SR2 to the operation pipe 501, and the light data tex(light).z is supplied via the stream register SR1 to the operation pipe 501.

The operation pipe 501 of the operation processing unit OPU6 performs first operation for multiplying the normal map data tex(nmap).z and the light data tex(light).z and second operation for adding the first operation result [tex(nmap).z X tex(light).z] and the forwarding data [tex(nmap).x × tex(light).x+tex(nmap).y × tax(light).y]. The operation result [tex(nmap).x × light data tex(light).y+tex(nmap).z × tex(light).y]z] of the operation processing unit OPU7, that is, the inner product of the light vector and the normal vector, is supplied to the operation processing units OPU1 and OPU2 via the selector 504, via the stream register SR2. and further through the cross bar circuit 4024 as shown in FIG. 53.

Then, the operation processing unit OPU1 supplies the primary color PC.r,g via the selector 502 to the operation pipe 501 and supplies the inner product via the stream register SR2 to the operation pipe 501. Then, the operation pipe 501 multiplies the primary color PC.r,g and the inner product to find the color data P.r,g and transfers it via the selector 503 and the stream register SR1 to the write units WU of the second graphics unit 4021-A.

The operation processing unit OPU2 supplies the primary color PC.b,a via the selector 502 to the operation pipe 501 and supplies the inner product via the stream register SR2 to the operation pipe 501. Then, the operation pipe 501 multiplies the primary color PC.b,a and the inner product to find the color data P.b,a and transfers it via the selector 503 and the stream register SR1 to the write units WU of the second graphics unit 4021-A.

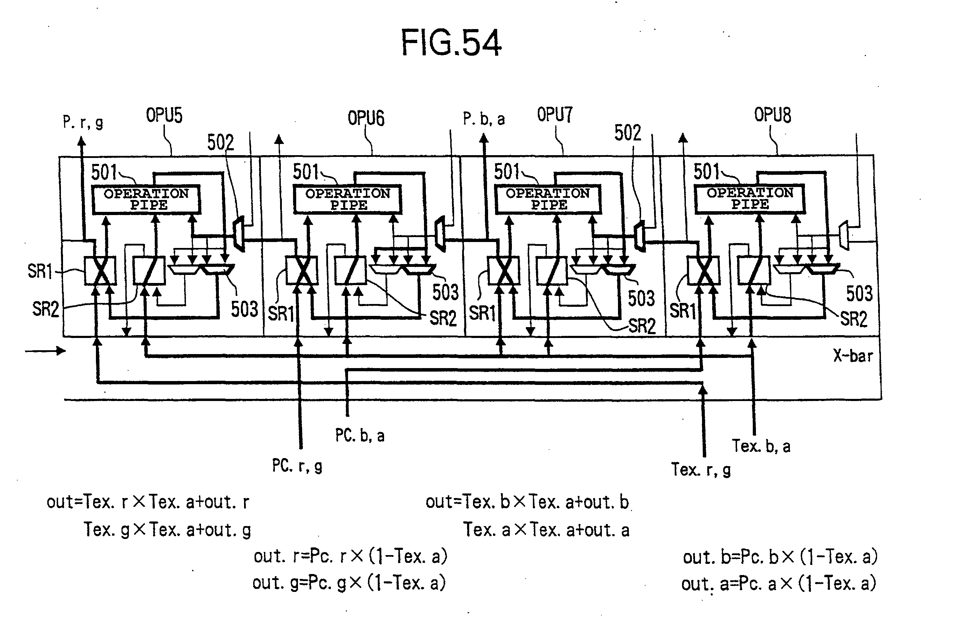

Further, FIG. 54 is a view of an example of the operation when simply blending the primary colors and the texture.

In this example as well, the switches in the cross bar circuit 4024 and the selectors in the operation processing units OPU are switched to establish the data transfer paths as shown in FIG. 54.

In this case, the operation processing units OPU5 to OPU8 perform the calculation. The texture data Tex.b, a is commonly supplied to the operation processing units OPU5 to OPU8, the primary color PC.b,a is supplied to the operation processing unit OPU8, the primary color PC.r,g is supplied to the operation processing unit OPU6, and the texture data Tex.r,g is supplied to the operation processing unit OPU5.

The operation results Pc.b × (1-Tex.a) = out.b and Pc.a × (1-Tex.a) = out.a in the operation pipe 501 of the operation processing unit OPU 8 are supplied to the operation processing unit OPU7 as the forwarding data.

The operation pipe 501 of the operation processing unit OPU7 transfers the color data P.b,a after blending, specifically [Tex.b × Tex.a+out.b] and [Tex.a × Tex.a+out.a], to the write units WU of the second graphics unit 4021-A.

Further, the operation results Pc.r × (1-Tex.a) = out.r and Pc.g × (1-Tex.a) = out.g in the operation pipe 501 of the operation processing unit OPU 6 are supplied to the operation processing unit OPU5 as the forwarding data.

The operation pipe 501 of the operation processing unit OPU5 transfers the color data P.r,g after blending, specifically [Tex.r × Tex.a+out.r] and [Tex.g × Tex.a+out.g] to the write units WU of the second graphics unit 4021-A.

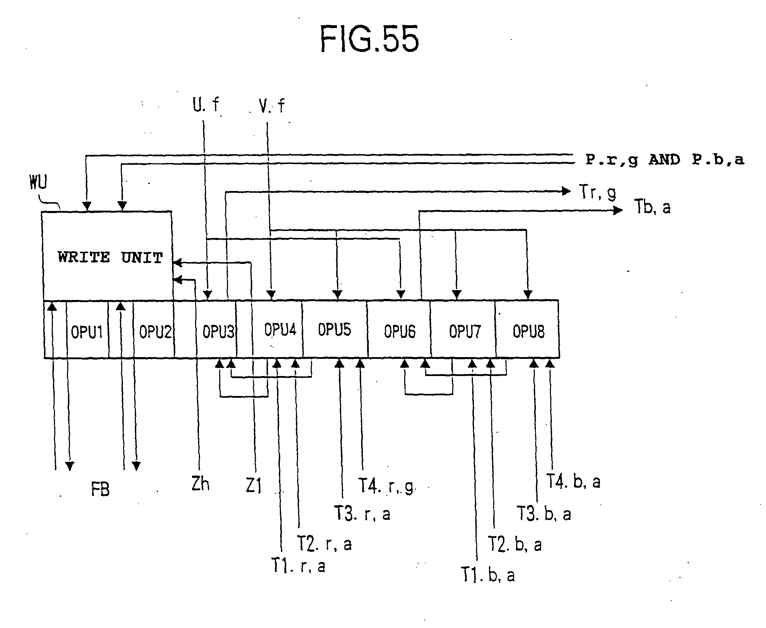

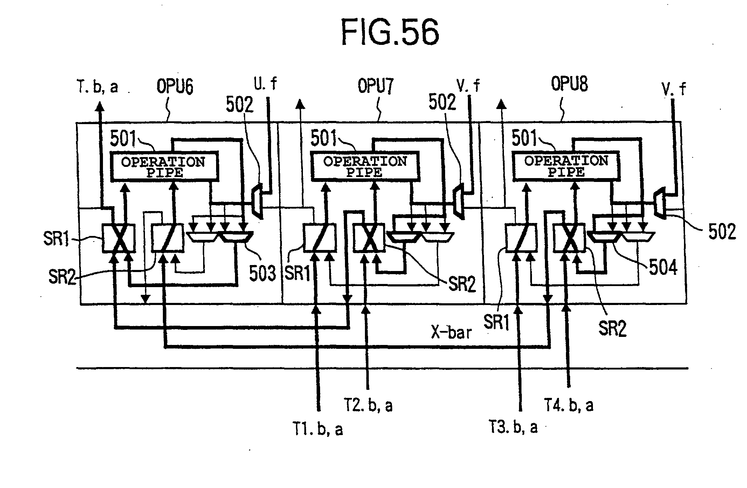

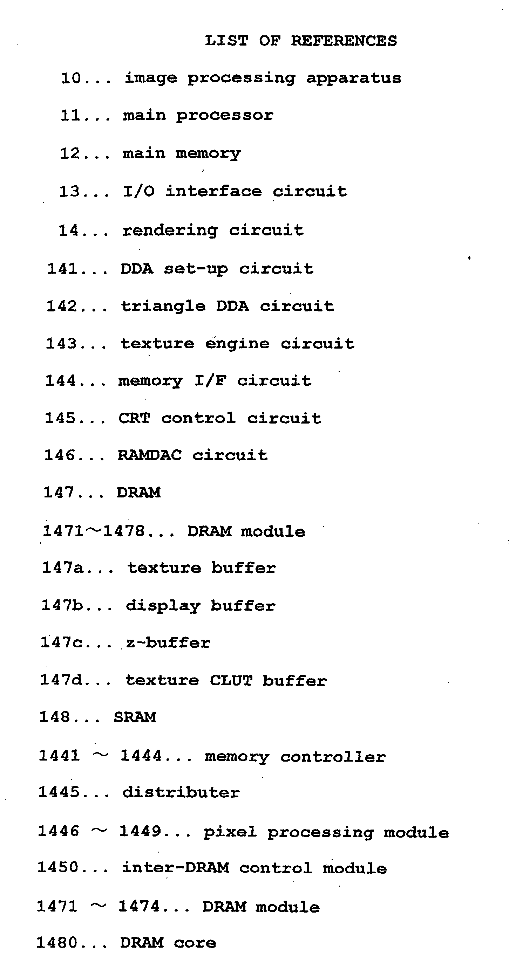

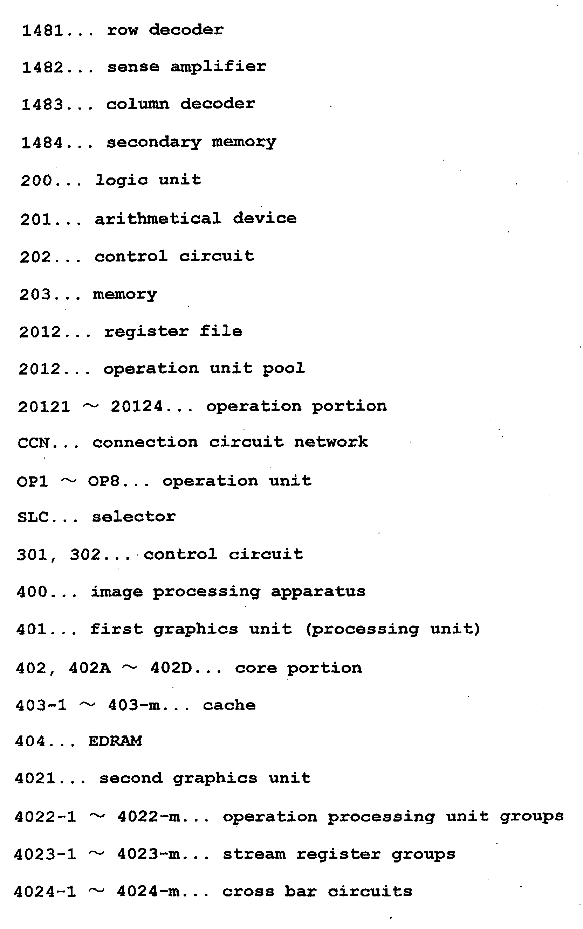

Next, an explanation will be given of the operation processing block 4022A-1 (4022A-4) in charge of the filtering with reference to FIG. 55 and FIG. 56.

The operation processing block 4022A-1 (4022A-4) in charge of the color calculation, as shown in FIG. 55, supplies the color calculation data P.r,g and P.b,a to the write units WU. Further, the pixel values read from the frame buffer are supplied to the write units WU. In the example of FIG. 55, the operation processing units OPU1 and OPU2 are not used.

The data T3.b,a, T4.b,a and the coefficient Vf are supplied to the operation processing unit OPU8, the data T1.b,a, T2.b,a and the coefficient Uf are supplied to the operation processing unit OPU7, and the operation result of the operation processing unit OPU8 and the operation result of the operation processing unit OPU7 are supplied to the operation processing unit OPU6. The operation processing unit OPU6 calculates the texture data T.b,a based on the coefficient Uf and the operation results of the operation processing units OPU8 and OPU7.

Further, the data T3.r,g, T4.r,g and the coefficient Vf are supplied to the operation processing unit OPU5, the data T1.r,g, T2.r,g and the coefficient Uf are supplied to the operation processing unit OPU4, and the operation result of the operation processing unit OPU5 and the operation result of the operation processing unit OPU4 are supplied to the operation processing unit OPU3. The operation processing unit OPU3 calculates the texture data T.r,g based on the coefficient Uf and the operation results of the operation processing units OPU5 and OPU4.

Further, the write units WU perform the blending of the pixel values read from the frame buffer and the color calculation data P.r,g and P.b,a. Then, based on the color data and blend value data (a) and the depth data (Z), they perform the $\alpha$-blending, Z test, and stencil test and, when the tests are passed, writes the pixel values into the frame buffer.

FIG. 56 is a view for explaining a concrete example of the processing in the filtering operation processing block.

This example shows a case of four-neighbor filtering. Note that, here, an explanation will be given of the processings of the operation processing units OPU6 to OPUS. The processings of the operation processing units OPU3 to OPU5 are carried out similarly to the operation processing units OPU6 to OPU8, so the explanation thereof will be omitted.

In this example as well, the switches in the cross bar circuit 4024 and the selectors in the operation processing units OPU are switched to establish the data transfer paths as shown in FIG. 56.

As explained above, the operation processing unit OPU8 is supplied with the data T3.b,a and T4.b,a via the cross bar circuit 4024 and supplied with the coefficient Vf. The data T3.b,a is supplied via the stream register SR1 to the operation pipe 501, the data T4.b,a is supplied via the stream register SR2 to the operation pipe 501, and the coefficient Vf is supplied via the selector 502 to the operation pipe 501.

The operation pipe 501 of the operation processing unit OPU8 performs first operation for subtracting T4.b, a from the data T3.b,a and second operation for multiplying this subtraction result [T3.b,a-T4.b,a] by the coefficient Vf and further performs third operation for adding T4.b,a to this multiplication result [(T3.b,a-T4.b,a)×Vf]. Then, this operation result [(T3.b,a-T4.b,a)×Vf+T4.b,a] = out2.b,a is supplied via the selector 504 and the stream register SR2 and further via the cross bar circuit 4024 to the operation processing unit OPU6.

The operation processing unit OPU7 is supplied with the data T1.b,a and T2.b,a via the cross bar circuit 4024 and is supplied with the coefficient Vf. The data T1.b,a is supplied via the stream register SR1 to the operation pipe 501, the data T2.b,a is supplied via the stream register SR2 to the operation pipe 501, and the coefficient Vf is supplied via the selector 502 to the operation pipe 501.

The operation pipe 501 of the operation processing unit OPU7 performs the first operation for subtracting T2.b,a from the data T1.b,a and second operation for multiplying this subtraction result [T1.b,a-T2.b,a] by the coefficient Vf and further performs third operation for adding T2.b,a to this multiplication result [(T1.b,a-T2.b,a) ×Vf]. Then, this operation result [(T1.b,a-T2.b,a) ×Vf+T2.b,a] = out1.b,a is supplied via the selector 504 and the stream register SR2 and further via the cross bar circuit 4024 to the operation processing unit OPU6.

The operation processing unit OPU6 is supplied with the operation result out1.b,a via the stream register SR1 to the operation pipe 501, is supplied with the operation result out2.b,a via the stream register SR2 to the operation pipe 501, and is supplied with the coefficient Uf via the selector 501.

The operation pipe 501 of the operation processing unit OPU6 performs first operation for subtracting the out2.b,a from the operation result data out1.b,a and second operation for multiplying this subtraction result [out1.b,a-out2.b,a] by the coefficient Uf and further third operation for adding out2.b,a to this multiplication result [(out1.b,a-out2.b,a)×Uf]. Then, it transfers this operation result [(out1.b,a-out2.b,a)× Uf]+out2.b,a] = T.b,a via the selector 503 and the stream register SR1 to the second graphics unit 4021-A.

As described above, according to the image processing apparatus according to the second embodiment, it is possible to efficiently utilize a large amount of operation units and possible to perform complex processing with a high through-put with a high degree of freedom of the algorithms, high flexibility, and without inviting an increase of the circuit size and increase of costs.

Further, the core portion 402 can execute the algorithms expressed by the data flow graph without branching, while the nodes and edges of the DFG can be regarded as operation units and operation processing units and their connections. Accordingly, the core portion constitutes so-called dynamically reconfigurable hardware for dynamically switching the connections among operation resources in accordance with the DFG to be executed. The functions executed in the operation units and their connections correspond to microprograms of the operation processing units. The DFGs applied to the elements of the stream data are the same, so the band width for issuing commands can be kept low.

Further, in the core portion 402, the control for designation of the operation functions and for switching the connections among the operation units are data driven, so the control can be called dispersed, independent type control.

By employing such dynamic scheduling, at the time of switching of the DFG, overlap of the epilog/prolog is possible and overhead of the switching of the DFG can be reduced.

Further, when the scale of DFG becomes large, it becomes unable to map algorithms at the internal operation resources at one time. In such a case, it is necessary to divide the algorithms among a plurality of sub-DFGs.

As the method of executing the mapping while dividing the DFG into a plurality of sub-DFGs, a multi-path technique of storing the intermediate values between sub-DFGs in the memory can be mentioned. With this method, when the number of paths increases, the memory band width is consumed and a drop in performances is induced.

The core portion transfers the stream data among the operation units and operation processing units via FIFO type stream registers as explained above, therefore, at the time of DFG division, it is possible to transfer the intermediate values via this register file, so the number of times of multi-path problems can be reduced.

The actual division of the DFG is performed statically by the compiler, but the control for execution of the divided DFGs is carried out by hardware, so there is the advantage that the load on the software is light.

INDUSTRIAL APPLICABILITY

The arithmetical device and image processing apparatus according to the present invention can handle various types of operation, can easily handle even methods of operation which had not been envisioned at the point of time of development, and can exhibit a sufficient drawing capability for drawing in real time in three-dimensional graphics, so can be applied to an image processing system having for example a graphics processing function and image processing function and performing parallel processing by sharing a plurality of processing data.

## Claims

1. An arithmetical device having a plurality of operation units, comprising,
   a connection circuit network having a plurality of data paths reconfigurable in accordance with a control signal and connecting the operation units by an electrical connection network to establish electrical connection among a plurality of operation units and configure an operation circuit formed by a plurality of operation units.

2. An arithmetical device as set forth in claim 1, wherein the connection circuit network configures the operation circuit for continuously inputting data upon receipt of a control signal and able to execute operation expressed by a tree-like data flow graph.

**3.** An arithmetical device as set forth in claim 1, wherein the connection circuit network configures the operation circuit so that, when having a selector at desired position on a data bus and there are 2n number of input data buses, n-2 number of operation units select pairs of input data buses and outputs of the previous stage operation units by the selectors for input to an operation unit of their own stages.

**4.** An arithmetical device as set forth in claim 3, wherein the connection circuit network configures the operation circuit so that at least one operation unit other than the n number of operation units selects all of the input data of 2n-n number of input data buses and the output of the former stage and inputs the same to an operation unit of its own stage.

**5.** An arithmetical device as set forth in claim 1, further comprising a control circuit able to change the electrical connection among the operation units upon receipt of a control signal when performing pipeline processing using reconfigurable data buses.

**6.** An arithmetical device as set forth in claim 5, wherein control circuits are provided corresponding to individual operation units and individual connection points of the connection network, each control circuit holding information concerning the operation to be performed next and automatically switching control to one directed to the next operation when detecting an end of one series of operation.

**7.** An arithmetical device as set forth in claim 5, wherein control circuits are provided corresponding to individual connection points of the connection network, each control circuit holding information concerning the connection configuration to be taken next and automatically switching the control of the connection points when detecting the end of one series of data transfers.

**8.** An arithmetical device as set forth in claim 5, wherein control circuits are provided corresponding to individual operation units and individual connection points of the connection network, the control circuits provided corresponding to the operation units holding the information concerning the operation to be performed next and automatically switching the control to one directed to the next operation when detecting the end of one series of operation and

the control circuits provided corresponding to individual connection points of the connection network holding information concerning the connection configuration to be taken next and automatically switching the control of the connection points when detecting the end of one series of data transfers.

**9.** An arithmetical device as set forth in claim 5, wherein:

the control circuit holds two types of information, that is, the control information at present (current control information) and the information concerning the control to be performed next (next control information),
the operation data is sent in synchronization with a control signal able to identify that the operation data is the final data used for the operation, and
the control circuit rewrites the current control information by the next control information when the operation being executed at present is completed when it is identified that the operation data is the final data.

**10.** An arithmetical device as set forth in claim 5, wherein:

the control circuit holds the control information at present (current control information), information for identifying the operation being executed at present (current identification information), information concerning the control to be performed next (next control information), and information for identifying the operation to be executed next (next identification information),
the operation data is sent in synchronization with information able to identify that the related operation data is the final data to be used for operation and a control signal indicating information able to identify whether that data is with respect to one operation processing or with respect to other operation processing, and
the control circuit rewrites the current control information and the current identification information by the next control information and the next identification information when the operation being executed at present is completed when it is identified that the sent data is the final data and for the operation indicated by the current identification information.

**11.** An arithmetical device as set forth in claim 1, wherein the data to be input is either of information concerning at least the surface of the object to be drawn, information concerning light hitting the surface, and the past operation result.

**12.** An arithmetical device as set forth in claim 5, wherein the data to be input is either of information concerning at least the surface of the object to be drawn, information concerning light hitting the surface, and the past operation result.

**13.** An arithmetical device, comprising:

register files and
an operation unit pool,
the operation unit pool having at least one operation portion for transferring data with a register file by a data bus,
the operation portion including a plurality of operation units and a connection circuit network having a plurality of data paths reconfigurable in accordance with a control signal and connecting the operation units by an electrical connection network to establish electrical connection among a plurality of operation units and configure an operation circuit formed by a plurality of operation units.

**14.** An arithmetical device as set forth in claim 13, wherein the connection circuit network configures the operation circuit for continuously inputting data upon receipt of a control signal and able to execute operation expressed by a tree-like data flow graph.

**15.** An arithmetical device as set forth in claim 13, wherein the connection circuit network configures a operation circuit so that, when having a selector at desired position on a data bus and there are 2n number of input data buses, n-2 number of operation units select pairs of input data buses and outputs of the previous stage operation units by the selectors for input to an operation unit of their own stages.

**16.** An arithmetical device as set forth in claim 13, wherein the connection circuit network configures the operation circuit so that at least one operation unit other than the n number of operation units selects all of the input data and the output of the former stage and inputs the same to an operation unit of next stage.

**17.** An arithmetical device as set forth in claim 13, further comprising a control circuit able to change the electrical connection among the operation units upon receipt of a control signal when performing pipeline processing using reconfigurable data buses.

**18.** An arithmetical device as set forth in claim 17, wherein control circuits are provided corresponding to individual operation units and individual connection points of the connection network, each control circuit holding information concerning the operation to be performed next and automatically switching control to one directed to the next operation when detecting an end of one series of operation.

**19.** An arithmetical device as set forth in claim 17, wherein control circuits are provided corresponding to individual connection points of the connection network, each control circuit holding information concerning the connection configuration to be taken next and automatically switching the control of the connection points when detecting the end of one series of data transfers.

**20.** An arithmetical device as set forth in claim 17, wherein control circuits are provided corresponding to individual operation units and individual connection points of the connection network, the control circuits provided corresponding to the operation units holding the information concerning the operation to be performed next and automatically switching the control to one directed to the next operation when detecting the end of one series of operation and

the control circuits provided corresponding to individual connection points of the connection network holding information concerning the connection configuration to be taken next and automatically switching the control of the connection points when detecting the end of one series of data transfers.

**21.** An arithmetical device as set forth in claim 17, wherein:

the control circuit holds two types of information, that is, the control information at present (current control information) and the information concerning the control to be performed next (next control information), the operation data is sent in synchronization with a control signal able to identify that the operation data is the final data used for the operation, and
the control circuit rewrites the current control information by the next control information when the operation being executed at present is completed when it is identified that the operation data is the final data.

**22.** An arithmetical device as set forth in claim 17, wherein:

the control circuit holds the control information at present (current control information), information for identifying the operation being executed at present (current identification information), information concerning the control to be performed next (next control information), and information for identifying the operation to be executed next (next identification information),
the operation data is sent in synchronization with information able to identify that the related operation data is the final data to be used for operation and a control signal indicating information able to identify whether that data is with respect to one operation processing or with respect to other operation processing, and
the control circuit rewrites the current control information and the current identification information by the next control information and the next identification information when the operation being executed at present is completed when it is identified that the sent data is the final data and for the operation indicated by the current identification information.

**23.** An arithmetical device as set forth in claim 13, wherein the data to be input is either of information concerning at least the surface of the object to be drawn, information concerning light hitting the surface, and the past operation result.

**24.** An arithmetical device as set forth in claim 17, wherein the data to be input is either of information concerning at least the surface of the object to be drawn, information concerning light hitting the surface, and the past operation result.

**25.** An arithmetical device, comprising:

a plurality of operation processing units and
a cross bar circuit for connecting the plurality of operation processing units to each other in a desired format, wherein
each of the plurality of operation processing units comprises at least:

an operation pipe for performing desired operation on the input data,
a selector for selecting one of operation result data of an adjacent operation processing unit or data supplied from the outside and inputting the same to the operation pipe, and
a stream register for inputting the data supplied through the cross bar circuit to the operation pipe and transferring the operation result of the operation pipe to the adjacent operation processing unit.

**26.** An arithmetical device as set forth in claim 25, wherein the operation processing unit includes a second stream register for inputting data supplied through the cross bar circuit to the operation pipe and transfering the operation result of the operation pipe to the cross bar circuit.

**27.** An arithmetical device as set forth in claim 25, wherein the data input to the operation processing unit is data relating to graphics processing or data relating to image processing.

**28.** An arithmetical device as set forth in claim 26, wherein the data input to the operation processing unit is data relating to graphics processing or data relating to image processing.

**29.** An image processing apparatus, comprising:

a storage circuit for storing at least image data and
a logic circuit for performing predetermined processing on the image data based on the stored data of the storage circuit, wherein
the logic circuit includes an arithmetical device having a plurality of operation units and having a connection circuit network having a plurality of data paths reconfigurable in accordance with a control signal and connecting the operation units by an electrical connection network to establish electrical connection among a plurality of operation units and configure an operation circuit formed by a plurality of operation units.

**30.** An image processing apparatus as set forth in claim 29, wherein the connection circuit network configures the operation circuit for continuously inputting data upon receipt of a control signal and able to execute operation expressed by a tree-like data flow graph.

**31.** An image processing apparatus as set forth in claim 29, wherein the connection circuit network configures the operation circuit so that, when having a selector at desired position on a data bus and there are 2n number of input data buses, n-2 number of operation units select pairs of input data buses and outputs of the previous stage operation processors by the selectors for input to an operation unit of their own stages.

**32.** An image processing apparatus as set forth in claim 31, wherein the connection circuit network configures the operation circuit so that at least one operation unit other than the n number of operation units selects all of the input data and the output of the former stage and inputs the same to an operation unit of its own stage.

**33.** An image processing apparatus as set forth in claim 29, further comprising a control circuit able to change the electrical connection among the operation units upon receipt of a control signal when performing pipeline processing using reconfigurable data buses.

**34.** An image processing apparatus as set forth in claim 33, wherein control circuits are provided corresponding to individual operation units and individual connection points of the connection network, each control circuit holding information concerning the operation to be performed next and automatically switching control to one directed to the next operation when detecting an end of one series of operation.

**35.** An image processing apparatus as set forth in claim 33, wherein control circuits are provided corresponding to individual connection points of the connection network, each control circuit holding information concerning the connection configuration to be taken next and automatically switching the control of the connection points when detecting the end of one series of data transfers.

**36.** An image processing apparatus as set forth in claim 33, wherein control circuits are provided corresponding to individual operation units and individual connection points of the connection network, the control circuits provided corresponding to the operation units holding the information concerning the operation to be performed next and automatically switching the control to one directed to the next operation when detecting the end of one series of operation and

the control circuits provided corresponding to individual connection points of the connection network holding information concerning the connection configuration to be taken next and automatically switching the control of the connection points when detecting the end of one series of data transfers.

**37.** An image processing apparatus as set forth in claim 33, wherein:

the control circuit holds two types of information, that is, the control information at present (current control information) and the information concerning the control to be performed next (next control information),
the operation data is sent in synchronization with a control signal able to identify that the operation data is the final data used for the operation, and
the control circuit rewrites the current control information by the next control information when the operation being executed at present is completed when it is identified that the operation data is the final data.

**38.** An image processing apparatus as set forth in claim 33, wherein:

the control circuit holds the control information at present (current control information), information for identifying the operation being executed at present (current identification information), information concerning the control to be performed next (next control information), and information for identifying the operation to be executed next (next identification information),
the operation data is sent in synchronization with information able to identify that the related operation data is the final data to be used for operation and a control signal indicating information able to identify whether that data is with respect to one operation processing or with respect to other operation processing, and
the control circuit rewrites the current control information and the current identification information by the next control information and the next identification information when the operation being executed at present is completed when it is identified that the sent data is the final data and for the operation indicated by the current identification information.

**39.** An image processing apparatus as set forth in claim 29, wherein the data to be input is either of information concerning at least the surface of the object to be drawn, information concerning light hitting the surface, and the past operation result.

**40.** An image processing apparatus as set forth in claim 33, wherein the data to be input is either of information concerning at least the surface of the object to be drawn, information concerning light hitting the surface, and the past operation result.

**41.** An image processing apparatus, comprising:

a storage circuit for storing at least image data and
a logic circuit for performing predetermined processing on the image data based on the stored data of the storage circuit, wherein
the logic circuit comprises an arithmetical device having register files and an operation unit pool,
the operation unit pool having at least one operation portion for transferring data with a register file by a data bus, the operation portion including a plurality of operation units and a connection circuit network having a plurality of data paths reconfigurable in accordance with a control signal and connecting the operation units by an electrical connection network to establish electrical connection among a plurality of operation units and configure an operation circuit formed by a plurality of operation units.

**42.** An image processing apparatus as set forth in claim 41, wherein the connection circuit network configures the operation circuit for continuously inputting data upon receipt of a control signal and able to execute operation expressed by a tree-like data flow graph.

**43.** An image processing apparatus as set forth in claim 41, wherein the connection circuit network configures the operation circuit so that, when having a selector at desired position on a data bus and there are 2n number of input data buses, n-2 number of operation units select pairs of input data buses and outputs of the previous stage operation units by the selectors for input to an operation unit of their own stages.

**44.** An image processing apparatus as set forth in claim 43, wherein the connection circuit network configures the operation circuit so that at least one operation unit other than the n number of operation units selects all of the input data and the output of the former stage and inputs the same to an operation unit of its own stage.

**45.** An image processing apparatus as set forth in claim 41, further comprising a control circuit able to change the electrical connection among the operation unit upon receipt of a control signal when performing pipeline processing using reconfigurable data buses.

**46.** An image processing apparatus as set forth in claim 45, wherein control circuits are provided corresponding to individual operation units and individual connection points of the connection network, each control circuit holding information concerning the operation to be performed next and automatically switching control to one directed to the next operation when detecting an end of one series of operation.

**47.** An image processing apparatus as set forth in claim 45, wherein control circuits are provided corresponding to individual connection points of the connection network, each control circuit holding information concerning the connection configuration to be taken next and automatically switching the control of the connection points when detecting the end of one series of data transfers.

**48.** An image processing apparatus as set forth in claim 45, wherein control circuits are provided corresponding to individual operation units and individual connection points of the connection network, the control circuits provided corresponding to the operation units holding the information concerning the operation to be performed next and automatically switching the control to one directed to the next operation when detecting the end of one series of operation and

the control circuits provided corresponding to individual connection points of the connection network holding information concerning the connection configuration to be taken next and automatically switching the control of the connection points when detecting the end of one series of data transfers.

**49.** An image processing apparatus as set forth in claim 45, wherein:

the control circuit holds two types of information, that is, the control information at present (current control information) and the information concerning the control to be performed next (next control information),
the operation data is sent in synchronization with a control signal able to identify that the operation data is the final data used for the operation, and
the control circuit rewrites the current control information by the next control information when the operation being executed at present is completed when it is identified that the operation data is the final data.

**50.** An image processing apparatus as set forth in claim 45, wherein:

the control circuit holds the control information at present (current control information), information for identifying the operation being executed at present (current identification information), information concerning the control to be performed next (next control information), and information for identifying the operation to be executed next (next identification information),
the operation data is sent in synchronization with information able to identify that the related operation data is the final data to be used for operation and a control signal indicating information able to identify whether that data is with respect to one operation processing or with respect to other operation processing, and
the control circuit rewrites the current control information and the current identification information by the next control information and the next identification information when the operation being executed at present is completed when it is identified that the sent data is the final data and for the operation indicated by the current identification information.

**51.** An image processing apparatus as set forth in claim 41, wherein the data to be input is either of information concerning at least the surface of the object to be drawn, information concerning light hitting the surface, and the past processing result.

**52.** An image processing apparatus as set forth in claim 45, wherein the data to be input is either of information concerning at least the surface of the object to be drawn, information concerning light hitting the surface, and the past processing result.

**53.** An image processing apparatus having a graphics processing function and an image processing function, comprising:

a memory for storing data concerning an image,
a processing unit for generating graphics pixel data including at least data concerning color at the time of graphics processing and generating a source address for reading at least the data stored in the memory at the time of image processing, and
a core portion for performing predetermined graphics processing or image processing based on the data generated in the processing unit, wherein
the core portion has:

a plurality of operation processing units and
a cross bar circuit for connecting the plurality of operation processing units to each other and the memory and the operation processing units to each other in a desired format,
each of the plurality of operation processing units has at least:

an operation pipe for performing desired operation on input data,
a selector for selecting one of operation result data of an adjacent operation processing unit or data supplied from the outside and inputting the same to the operation pipe, and
a stream register for inputting the data supplied through the cross bar circuit to the operation pipe and transferring the operation result of the operation pipe to the adjacent operation processing unit.

**54.** An image processing apparatus as set forth in claim 53, wherein the operation processing unit includes a second stream register for inputting the data supplied through the cross bar circuit to the operation pipe and transferring the operation result of the operation pipe to the cross bar circuit.

**55.** An image processing apparatus as set forth in claim 53, further comprising a plurality of operation processing blocks including the plurality of operation processing units,

each of the plurality of operation processing blocks is assigned with and fixed to certain operation processing to take charge of.

**56.** An image processing apparatus as set forth in claim 54, further comprising a plurality of operation processing blocks including the plurality of operation processing units,

each of the plurality of operation processing blocks is assigned with and fixed to certain operation processing to take charge of.

FIG.1

GLAPHICS CONTROL DATA
3
I/O INTERFACE CIRCUIT
1
MAIN PROCESSOR
4
2
MAIN MEMORY
5
RENDERING PROCESSOR
5a
FRAME BUFFER MEMORY
5b
6
TEXTURE MEMORY

FIG.2
10
MAIN PROCESSOR
11
I/O INTERFACE CIRCUIT
13
GRAPHICS DATA
MAIN MEMORY
12
15
S11
DDA SET-UP CIRCUIT
141
S141
TRIANGLE DDA CIRCUIT
142
S142
TEXTURE ENGINE CIRCUIT
143
S148
S143
MEMORY I/F CIRCUIT
144
S148
SRAM
148
147
TEXTURE BUFFER
147a
DISPLAY BUFFER
147b
Z-BUFFER
147c
TEXTURE CLUT BUFFER
147d
CRT CONTROL CIRCUIT
145
RAMDAC
146
VIDEO
RENDERING CIRCUIT
14

FIG.3

203
200
201
CONTROL CIRCUIT
ARITHMETICAL DEVICE
MEMORY (DRAM)
INTEGRATED CIRCUIT
202

FIG.4

2011
REGISTER FILE
OPERATION UNIT POOL
CCN
OP1
OP2
OP3
OP4
OP5
OP6
OP7
OP8
20121
20122
20123
20124
BS
2012

FIG.5
TO RF
FROM RF
L42
L41
L32
L31
L22
L21
L12
L11
OP1
OP2
OP3
OP4
OP5
OP6
OP7
STG1
STG2
STG3
STG4
STG5
STG6
STG7
SLC
SLC1
SLC
SLC2

FIG.6

SLC

FIG.7
TO RF
OP7
OP6
OP5
OP4
OP3
OP2
OP1
SLC
L42
L41
L32
L31
L22
L21
L12
L11
FROM RF

FIG.8
TO RF
FROM RF
L42
L41
L32
L31
L22
L21
L12
L11
SLC
SLC
OP1
OP2
OP3
OP4
OP5
OP6
OP7
OP8
STG1
STG2
STG3
STG4
STG5
STG6
STG7
STG8

FIG.9

SLC

FIG.10

SLC

FIG.11
TBL
TBL
TBL
TO RF
OP1
OP2
OP3
OP4
OP5
OP6
OP7
STG1
STG2
STG3
STG4
STG5
STG6
STG7
SLC
SLC2
SLC
SLC1
L42
L41
L32
L31
L22
L21
L12
L11
FROM RF

# FIG.12

A[i]
B[i]
C[i]
D[i]
BRANCH 0
BRANCH 1
BRANCH 2
BRANCH 3
OPERATION 1
OPERATION 2
BRANCH 4
BRANCH 5
OPERATION 3
BRANCH 6
Y[i]

2011
CCN
REGISTER FILE (RF)
A[i] B[i]
C[i] D[i] Y[i]
CONNECTION 0
CONNECTION 1
CONNECTION 4
CONNECTION 2
CONNECTION 3
CONNECTION 6
CONNECTION 5
CONNECTION NETWORK
OP1
OP2
OP3

FIG.13

FIG. 14 A
FIG. 14 B
FIG. 14 C
FIG. 14 D
FIG. 14 E
FIG. 14 F
FIG. 14 G
FIG. 14 H
RR
IC
Add 0/1
mul
WB
TIME

FIG.15

NEXT CONTROL INFORMATION
NIFM
CURRENT CONTROL INFORMATION
CIFM
301
CTL
CONTROL CIRCUIT
OPDT
OPDT
OP
OPERATION RESULT

# FIG.16

CTL
301
CONTROL CIRCUIT
NEXT CONTROL INFORMATION
CURRENT CONTROL INFORMATION
NIFM
CIFM
OPDT
SLC

FIG.17
OPERATION 1
OPERATION 2
OPERATION 3
FINAL OPERATION OF OPERATION 1
FINAL OPERATION OF OPERATION 2
RR
IC
Add 0
add
mul
WB
TIME
OVERLAPPED SECTION OF OPERATION 1 AND OPERATION 2

FIG.18
CTL
302
CONTROL CIRCUIT
NINF
NEXT CONTROL INFORMATION
CURRENT CONTROL INFORMATION
CINF
NDSC
NEXT IDENTIFICATION INFORMATION
CURRENT IDENTIFICATION INFORMATION
CDSC
OPDT
OPDT
OP
OPERATION RESULT

CTL
302
CONTROL CIRCUIT
NINF
NEXT CONTROL INFORMATION
CURRENT CONTROL INFORMATION
CINF
NDSC
NEXT IDENTIFICATION INFORMATION
CURRENT IDENTIFICATION INFORMATION
CDSC
OPDT
SLC

FIG.19

20121A
TO RF
20122A
TO RF
YJ
A-1
A-2
A-3
OP1
OP2
OP3
OP4
OP5
OP6
OP7
Br-1
Br-2
Br-3
Lz
Nz
Ly
Ny
Lx
Nx
Cdr
Kdr
Cdg
Kdg
→ 20123
Cdb
Kdb
→ 20124

FIG.20

OPERATION AT OPERATION PORTION 20121A
OPERATION AT OPERATION PORTION 20122A
OPERATION AT OPERATION PORTION 20123A
OPERATION AT OPERATION PORTION 20124A
r-COMPONENT
g-COMPONENT
b-COMPONENT
L-x
N-x
L-y
N-y
L-z
N-z
A-1 (OP1)
A-2 (OP2)
A-3 (OP3)
Kdr
Cdr
Br-1 (OP3)
Br-3 (OP3)
Yr
Kdg
Cdg
Bg-1 (OP3)
Bg-3 (OP3)
Yg
Kdr
Cdb
Bf-1 (OP1)
Bb-3 (OP3)
Yb


FIG.21

# FIG.22

TO RF
P. b
P. g
P. r
OP8
OP7
OP6
OP5
OP4
OP3
OP2
OP1
ADDITION ADDITION ADDITION
AMb
PC. b
AMg
PC. g
AMr
PC. r
FROM RF

TO RF
N•L
OP1
OP2
OP3
OP4
OP5
OP6
OP7
OP8
MULTI-PLICATION
MULTI-PLICATION
MULTI-PLICATION
ADDITION
ADDITION
N.z
L.z
N.y
L.y
N.x
L.x
FROM RF


FIG.23

1445
DISTRIBUTER
1441
1442
1443
1444
MEMORY CONTROLLER
MEMORY CONTROLLER
MEMORY CONTROLLER
MEMORY CONTROLLER
1471
1472
1473
1474
DRAM MODULE
DRAM MODULE
DRAM MODULE
DRAM MODULE
0
1
2
3
·FRAME BUFFER
·TEXTURE BUFFER
·INDEX COLOR BUFFER
·CLUT BUFFER
DISPLAY REGION

FIG.24

FIG.25

14
1471
DRAM MODULE
DRAM MODULE
1472
T1446b
T1447b
1446
PIXEL PROCESSING MODULE
PIXEL PROCESSING MODULE
1447
T1446a
1450
T1447a
T1450a
T1450b
141, 142
SET-UP + DDA
INTER-DRAM CONTROL MODULE
TEXTURE + CRTC
143, 145
T1450c
T1448a
T1450d
T1449a
1448
PIXEL PROCESSING MODULE
PIXEL PROCESSING MODULE
1449
T1448b
T1449b
1473
DRAM MODULE
DRAM MODULE
1474

FIG.26

1471
ROW
DECODER
DRAM CORE
1480
RA
1481
SENSE AMPLIFIER
1482
COLUMN R/W DECODER
1483
CA
D1484
ADDRESS
SECONDARY MEMORY
(SRAM)
1484
S1446
D1471
1446
PIXEL PROCESSING MODULE

# FIG.27

A
X
Y
D
B
C
A
B
D
C

SIDE MOST EXTENDED IN
Y-DIRECTION IS DEFINED
AS AC SIDE

FIG.28
Y-DIRECTION DDA
Y-DIRECTION CORRECTION
Y-DIRECTION DDA
X-DIRECTION CORRECTION

TRIANGLE CAN BE CLASSIFIED TO THREE FORMS
ONE TOPMOST VERTEX WITH FOLLOWING SIDE AT LEFT
TOP SIDE IS HORIZONTAL (LEFT SIDE IS MADE BASE)
ONE TOPMOST VERTEX WITH FOLLOWING SIDE AT RIGHT
RIGHT SIDE CAN ALSO BE MADE BASE IN THIS CASE

FIG.29

FIG.30

A (xa, ya, za)
B (xb, yb, zb)
C (xc, yc, zc)
A (xa, ya, za)
B (xb, yb, zb)
SET POINT D AT SAME HEIGHT AS VERTEX B ON SIDE AC
D (xc, yc, zc)
C (xc, yc, zc)

FIG.31A

A
B
C

FIG.31B

A
B
C

FIG.32

START
ST1
B POINT SAME HEIGHT AS A POINT?
YES
NO
CORRECT AC AND AB IN Y-DIRECTION (CALCULATE VALUE ON PIXEL LATTICE)
ST2
INTERPOLATE ON AC SIDE/ INTERPOLATE ON AB SIDE
ST3
CORRECT AC IN HORIZONTAL DIRECTION AND INTERPOLATE ON HORIZONTAL LINE IN AC -> AB DIRECTION
ST4
ST5
NO
END POINT OF AB SIDE?
YES
CORRECT BC IN Y-DIRECTION (CALCULATE VALUE ON PIXEL LATTICE)
ST6
INTERPOLATE ON AC SIDE/ INTERPOLATE ON BC SIDE
ST7
CORRECT AC IN HORIZONTAL DIRECTION AND INTERPOLATE ON HORIZONTAL LINE IN AC -> BC DIRECTION
ST8
ST9
NO
END POINT OF BC SIDE?
YES
END

FIG.33
400
401
L1CG. UNIT
L2CG. UNIT
4021
402
4022-1
4022-2
4022-m
OPU
FIFO-REG
FIFO REG
X-bar
SRAM
4023-1
4023-2
4023-m
4024-1
4024-2
4024-m
403-1
403-2
403-m
EDRAM
404

4022-m
OPU
OPU
OPU
OPU
FIFO REG
X-bar
SRAM
BLKm
403-m
4023-2
4023-m
4024-2
4024-m
4022-2
OPU
BLK2
403-2
4022-1
FIFO REG
X-bar
SRAM
403-1
OPU BLK1
4023-1
4024-1

FIG.34

4022-1(4022-m)
OPU1
OPU2
OPU-m
OPERATION PIPE
SR1
SR2
501
502
503
504
X-bar
SRAM

FIG.35

# FIG.36

501
608
CLAMP/SAT
607
R-SHIFT
615
0 1 2 8
613
603
ADDER/
SUBTRACTOR
LOGICAL
OPERATION
ACC
605
620
619
614
604
0
606
602
PPG/CSA
L-SHIFT
612
0 1 2
618
617
601
ADDER/
SUBTRACTOR
MSB8b
616
LSB8b
0
609
610
611

FIG.37
PTO1
PTO2
RPTR0
WPTR0
RPTR1
WPTR1
PTI2
PTI1

FIG.38B

FIG.38A

FIG.39

OPU
OPU
OPU
OPU
L101
L102
L103
L104
L105
L106
L107
L108
L109
L110
L111
L112
L113
L114
L115
L116
L117
L118
L119
L120
L121
L122
DSL1
DSL2
DSL1
DSL2

FIG.40

SEL
b0
b1
b2
b15
B0
B1
B2
B15
BL0
BL1
BL2
BL15
SW0
SW1
SW2
SW15

FIG.41

ob0
ob1
ob2
ob15
BL0
BL1
BL2
BL15

FIG.42

4024
OPU
OPU
OPU
OPU
p0, p1
p2, p3
p4, p5
p6, p7

FIG.43
DDA INPUT
SLC114
SLC115
SLC116
SLC113
OPU BLOCK
FILTER
COEFFICIENT
OPU
OPU
OPU
SLC107
SLC108
SLC109
SLC112
SLC111
SLC110
4024
SLC103
SLC102
SLC101
SLC104
SLC105
SLC106
TEXM
BUFM
EDRAM
4023-1
~
4023-m

FIG.44
DDA INPUT
OPUBLOCK
FILTER
COEFFICIENT
OPU
OPU
OPU
X-bar
TEXM
SLC124
SLC125
SLC121
SLC122
SLC123
SLC127
SLC128
SLC130
SLC131
SLC132
SLC129
SLC126
EDRAM
BUFM
4023-1
~
4024-1

OPU1
OPU2
OPU3
501
OPERATION PIPE
503
504
SR1
SR2
4024
403
X-bar
SRAM

FIG.45A

FIG.45B

FIG.46
1 2 3 4
IM1
4 3 2 1
IM1
(COF)
OPU
1
2
3 4
404
AR
EDRAM
IMAGE DATA ON MEMORY

1 2 3 4
IM1
4 3 2 1
OPU1
1 2 3 4
IM2
4 3 2 1
OPU2
1
2
3 4
SHIFT
TO ADJACENT OPERATION UNIT
404
AR
AR1
AR2
EDRAM
IMAGE DATA ON MEMORY

FIG.47

FIG.48A
OPU1
OPU2
OPU3
OPU4
OPU5
OPU6
501
OPERATION PIPE
504
503
SR1
X-bar
FIG.48B
502

FIG.49
OPU1
OPU2
OPU3
OPU4
OPU5
OPU6
H(n-1)
L(n)
H(n)
L(n+1)
H(n+1)
L(n+2)
OPERATION PIPE
501
502
503
504
2042
SR1
SR2
X-bar
P(2n+1)
P(2n)
P(2n+2)
P(2n+3)
P(2n+4)

FIG.50
401
L1CG Unit
402A
402B
402C
402D
4021-A
4021-B
4021-C
4021-D
L2CG Unit
L2CG Unit
L2CG Unit
L2CG Unit
OPUs
IN CHARGE OF FILTERING
4022A-1
IN CHARGE OF COLOR CALCULATION
4022A-2
IN CHARGE OF FILTERING
4022A-3
IN CHARGE OF FILTERING
4022A-4
IN CHARGE OF FILTERING
4022B-1
IN CHARGE OF COLOR CALCULATION
4022B-2
IN CHARGE OF FILTERING
4022B-3
IN CHARGE OF FILTERING
4022B-4
IN CHARGE OF FILTERING
4022C-1
IN CHARGE OF COLOR CALCULATION
4022C-2
IN CHARGE OF FILTERING
4022C-3
4022C-4
IN CHARGE OF FILTERING
4022D-1
IN CHARGE OF COLOR CALCULATION
4022D-2
4022D-3
IN CHARGE OF FILTERING
4022D-4

DDA OUTPUT
OPU1
OPU2
OPU3
OPU4
OPU5
OPU6
OPU7
OPU8
T. r, g
T. b, a
T. r, g
T. b, a
P. r, g
P. b, a

FIG.51

# FIG.52

OPU5
OPU6
OPU7
OPU8
501
502
503
504
OPERATION PIPE
SR1
SR2
X-bar
INNER PRODUCT
tex(nmap).x, y
tex(nmap).z
tex(light).x, y
tex(light).z
max(0, tex(nmap).z x tex(light).z+fwdin)
tex(nmap).y x tex(light).y+fwdin
tex(nmap).x x tex(light).x

INNER PRODUCT
OPU1
OPU2
OPU3
OPU4
OPERATION PIPE
OPERATION PIPE
OPERATION PIPE
OPERATION PIPE
501
501
502
502
503
503
SR1
SR2
SR1
SR2
P. r, g
PC. r, g
P. b, a
PC. b, a
X-bar
4024

FIG.53

FIG.54

P. r, g
OPU5
502
501
OPERATION PIPE
SR1
SR2
503
OPU6
P. b, a
OPU7
OPU8
X-bar
PC. b, a
PC. r, g
Tex. b, a
Tex. r, g
out=Tex. r×Tex. a+out. r
Tex. g×Tex. a+out. g
out. r=Pc. r×(1-Tex. a)
out. g=Pc. g×(1-Tex. a)
out=Tex. b×Tex. a+out. b
Tex. a×Tex. a+out. a
out. b=Pc. b×(1-Tex. a)
out. a=Pc. a×(1-Tex. a)

FIG.55
P.r,g AND P.b,a
Tr,g
Tb,a
WRITE UNIT
WU
OPU1
OPU2
OPU3
OPU4
OPU5
OPU6
OPU7
OPU8
U.f
V.f
T4. b, a
T3. b, a
T2. b, a
T1. b, a
T4. r, g
T3. r, a
T2. r, a
T1. r, a
Z1
Zh
FB

OPU6
OPU7
OPU8
OPERATION PIPE
501
502
503
504
SR1
SR2
U. f
V. f
T. b, a
T1. b, a
T2. b, a
T3. b, a
T4. b, a
X-bar

FIG.56

## LIST OF REFERENCES

10... image processing apparatus

11... main processor

12... main memory

13... I/O interface circuit

14... rendering circuit

141... DDA set-up circuit

142... triangle DDA circuit

143... texture engine circuit

144... memory I/F circuit

145... CRT control circuit

146... RAMDAC circuit

147... DRAM

1471～1478... DRAM module

147a... texture buffer

147b... display buffer

147c... z-buffer

147d... texture CLUT buffer

148... SRAM

1441 ～ 1444... memory controller

1445... distributer

1446 ～ 1449... pixel processing module

1450... inter-DRAM control module

1471 ～ 1474... DRAM module

1480... DRAM core

1481... row decoder

1482... sense amplifier

1483... column decoder

1484... secondary memory

200... logic unit

201... arithmetical device

202... control circuit

203... memory

2012... register file

2012... operation unit pool

20121 ~ 20124... operation portion

CCN... connection circuit network

OP1 ~ OP8... operation unit

SLC... selector

301, 302... control circuit

400... image processing apparatus

401... first graphics unit (processing unit)

402, 402A ~ 402D... core portion

403-1 ~ 403-m... cache

404... EDRAM

4021... second graphics unit

4022-1 ~ 4022-m... operation processing unit groups

4023-1 ~ 4023-m... stream register groups

4024-1 ~ 4024-m... cross bar circuits

# INTERNATIONAL SEARCH REPORT

International application No.
PCT/JP02/07366

**A. CLASSIFICATION OF SUBJECT MATTER**
Int.Cl[7] G06F7/00, G06F9/38

According to International Patent Classification (IPC) or to both national classification and IPC

**B. FIELDS SEARCHED**

Minimum documentation searched (classification system followed by classification symbols)
Int.Cl[7] G06F7/00, G06F9/38, H03K19/173, G06T7/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br><br>A | JP 11-296345 A (Hitachi, Ltd.),<br>29 October, 1999 (29.10.99),<br>Par. No. [0030]<br>(Family: none) | 1,5-8,13,<br>17-20,25-29,<br>33-36,41,<br>45-48,53-56<br>2-4,9-12,<br>14-16,21-24,<br>30-32,37-40,<br>42-44,49-52 |
| A | JP 9-294069 A (Director General, Agency of Industrial Science and Technology),<br>11 November, 1997 (11.11.97),<br>(Family: none) | 1-56 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 October, 2002 (15.10.02) | 29 October, 2002 (29.10.02) |
| Name and mailing address of the ISA/<br>Japanese Patent Office | Authorized officer |
| Facsimile No. | Telephone No. |

Form PCT/ISA/210 (second sheet) (July 1998)